# EUROPEAN PATENT APPLICATION

(11) **EP 4 266 786 A1**
(43) Date of publication of application: **25.10.2023**
(21) Application number: 21918383.7
(22) Date of filing: 14.01.2021
(51) Int. Cl.: H04W 72/04

(54) **BEAM MANAGEMENT METHOD AND APPARATUS**

(71) Applicant: Huawei Technologies Co., Ltd., Shenzhen, Guangdong 518129 (CN)
(72) Inventor: FAN, Bo, Shenzhen, Guangdong 518129 (CN); ZHANG, Xi, Shenzhen, Guangdong 518129 (CN); CHEN, Lei, Shenzhen, Guangdong 518129 (CN); YUAN, Shitong, Shenzhen, Guangdong 518129 (CN); LIU, Fengwei, Shenzhen, Guangdong 518129 (CN)
(74) Representative: Epping - Hermann - Fischer
(86) International application number: PCT/CN2021/071810
(87) International publication number: WO 2022/151175

(57) **Abstract**

Embodiments of this application provide a beam management method and an apparatus, to efficiently notify a beam, avoid a complex and redundant indication instruction, and reduce signaling overheads. The method provided in embodiments of this application includes: A terminal device receives beam configuration information from a network device, where the beam configuration information includes configuration information of one or more common beams, and the one or more common beams include any one of the following: a separate common beam used for uplink transmission or downlink transmission and a joint common beam used for uplink transmission and downlink transmission. The terminal device receives beam activation information from the network device, where the beam activation information is used to activate some of the one or more common beams. The terminal device receives beam indication information from the network device, where the beam indication information indicates one or more of the some common beams.

## Description

### TECHNICAL FIELD

This application relates to the communication field, and in particular, to a beam management method and an apparatus.

### BACKGROUND

In a 5th generation (5th generation, 5G) mobile communication system, high-frequency communication may be used, that is, a signal on an ultra-high frequency band (> 6 GHz) may be used to transmit data. A main problem in high-frequency communication is that signal energy sharply decreases with a transmission distance, resulting in a short signal transmission distance. To resolve this problem, an analog beam technology is used in high-frequency communication. Weighted processing is performed on an antenna array to concentrate the signal energy in a small angle range, so that a signal (which is referred to as an analog beam, and is briefly referred to as a beam) similar to a light beam is formed, to increase the transmission distance. Both a network device and a terminal device need to perform transmission through a beam.

The network device and the terminal device perform transmission through a beam. When the terminal device moves, beam quality of beams respectively used between the network device and the terminal device for different channels or different reference signals changes, and consequently optimal beams for the different channels or the different reference signals change. When the optimal beams change, the network device respectively updates, by using different signaling, the beams respectively used between the network device and the terminal device for the different channels or the different reference signals, to ensure that the terminal device always uses an optimal beam.

It may be learned from the foregoing solution that for each channel or each reference signal, the network device indicates a beam to the terminal device by using corresponding signaling, resulting in high signaling overheads. Therefore, how to efficiently notify a beam and avoid complex and redundant indication signaling is a main problem to be resolved in this application.

### SUMMARY

This application provides a beam management method and an apparatus, to efficiently notify a beam, avoid a complex and redundant indication instruction, and reduce signaling overheads. According to a first aspect of this application, a beam management method is provided. The method includes:
A terminal device receives beam configuration information from a network device. The beam configuration information includes configuration information of one or more common beams. The one or more common beams include any one of the following: a separate common beam used for uplink transmission or downlink transmission and a joint common beam used for uplink transmission and downlink transmission. Then, the terminal device receives beam activation information from the network device. The beam activation information is used to activate some of the one or more common beams. The terminal device receives beam indication information from the network device. The beam indication information indicates one or more of the some common beams.

In the technical solution, a beam type of the common beam configured by the network device for the terminal device is limited. For the terminal device, the separate common beam and the joint common beam cannot be simultaneously configured. The joint common beam may be used for both uplink transmission and downlink transmission. Therefore, if the network device configures the joint common beam for the terminal device, the separate common beam does not need to be configured for the terminal device, to avoid a waste of beam resources and improve utilization of the beam resources. The separate common beam may be used for uplink transmission or downlink transmission. Therefore, if the network device configures the separate common beam for the terminal device, the j oint common beam does not need to be configured for the terminal device, to avoid a waste of beam resources and improve utilization of the beam resources.

In a possible implementation, the beam configuration information includes a configuration parameter of a first common beam; if the configuration parameter of the first common beam includes a first parameter and does not include a second parameter, the first common beam is an uplink common beam; or if the configuration parameter of the first common beam includes the second parameter and does not include the first parameter, the first common beam is a downlink common beam; or if the configuration parameter of the first common beam includes the first parameter and the second parameter, the first common beam is a joint common beam, where the first parameter includes at least one of the following: a reference signal resource used to determine an uplink transmission beam, spatial relation information, an uplink power control parameter, and a sounding reference signal (sounding reference signal, SRS) resource; and the second parameter includes at least one of the following: quasi co-location (quasi co-location, QCL) information and a bandwidth part (bandwidth part, BWP) parameter.

In this possible implementation, in a process in which the network device manages the common beam of the terminal device, the terminal device may determine a beam type of the one or more common beams based on a configuration parameter included in the beam configuration information. There is no need to indicate the beam type of the one or more common beams by using other information or fields, to reduce network resource overheads, for example, signaling overheads or indication bit overheads.

In another possible implementation, the beam indication information is carried in first downlink control information (downlink control information, DCI), and when a first condition is met, and a hybrid automatic repeat request (hybrid automatic repeat request, HARQ) feedback result corresponding to the first DCI is an acknowledgement (acknowledgement, ACK), it indicates that the one or more common beams indicated by the beam indication information are successfully indicated; and
the first condition includes one or a combination of the following:
the terminal device reports that a common beam function is supported;
the network device configures the common beam function of the terminal device to an enabled state;
the first DCI schedules no physical downlink shared channel (physical downlink shared channel, PDSCH);
the first DCI schedules a PDSCH, and the terminal device performs HARQ feedback by using a dynamic hybrid automatic repeat request-acknowledgement (hybrid automatic repeat request-acknowledgement, HARQ-ACK) codebook; and
one or more common beams indicated by the first DCI are different from a common beam currently used by the terminal device.

In this possible implementation, a possible case in which the one or more common beams indicated by the beam indication information are successfully indicated is shown. Specifically, a HARQ feedback result of the terminal device for the first DCI or a HARQ feedback result of the terminal device for the PDSCH scheduled by the first DCI indicates that the one or more common beams indicated by the beam indication information are successfully indicated.

In another possible implementation, after the one or more common beams indicated by the beam indication information are successfully indicated, the common beam indicated by the first DCI takes effect in a first slot obtained by adding a first moment and a first time offset; the first moment is a moment at which the first DCI is received or a moment at which the terminal device sends the HARQ feedback result corresponding to the first DCI; and the HARQ feedback result corresponding to the first DCI is a HARQ feedback result fed back for the first DCI or a HARQ feedback result fed back for the PDSCH scheduled by the first DCI.

In this possible implementation, after the one or more common beams indicated by the beam indication information are successfully indicated, the network device and the terminal device may determine an effective time of the common beam indicated by the first DCI, and switch to the common beam at the effective time, so that transmission is performed between the network device and the terminal device through the common beam.

In another possible implementation, the beam indication information is carried in first DCI, and when a second condition is met, and a HARQ feedback result corresponding to the first DCI is an acknowledgement (acknowledgement, ACK) or a negative acknowledgement (non-acknowledgement, NACK), it indicates that the one or more common beams indicated by the beam indication information are successfully indicated; and
the second condition includes one or a combination of the following:
the terminal device reports that a common beam function is supported;
the network device configures the common beam function of the terminal device to an enabled state;
the first DCI schedules a PDSCH;
the terminal device performs HARQ feedback by using a semi-static HARQ-ACK codebook; and
one or more common beams indicated by the first DCI are different from a common beam currently used by the terminal device.

In this possible implementation, another possible case in which the one or more common beams indicated by the beam indication information are successfully indicated is shown. Specifically, a HARQ feedback result of the terminal device for the PDSCH scheduled by the first DCI indicates that the one or more common beams indicated by the beam indication information are successfully indicated.

In another possible implementation, after the one or more common beams indicated by the beam indication information are successfully indicated, the common beam indicated by the first DCI takes effect in a first slot obtained by adding a first moment and a first time offset; the first moment is a moment at which the terminal device receives the first DCI or a moment at which the terminal device sends the HARQ feedback result corresponding to the first DCI; and the HARQ feedback result corresponding to the first DCI is a HARQ feedback result fed back for the PDSCH scheduled by the first DCI.

In this possible implementation, after the one or more common beams indicated by the beam indication information are successfully indicated, the network device and the terminal device may determine an effective time of the common beam indicated by the first DCI, and switch to the common beam at the effective time, so that transmission is performed between the network device and the terminal device through the common beam.

In another possible implementation, the beam indication information is carried in the first DCI, the first DCI includes a common beam indication field, the common beam indication field indicates a common beam of one beam type. The method further includes:
The terminal device determines, based on the beam configuration information, the beam type of the common beam indicated by the common beam indication field.
the terminal device determines, based on the beam activation information, the beam type of the common beam indicated by the common beam indication field; or
the terminal device determines, based on the first DCI, the beam type of the common beam indicated by the common beam indication field.

In this possible implementation, when the common beam indication field included in the first DCI indicates a common beam of one beam type, a plurality of specific implementations in which the terminal device determines the beam type indicated by the common beam indication field are provided, to improve diversity and feasibility of the solution.

In another possible implementation, that the terminal device determines, based on the beam configuration information, the beam type of the common beam indicated by the common beam indication field includes:
If the network device configures a common beam mode of the terminal device to a joint common beam mode by using the beam configuration information, or the beam configuration information includes configuration information of the j oint common beam, the terminal device determines that the beam type indicated by the common beam indication field is the joint common beam; or
if the network device configures a common beam mode of the terminal device to a separate common beam mode by using the beam configuration information, or the beam configuration information includes configuration information of the separate common beam, the terminal device determines that the beam type of the common beam indicated by the common beam indication field is the uplink common beam or the downlink common beam.

In this possible implementation, a specific process in which the terminal device determines, based on the beam configuration information, the beam type indicated by the common beam indication field is provided, to provide a basis for implementing the solution. That is, the beam type indicated by the common beam indication field is indirectly determined by using a beam type configured by using the beam configuration information.

In another possible implementation, that the terminal device determines, based on the beam activation information, the beam type of the common beam indicated by the common beam indication field includes:
If the beam activation information is used to activate the joint common beam, the terminal device determines that the beam type of the common beam indicated by the common beam indication field is the joint common beam; or
if the beam activation information is used to activate the separate common beam, the terminal device determines that the beam type of the common beam indicated by the common beam indication field is the uplink common beam or the downlink common beam.

In this possible implementation, a specific process in which the terminal device determines, based on the beam activation information, the beam type of the common beam indicated by the common beam indication field is provided. That is, the beam type indicated by the common beam indication field is indirectly determined by using a beam type of the activated common beam.

In another possible implementation, first x bits or last x bits in the common beam indication field or a first indication field included in the first DCI indicates the beam type of the common beam indicated by the common beam indication field, where x is an integer greater than or equal to 1; and
the beam type includes any one of the following: the joint common beam, the uplink common beam, and the downlink common beam; or
the beam type includes any one of the following: the uplink common beam and the downlink common beam.

In this possible implementation, a specific implementation in which the beam type of the common beam is indicated by using the first DCI or the common beam indication field is provided.

In another possible implementation, the beam indication information is carried in the first DCI, the first DCI includes a common beam indication field, the common beam indication field includes one or two subfields, and the method further includes:
The terminal device determines, based on a beam type of the common beam configured by using the beam configuration information, a quantity of subfields included in the common beam indication field and/or a beam type indicated by the subfield.

In this possible implementation, the terminal device may determine, based on the beam type of the common beam configured by using the beam configuration information, the quantity of subfields included in the common beam indication field and respectively indicated beam types.

In another possible implementation, if the beam type configured by using the beam configuration information is the joint common beam, the common beam indication field includes one subfield, and the subfield indicates the joint common beam; or
if the beam type configured by using the beam configuration information is the separate common beam, the common beam indication field includes two subfields, and the two subfields indicate the uplink common beam and the downlink common beam.

In this possible implementation, a specific process of determining the quantity of subfields by using the beam type of the common beam configured by using the beam configuration information is provided.

In another possible implementation, if the common beam indication field includes two subfields, a first subfield in the two subfields indicates the uplink common beam, and a second subfield in the two subfields indicates the downlink common beam, or a first subfield in the two subfields indicates the downlink common beam, and a second subfield in the two subfields indicates the uplink common beam.

In this possible implementation, when the common beam indication field includes two subfields, beam types of common beams respectively indicated by the two subfields may be specified by using some preset communication protocols.

In another possible implementation, if the common beam indication field includes two subfields, the method further includes:
The terminal device determines, based on the beam configuration information, beam types respectively indicated by the two subfields;
the terminal device determines, based on the beam activation information, beam types respectively indicated by the two subfields; or
the terminal device determines, based on the first DCI, the beam types respectively indicated by the two subfields.

In this possible implementation, when the common beam indication field includes two subfields, a plurality of possible implementations in which the terminal device determines beam types respectively indicated by the two subfields are provided, to improve diversity of the solution.

In another possible implementation, the beam configuration information includes an uplink common beam set and a downlink common beam set, and that the terminal device determines, based on the beam configuration information, beam types respectively indicated by the two subfields includes:
The terminal device determines, based on configuration rankings of the uplink common beam set and the downlink common beam set, the beam types respectively indicated by the two subfields; or
the terminal device determines, based on set index rankings respectively corresponding to the uplink common beam set and the downlink common beam set, the beam types respectively indicated by the two subfields.

In this possible implementation, a specific process in which the terminal device determines, with reference to the beam configuration information, the beam types respectively corresponding to the two subfields is provided, to improve integrity and feasibility of the solution.

In another possible implementation, that the terminal device determines, based on the beam activation information, beam types respectively indicated by the two subfields includes: The terminal device determines, based on arrangement rankings of an uplink common beam and a downlink common beam activated by using the beam activation information, the beam types respectively indicated by the two subfields.

In this possible implementation, a specific process in which the terminal device determines, with reference to the beam activation information, the beam types respectively corresponding to the two subfields is provided, to improve integrity and diversity of the solution.

In another possible implementation, that the terminal device determines, based on the first DCI, beam types respectively indicated by the two subfields includes: The terminal device determines, based on first x bits or last x bits in the common beam indication field or a second indication field included in the first DCI, a beam type indicated by a first subfield in the two subfields and a beam type indicated by a second subfield in the two subfields.

In this possible implementation, a specific process in which the terminal device determines, with reference to the second indication field or the common beam field included in the first DCI, the beam types respectively indicated by the two subfields is provided.

In another possible implementation, the beam indication information is carried in the first DCI, and if the first DCI does not include the common beam indication field, the method further includes: If the beam activation information is used to activate one common beam, the terminal device performs transmission through the common beam activated by using the beam activation information; or
if the beam activation information is used to activate a plurality of common beams, the terminal device performs transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

In this possible implementation, if the beam indication information does not include the common beam indication field, that is, the beam indication information does not indicate a common beam, the terminal device may determine, with reference to the beam activation information, to perform transmission by using a corresponding common beam. In this way, a case in which normal communication cannot be performed between the terminal device and the network device because the beam indication information does not indicate a common beam is avoided, and performance of a communication system is improved.

In another possible implementation, the method further includes:
If the common beam indicated by the common beam indication information is the same as a second common beam, the terminal device ignores the beam indication information, where
the second common beam includes any one of the following: the common beam currently used by the terminal device and a common beam that is most recently indicated to the terminal device or most recently takes effect.

In this possible implementation, when the common beam indicated by the beam indication information is the same as the common beam currently used by the terminal device (that is, the terminal device does not need to update the common beam), and the common beam indication field included in the beam indication information still indicates the common beam, the terminal device may ignore the beam indication information. In this way, the terminal device does not update the common beam, to avoid unnecessary network resource overheads.

In another possible implementation, if the beam indication information indicates K common beams of a same beam type, and the network device configures K first resources or K first resource sets for the terminal device, the method further includes:
The terminal device uses the K common beams as beams corresponding to the K first resources or the K first resource sets, where
the K common beams are in a one-to-one correspondence with the K first resources or the K first resource sets, each of the K first resource sets includes the first resource, and the K common beams are respectively used to transmit the corresponding first resources;
the K common beams are ranked based on indication rankings in the beam indication information or beam index rankings of the K common beams;
the K first resources or the K first resource sets are ranked based on resource configuration rankings or resource index rankings; and
the first resource includes any one of the following: a channel state information-reference signal (channel status information-reference signal, CSI-RS) for which neither a repetition (repetition) parameter nor a transmitting information (transmitting information, trs-Info) parameter is configured, an SRS of a codebook (codebook) type, an SRS of a non-codebook (non-codebook) type, and a CSI-RS associated with the SRS of the non-codebook type.

In this possible implementation, when the beam indication information indicates K common beams of a same beam type, and the network device configures K first resources or K first resource sets for the terminal device, the terminal device determines corresponding common beams for the K first resources or the K resource sets, to transmit the corresponding first resources.

In another possible implementation, the beam indication information is used by the network device to indicate a common beam to the terminal device for a first time after the terminal device performs initial access, and before the common beam indicated by the beam indication information takes effect, the method further includes: The terminal device performs transmission by using a synchronization signal and PBCH block (synchronization signal and PBCH block, SSB) beam used during the initial access.

In this possible implementation, the beam indication information is used by the network device to indicate the common beam to the terminal device for the first time after the terminal device performs initial access. Before the common beam indicated by the beam indication information takes effect, a specific implementation in which the terminal device performs transmission through the common beam is provided, to facilitate communication between the terminal device and the network device. In this way, a case in which normal communication cannot be performed between the terminal device and the network device because the common beam indicated by the beam indication information does not take effect is avoided, and performance of the communication system is improved.

In another possible implementation, the beam indication information is used by the network device to indicate a common beam to the terminal device for a first time after beam failure occurs on the terminal device; and after the terminal device completes beam failure recovery, and before the common beam indicated by the beam indication information takes effect, the method further includes: The terminal device performs transmission through a beam reported by the terminal device to the network device in a beam failure recovery process.

In this possible implementation, before the common beam indicated by the beam indication information takes effect, a specific implementation in which the terminal device performs transmission through the common beam is provided, to facilitate communication between the terminal device and the network device. In this way, a case in which normal communication cannot be performed between the terminal device and the network device because the common beam indicated by the beam indication information does not take effect is avoided, and performance of the communication system is improved.

In another possible implementation, the beam indication information is used by the network device to indicate a common beam to the terminal device for a first time after the terminal device performs initial access; after the terminal device performs initial access, and before the terminal device receives the beam activation information, the method further includes: The terminal device performs transmission through an SSB beam used during the initial access; and after the terminal device receives the beam activation information, and before the common beam indicated by the beam indication information takes effect, the method further includes: The terminal device performs transmission through a first common beam or a last common beam activated by using the beam activation information; or the terminal device performs transmission through a common beam with a largest or smallest common beam indication field value in a common beam activated by using the beam activation information.

In this possible implementation, before the common beam indicated by the beam indication information takes effect, another specific implementation in which the terminal device performs transmission through the common beam is provided, to facilitate communication between the terminal device and the network device. In this way, a case in which normal communication cannot be performed between the terminal device and the network device because the common beam indicated by the beam indication information does not take effect is avoided, and performance of the communication system is improved.

In another possible implementation, the beam indication information is carried in the first DCI, the first DCI further schedules first PDSCH data, and the method further includes: If a moment at which the network device sends the first PDSCH data is earlier than a moment at which the common beam indicated by the first DCI takes effect, the terminal device receives the first PDSCH data from the network device through a third common beam, where the third common beam includes any one of the following: if the common beam indicated by the network device to the terminal device for the first time after the terminal device performs initial access or completes beam failure recovery has taken effect, the third common beam is the currently used common beam or the common beam that most recently takes effect or is most recently indicated; if the common beam indicated by the network device to the terminal device for the first time after the terminal device performs initial access does not take effect, the third common beam is the SSB beam used by the terminal device during the initial access; and if the common beam indicated by the network device to the terminal device for the first time after the terminal device completes beam failure recovery does not take effect, the third common beam is the beam reported by the terminal device to the network device during the beam failure recovery.

In this possible implementation, the beam indication information is carried in the first DCI, and the first DCI further schedules the first PDSCH data. If the moment at which the network device sends the first PDSCH data is earlier than the moment at which the common beam indicated by the first DCI takes effect, the terminal device performs transmission through the third common beam. In this way, a case in which normal communication cannot be performed between the terminal device and the network device because the common beam indicated by the beam indication information does not take effect is avoided, and performance of the communication system is improved.

In another possible implementation, if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further includes the common beam indicated by the first DCI.

In another possible implementation, the method further includes: The terminal device receives second DCI from the network device; and if a time interval between a moment at which the network device sends second PDSCH data scheduled by the second DCI and a moment at which the network device sends the second DCI is less than the preset threshold, the terminal device receives the second PDSCH data from the network device through a fourth common beam, where
the fourth common beam includes any one of the following: if the common beam indicated by the network device to the terminal device for the first time after the terminal device performs initial access or completes beam failure recovery has taken effect, the fourth common beam is the currently used common beam or the common beam that most recently takes effect or is most recently indicated; if the common beam indicated by the network device to the terminal device for the first time after the terminal device performs initial access does not take effect, the fourth common beam is the SSB beam used by the terminal device during the initial access; and if the common beam indicated by the network device to the terminal device for the first time after the terminal device completes beam failure recovery does not take effect, the fourth common beam is the beam reported by the terminal device to the network device during the beam failure recovery. In this possible implementation, if the time interval between the moment at which the network device sends the second PDSCH data scheduled by the second DCI and the moment at which the network device sends the second DCI is less than the preset threshold, the terminal device receives the second PDSCH data by using the fourth common beam. In this way, a case in which normal communication cannot be performed between the terminal device and the network device because the common beam indicated by the beam indication information does not take effect is avoided, and performance of the communication system is improved.

According to a second aspect of this application, a beam management method is provided. The method includes:
A network device sends beam configuration information to a terminal device. The beam configuration information includes configuration information of one or more common beams. The one or more common beams include any one of the following: a separate common beam used for uplink transmission or downlink transmission and a joint common beam used for uplink transmission and downlink transmission. The network device sends beam activation information to the terminal device. The beam activation information is used to activate some of the one or more common beams. The network device sends beam indication information to the terminal device.
The beam indication information indicates one or more of the some common beams.

In the technical solution, a beam type of the common beam configured by the network device for the terminal device is limited. For the terminal device, the separate common beam and the joint common beam cannot be simultaneously configured. The joint common beam may be used for both uplink transmission and downlink transmission. Therefore, if the network device configures the joint common beam for the terminal device, the separate common beam does not need to be configured for the terminal device, to avoid a waste of beam resources and improve utilization of the beam resources. The separate common beam may be used for uplink transmission or downlink transmission. Therefore, if the network device configures the separate common beam for the terminal device, the j oint common beam does not need to be configured for the terminal device, to avoid a waste of beam resources and improve utilization of the beam resources.

In a possible implementation, the beam configuration information includes a configuration parameter of a first common beam; if the configuration parameter of the first common beam includes a first parameter and does not include a second parameter, the first common beam is an uplink common beam; or if the configuration parameter of the first common beam includes the second parameter and does not include the first parameter, the first common beam is a downlink common beam; or if the configuration parameter of the first common beam includes the first parameter and the second parameter, the first common beam is a joint common beam, where the first parameter includes at least one of the following: a reference signal resource used to determine an uplink transmission beam, spatial relation information, an uplink power control parameter, and an SRS resource; and the second parameter includes at least one of the following: QCL information and a BWP parameter.

In this possible implementation, in a process in which the network device manages the common beam of the terminal device, the terminal device may determine a beam type of the one or more common beams based on a configuration parameter included in the beam configuration information. There is no need to indicate the beam type of the one or more common beams by using other information or fields, to reduce network resource overheads, for example, signaling overheads or indication bit overheads.

In another possible implementation, the beam indication information is carried in first DCI, and when a first condition is met, and a HARQ feedback result corresponding to the first DCI is an ACK, it indicates that the one or more common beams indicated by the beam indication information are successfully indicated; and
the first condition includes one or a combination of the following:
the terminal device reports that a common beam function is supported;
the network device configures the common beam function of the terminal device to an enabled state;
the first DCI schedules no PDSCH;
the first DCI schedules a PDSCH, and the terminal device performs HARQ feedback by using a dynamic HARQ-ACK codebook; and
one or more common beams indicated by the first DCI are different from a common beam currently used by the terminal device.

In this possible implementation, a possible case in which the one or more common beams indicated by the beam indication information are successfully indicated is shown. Specifically, a HARQ feedback result of the terminal device for the first DCI or a HARQ feedback result of the terminal device for the PDSCH scheduled by the first DCI indicates that the one or more common beams indicated by the beam indication information are successfully indicated.

In another possible implementation, after the one or more common beams indicated by the beam indication information are successfully indicated, the common beam indicated by the first DCI takes effect in a first slot obtained by adding a first moment and a first time offset; the first moment is a moment at which the first DCI is received or a moment at which the terminal device sends the HARQ feedback result corresponding to the first DCI; and
the HARQ feedback result corresponding to the first DCI is a HARQ feedback result fed back for the first DCI or a HARQ feedback result fed back for the PDSCH scheduled by the first DCI.

In this possible implementation, after the one or more common beams indicated by the beam indication information are successfully indicated, the network device and the terminal device may determine an effective time of the common beam indicated by the first DCI, and switch to the common beam at the effective time, so that transmission is performed between the network device and the terminal device through the common beam.

In another possible implementation, the beam indication information is carried in first DCI, and when a second condition is met, and a HARQ feedback result corresponding to the first DCI is an ACK or a NACK, it indicates that the one or more common beams indicated by the beam indication information are successfully indicated; and
the second condition includes one or a combination of the following:
the terminal device reports that a common beam function is supported;
the network device configures the common beam function of the terminal device to an enabled state;
the first DCI schedules a PDSCH;
the terminal device performs HARQ feedback by using a semi-static HARQ-ACK codebook; and
one or more common beams indicated by the first DCI are different from a common beam currently used by the terminal device.

In this possible implementation, another possible case in which the one or more common beams indicated by the beam indication information are successfully indicated is shown. Specifically, a HARQ feedback result of the terminal device for the PDSCH scheduled by the first DCI indicates that the one or more common beams indicated by the beam indication information are successfully indicated.

In another possible implementation, after the one or more common beams indicated by the beam indication information are successfully indicated, the common beam indicated by the first DCI takes effect in a first slot obtained by adding a first moment and a first time offset;
the first moment is a moment at which the terminal device receives the first DCI or a moment at which the terminal device sends the HARQ feedback result corresponding to the first DCI; and the HARQ feedback result corresponding to the first DCI is a HARQ feedback result fed back for the PDSCH scheduled by the first DCI.

In this possible implementation, after the one or more common beams indicated by the beam indication information are successfully indicated, the network device and the terminal device may determine an effective time of the common beam indicated by the first DCI, and switch to the common beam at the effective time, so that transmission is performed between the network device and the terminal device through the common beam.

In another possible implementation, the beam indication information is carried in the first DCI, the first DCI includes a common beam indication field, and the common beam indication field indicates a common beam of one beam type; and
the beam type of the common beam indicated by the common beam indication field is determined by using the beam configuration information;
the beam type of the common beam indicated by the common beam indication field is determined by using the beam activation information; or
the beam type of the common beam indicated by the common beam indication field is determined by using the first DCI.

In this possible implementation, when the common beam indication field included in the first DCI indicates a common beam of one beam type, a specific implementation in which the beam type indicated by the common beam indication field is indicated is provided, to improve diversity and feasibility of the solution.

In another possible implementation, if the network device configures a common beam mode of the terminal device to a joint common beam mode by using the beam configuration information, or the beam configuration information includes configuration information of the j oint common beam, the beam type indicated by the common beam indication field is the joint common beam; or
if the network device configures a common beam mode of the terminal device to a separate common beam mode by using the beam configuration information, or the beam configuration information includes configuration information of the separate common beam, the beam type of the common beam indicated by the common beam indication field is the uplink common beam or the downlink common beam.

In this possible implementation, a specific process of determining, by using the beam configuration information, the beam type indicated by the common beam indication field is provided, to provide a basis for implementing the solution. That is, the beam type indicated by the common beam indication field is indirectly determined by using a beam type configured by using the beam configuration information.

In another possible implementation, if the beam activation information is used to activate the joint common beam, the beam type of the common beam indicated by the common beam indication field is the joint common beam; or
if the beam activation information is used to activate the separate common beam, the beam type of the common beam indicated by the common beam indication field is the uplink common beam or the downlink common beam.

In this possible implementation, a specific process of determining, by using the beam activation information, the beam type of the common beam indicated by the common beam indication field is provided. That is, the beam type indicated by the common beam indication field is indirectly determined by using a beam type of the activated common beam.

In another possible implementation, first x bits or last x bits in the common beam indication field or a first indication field included in the first DCI indicates the beam type of the common beam indicated by the common beam indication field, where x is an integer greater than or equal to 1; and
the beam type includes any one of the following: the joint common beam, the uplink common beam, and the downlink common beam; or
the beam type includes any one of the following: the uplink common beam and the downlink common beam.

In this possible implementation, a specific implementation in which the beam type of the common beam indicated by the common beam indication field is indicated by using the first DCI or the common beam indication field is provided.

In another possible implementation, the beam indication information is carried in the first DCI, the first DCI includes a common beam indication field, and the common beam indication field includes one or two subfields; and
a quantity of subfields included in the common beam indication field and/or a beam type indicated by the subfield are/is determined by using a beam type configured by using the beam configuration information.

In this possible implementation, the quantity of subfields included in the common beam indication field and respectively indicated beam types are indicated by using the beam type of the common beam configured by using the beam configuration information.

In another possible implementation, if the beam type configured by using the beam configuration information is the joint common beam, the common beam indication field includes one subfield, and the subfield indicates the joint common beam; or
if the beam type configured by using the beam configuration information is the separate common beam, the common beam indication field includes two subfields, and the two subfields indicate the uplink common beam and the downlink common beam.

In this possible implementation, a specific process of determining the quantity of subfields by using the beam type of the common beam configured by using the beam configuration information is provided.

In another possible implementation, if the common beam indication field includes two subfields, a first subfield in the two subfields indicates the uplink common beam, and a second subfield in the two subfields indicates the downlink common beam, or a first subfield in the two subfields indicates the downlink common beam, and a second subfield in the two subfields indicates the uplink common beam.

In this possible implementation, when the common beam indication field includes two subfields, beam types of common beams respectively indicated by the two subfields may be specified by using some preset communication protocols.

In another possible implementation, if the common beam indication field includes two subfields, beam types respectively indicated by the two subfields are determined by using the beam configuration information, the beam activation information, or the first DCI.

In this possible implementation, when the common beam indication field includes two subfields, a plurality of possible implementations in which beam types respectively indicated by the two subfields are indicated are provided, to improve diversity of the solution.

In another possible implementation, the beam configuration information includes an uplink common beam set and a downlink common beam set; and
the beam types respectively indicated by the two subfields are determined based on configuration rankings of the uplink common beam set and the downlink common beam set; or
the beam types respectively indicated by the two subfields are determined based on set index rankings respectively corresponding to the uplink common beam set and the downlink common beam set.

In this possible implementation, a technical solution in which the beam types respectively corresponding to the two subfields are determined based on the configuration rankings or the set index rankings of the uplink common beam set and the downlink common beam set included in the beam configuration information is provided, to improve integrity and feasibility of the solution. In another possible implementation, the beam types respectively indicated by the two subfields are determined based on arrangement rankings of an uplink common beam and a downlink common beam activated by using the beam activation information.

In this possible implementation, a technical solution in which the beam types respectively corresponding to the two subfields are determined based on rankings of activating the common beams by using the beam activation information is provided, to improve integrity and diversity of the solution.

In another possible implementation, the beam types respectively indicated by the two subfields are determined by using first x bits or last x bits in the common beam indication field or a second indication field included in the first DCI.

In another possible implementation, the beam indication information is carried in the first DCI, and if the first DCI does not include the common beam indication field, the method further includes: If the beam activation information is used to activate one common beam, the network device performs transmission through the common beam activated by using the beam activation information; or
if the beam activation information is used to activate a plurality of common beams, the network device performs transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

In this possible implementation, if the beam indication information does not include the common beam indication field, that is, the beam indication information does not indicate a common beam, the network device may determine, with reference to the beam activation information, to perform transmission by using a corresponding common beam. In this way, a case in which normal communication cannot be performed between the terminal device and the network device because the beam indication information does not indicate a common beam is avoided, and performance of a communication system is improved.

In another possible implementation, if the beam indication information indicates K common beams of a same beam type, and the network device configures K first resources or K first resource sets for the terminal device, the K common beams are beams corresponding to the K first resources or the K first resource sets; the K common beams are in a one-to-one correspondence with the K first resources or the K first resource sets, each of the K first resource sets includes the first resource, and the K common beams are respectively used to transmit the corresponding first resources;
the K common beams are ranked based on indication rankings in the beam indication information or beam index rankings of the K common beams;
the K first resources or the K first resource sets are ranked based on resource configuration rankings or resource index rankings; and
the first resource includes any one of the following: a CSI-RS for which neither a repetition parameter nor a trs-Info parameter is configured, a sounding reference signal SRS of a codebook type, an SRS of a non-codebook type, and a CSI-RS associated with the SRS of the non-codebook type.

In this possible implementation, when the beam indication information indicates K common beams of a same beam type, and the network device configures K first resources or K first resource sets for the terminal device, the K common beams are common beams respectively corresponding to the K first resources or the K resource sets, to transmit the corresponding first resources.

In another possible implementation, the beam indication information is used by the network device to indicate a common beam to the terminal device for a first time after the terminal device performs initial access, and before the common beam indicated by the beam indication information takes effect, the method further includes: The network device performs transmission with the terminal device through an SSB beam used by the terminal device during the initial access.

In this possible implementation, before the common beam indicated by the beam indication information takes effect, the network device performs transmission with the terminal device through the SSB beam used by the terminal device during the initial access, to facilitate communication between the terminal device and the network device. In this way, a case in which normal communication cannot be performed between the terminal device and the network device because the common beam indicated by the beam indication information does not take effect is avoided, and performance of the communication system is improved.

In another possible implementation, the beam indication information is used by the network device to indicate a common beam to the terminal device for a first time after beam failure occurs on the terminal device; and after the terminal device completes beam failure recovery, and before the common beam indicated by the beam indication information takes effect, the method further includes: The network device performs transmission through a beam reported by the terminal device to the network device in a beam failure recovery process.

In this possible implementation, before the common beam indicated by the beam indication information takes effect, a specific implementation in which the network device performs transmission through the common beam is provided, to facilitate communication between the terminal device and the network device. In this way, a case in which normal communication cannot be performed between the terminal device and the network device because the common beam indicated by the beam indication information does not take effect is avoided, and performance of the communication system is improved.

In another possible implementation, the beam indication information is used by the network device to indicate a common beam to the terminal device for a first time after the terminal device performs initial access; after the terminal device performs initial access, and before the network device sends the beam activation information, the method further includes: The network device performs transmission through an SSB beam used during the initial access; and after the network device sends the beam activation information, and before the common beam indicated by the beam indication information takes effect, the method further includes: The network device performs transmission through a first common beam or a last common beam activated by using the beam activation information; or the network device performs transmission through a common beam with a largest or smallest common beam indication field value in a common beam activated by using the beam activation information.

In this possible implementation, before the common beam indicated by the beam indication information takes effect, another specific implementation in which the network device performs transmission through the common beam is provided, to facilitate communication between the terminal device and the network device. In this way, a case in which normal communication cannot be performed between the terminal device and the network device because the common beam indicated by the beam indication information does not take effect is avoided, and performance of the communication system is improved.

In another possible implementation, the beam indication information is carried in the first DCI, the first DCI further schedules first PDSCH data, and the method further includes: If a moment at which the network device sends the first PDSCH data is earlier than a moment at which the common beam indicated by the first DCI takes effect, the network device sends the first PDSCH data to the network device through a third common beam, where the third common beam includes any one of the following: if the common beam indicated by the network device to the terminal device for the first time after the terminal device performs initial access or completes beam failure recovery has taken effect, the third common beam is the currently used common beam or a common beam that most recently takes effect or is most recently indicated; if the common beam indicated by the network device to the terminal device for the first time after the terminal device performs initial access does not take effect, the third common beam is the SSB beam used by the terminal device during the initial access; and if the common beam indicated by the network device to the terminal device for the first time after the terminal device completes beam failure recovery does not take effect, the third common beam is the beam reported by the terminal device to the network device during the beam failure recovery.

In this possible implementation, the beam indication information is carried in the first DCI, and the first DCI further schedules the first PDSCH data. If the moment at which the network device sends the first PDSCH data is earlier than the moment at which the common beam indicated by the first DCI takes effect, the network device performs transmission through the third common beam. In this way, a case in which normal communication cannot be performed between the terminal device and the network device because the common beam indicated by the beam indication information does not take effect is avoided, and performance of the communication system is improved.

In another possible implementation, if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further includes the common beam indicated by the first DCI.

In another possible implementation, the method further includes: The network device sends second DCI to the terminal device; and if a time interval between a moment at which the network device sends second PDSCH data scheduled by the second DCI and a moment at which the network device sends the second DCI is less than the preset threshold, the network device sends the second PDSCH data to the terminal device through a fourth common beam, where the fourth common beam includes any one of the following: if the common beam indicated by the network device to the terminal device for the first time after the terminal device performs initial access or completes beam failure recovery has taken effect, the fourth common beam is the currently used common beam or the common beam that most recently takes effect or is most recently indicated; if the common beam indicated by the network device to the terminal device for the first time after the terminal device performs initial access does not take effect, the fourth common beam is the SSB beam used by the terminal device during the initial access; and if the common beam indicated by the network device to the terminal device for the first time after the terminal device completes beam failure recovery does not take effect, the fourth common beam is the beam reported by the terminal device to the network device during the beam failure recovery.

In this possible implementation, if the time interval between the moment at which the network device sends the second PDSCH data scheduled by the second DCI and the moment at which the network device sends the second DCI is less than the preset threshold, the network device receives the second PDSCH data by using the fourth common beam. In this way, a case in which normal communication cannot be performed between the terminal device and the network device because the common beam indicated by the beam indication information does not take effect is avoided, and performance of the communication system is improved.

According to a third aspect of this application, a beam management method is provided. The method includes:
A terminal device receives beam configuration information from a network device. The beam configuration information includes configuration information of one or more common beams. The beam configuration information includes a configuration parameter of the one or more common beams. If a configuration parameter of each of the one or more common beams includes a first parameter and does not include a second parameter, each common beam is an uplink common beam; if a configuration parameter of each common beam includes a second parameter and does not include a first parameter, each common beam is a downlink common beam; or if a configuration parameter of each common beam includes a first parameter and a second parameter, each common beam is a joint common beam. The first parameter includes at least one of the following: a reference signal resource used to determine an uplink transmission beam, spatial relation information, an uplink power control parameter, and an SRS resource. The second parameter includes at least one of the following: QCL information and a BWP parameter. The terminal device receives beam activation information from the network device. The beam activation information is used to activate some of the one or more common beams. The terminal device receives beam indication information from the network device. The beam indication information indicates one or more of the some common beams.

In the technical solution, in a process in which the network device manages the common beam of the terminal device, the terminal device may determine a beam type of the one or more common beams based on the configuration parameter included in the beam configuration information. There is no need to indicate the beam type of the one or more common beams by using other information or fields, to reduce network resource overheads, for example, signaling overheads or indication bit overheads.

According to a fourth aspect of this application, a beam management method is provided. The method includes:
A network device sends beam configuration information to a terminal device. The beam configuration information includes configuration information of one or more common beams. The beam configuration information includes a configuration parameter of the one or more common beams. If a configuration parameter of each of the one or more common beams includes a first parameter and does not include a second parameter, each common beam is an uplink common beam; if a configuration parameter of each common beam includes a second parameter and does not include a first parameter, each common beam is a downlink common beam; or if a configuration parameter of each common beam includes a first parameter and a second parameter, each common beam is a joint common beam. The first parameter includes at least one of the following: a reference signal resource used to determine an uplink transmission beam, spatial relation information, an uplink power control parameter, and an SRS resource. The second parameter includes at least one of the following: QCL information and a BWP parameter. The network device sends beam activation information to the terminal device. The beam activation information is used to activate some of the one or more common beams. The network device sends beam indication information to the terminal device. The beam indication information indicates one or more of the some common beams.

In this possible implementation, in a process in which the network device manages the common beam of the terminal device, the network device may indicate a beam type of the one or more common beams to the terminal device by using the configuration parameter included in the beam configuration information. There is no need to indicate the beam type of the one or more common beams by using other information or fields, to reduce network resource overheads, for example, signaling overheads or indication bit overheads.

According to a fifth aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives beam indication information from the network device. The beam indication information indicates one or more of the some common beams. The beam indication information is carried in first DCI, and when a first condition is met, and a HARQ feedback result corresponding to the first DCI is an ACK, it indicates that the one or more common beams indicated by the beam indication information are successfully indicated; and
the first condition includes one or a combination of the following:
the terminal device reports that a common beam function is supported;
the network device configures the common beam function of the terminal device to an enabled state;
the first DCI schedules no PDSCH;
the first DCI schedules a PDSCH, and the terminal device performs HARQ feedback by using a dynamic HARQ-ACK codebook; and
one or more common beams indicated by the first DCI are different from a common beam currently used by the terminal device.

In a possible implementation, after the one or more common beams indicated by the beam indication information are successfully indicated, the common beam indicated by the first DCI takes effect in a first slot obtained by adding a first moment and a first time offset; the first moment is a moment at which the first DCI is received or a moment at which the terminal device sends the HARQ feedback result corresponding to the first DCI; and the HARQ feedback result corresponding to the first DCI is a HARQ feedback result fed back for the first DCI or a HARQ feedback result fed back for the PDSCH scheduled by the first DCI.

According to a sixth aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. The network device sends beam indication information to the terminal device. The beam indication information indicates one or more of the some common beams. The beam indication information is carried in first DCI, and when a first condition is met, and a HARQ feedback result corresponding to the first DCI is an ACK, it indicates that the one or more common beams indicated by the beam indication information are successfully indicated; and
the first condition includes one or a combination of the following:
the terminal device reports that a common beam function is supported;
the network device configures the common beam function of the terminal device to an enabled state;
the first DCI schedules no PDSCH;
the first DCI schedules a PDSCH, and the terminal device performs HARQ feedback by using a dynamic HARQ-ACK codebook; and
one or more common beams indicated by the first DCI are different from a common beam currently used by the terminal device.

In a possible implementation, after the one or more common beams indicated by the beam indication information are successfully indicated, the common beam indicated by the first DCI takes effect in a first slot obtained by adding a first moment and a first time offset; the first moment is a moment at which the first DCI is received or a moment at which the terminal device sends the HARQ feedback result corresponding to the first DCI; and the HARQ feedback result corresponding to the first DCI is a HARQ feedback result fed back for the first DCI or a HARQ feedback result fed back for the PDSCH scheduled by the first DCI.

According to a seventh aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives beam indication information from the network device. The beam indication information indicates one or more of the some common beams. The beam indication information is carried in first DCI, and when a second condition is met, and a HARQ feedback result corresponding to the first DCI is an ACK or a NACK, it indicates that the one or more common beams indicated by the beam indication information are successfully indicated; and
the second condition includes one or a combination of the following:
the terminal device reports that a common beam function is supported;
the network device configures the common beam function of the terminal device to an enabled state;
the first DCI schedules a PDSCH;
the terminal device performs HARQ feedback by using a semi-static HARQ-ACK codebook; and
one or more common beams indicated by the first DCI are different from a common beam currently used by the terminal device.

In a possible implementation, after the one or more common beams indicated by the beam indication information are successfully indicated, the common beam indicated by the first DCI takes effect in a first slot obtained by adding a first moment and a first time offset; the first moment is a moment at which the first DCI is received or a moment at which the terminal device sends the HARQ feedback result corresponding to the first DCI; and the HARQ feedback result corresponding to the first DCI is a HARQ feedback result fed back for the PDSCH scheduled by the first DCI.

According to an eighth aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. The network device sends beam indication information to the terminal device. The beam indication information indicates one or more of the some common beams. The beam indication information is carried in first DCI, and when a second condition is met, and a HARQ feedback result corresponding to the first DCI is an ACK or a NACK, it indicates that the one or more common beams indicated by the beam indication information are successfully indicated; and
the second condition includes one or a combination of the following:
the terminal device reports that a common beam function is supported;
the network device configures the common beam function of the terminal device to an enabled state;
the first DCI schedules a PDSCH;
the terminal device performs HARQ feedback by using a semi-static HARQ-ACK codebook; and
one or more common beams indicated by the first DCI are different from a common beam currently used by the terminal device.

In a possible implementation, after the one or more common beams indicated by the beam indication information are successfully indicated, the common beam indicated by the first DCI takes effect in a first slot obtained by adding a first moment and a first time offset; the first moment is a moment at which the first DCI is received or a moment at which the terminal device sends the HARQ feedback result corresponding to the first DCI; and the HARQ feedback result corresponding to the first DCI is a HARQ feedback result fed back for the PDSCH scheduled by the first DCI.

According to a ninth aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives beam indication information from the network device. The beam indication information indicates one or more of the some common beams.

The beam indication information is carried in first DCI, the first DCI includes a common beam indication field, the common beam indication field indicates a common beam of one beam type, and the method further includes:
The terminal device determines, based on the beam configuration information, the beam type of the common beam indicated by the common beam indication field;
the terminal device determines, based on the beam activation information, the beam type of the common beam indicated by the common beam indication field; or
the terminal device determines, based on the first DCI, the beam type of the common beam indicated by the common beam indication field.

In a possible implementation, that the terminal device determines, based on the beam configuration information, the beam type of the common beam indicated by the common beam indication field includes:
If the network device configures a common beam mode of the terminal device to a joint common beam mode by using the beam configuration information, or the beam configuration information includes configuration information of a joint common beam, the terminal device determines that the beam type indicated by the common beam indication field is the joint common beam; or
if the network device configures a common beam mode of the terminal device to a separate common beam mode by using the beam configuration information, or the beam configuration information includes configuration information of a separate common beam, the terminal device determines that the beam type of the common beam indicated by the common beam indication field is an uplink common beam or a downlink common beam.

In another possible implementation, that the terminal device determines, based on the beam activation information, the beam type of the common beam indicated by the common beam indication field includes:
If the beam activation information is used to activate a joint common beam, the terminal device determines that the beam type of the common beam indicated by the common beam indication field is the joint common beam; or
if the beam activation information is used to activate a separate common beam, the terminal device determines that the beam type of the common beam indicated by the common beam indication field is an uplink common beam or a downlink common beam.

In another possible implementation, first x bits or last x bits in the common beam indication field or a first indication field included in the first DCI indicates the beam type of the common beam indicated by the common beam indication field, where x is an integer greater than or equal to 1; and
the beam type includes any one of the following: a joint common beam, an uplink common beam, and a downlink common beam; or
the beam type includes any one of the following: an uplink common beam and a downlink common beam.

According to a tenth aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. The network device sends beam indication information to the terminal device. The beam indication information indicates one or more of the some common beams.

The beam indication information is carried in first DCI, the first DCI includes a common beam indication field, and the common beam indication field indicates a common beam of one beam type; and
the beam type of the common beam indicated by the common beam indication field is determined by using the beam configuration information;
the beam type of the common beam indicated by the common beam indication field is determined by using the beam activation information; or
the beam type of the common beam indicated by the common beam indication field is determined by using the first DCI.

In a possible implementation, if the network device configures a common beam mode of the terminal device to a joint common beam mode by using the beam configuration information, or the beam configuration information includes configuration information of a joint common beam, the beam type indicated by the common beam indication field is the joint common beam; or
if the network device configures a common beam mode of the terminal device to a separate common beam mode by using the beam configuration information, or the beam configuration information includes configuration information of a separate common beam, the beam type of the common beam indicated by the common beam indication field is an uplink common beam or a downlink common beam.

In another possible implementation, if the beam activation information is used to activate a joint common beam, the beam type of the common beam indicated by the common beam indication field is the joint common beam; or
if the beam activation information is used to activate a separate common beam, the beam type of the common beam indicated by the common beam indication field is an uplink common beam or a downlink common beam.

In another possible implementation, first x bits or last x bits in the common beam indication field or a first indication field included in the first DCI indicates the beam type of the common beam indicated by the common beam indication field, where x is an integer greater than or equal to 1; and
the beam type includes any one of the following: a joint common beam, an uplink common beam, and a downlink common beam; or
the beam type includes any one of the following: an uplink common beam and a downlink common beam.

According to an eleventh aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives beam indication information from the network device. The beam indication information indicates one or more of the some common beams. The beam indication information is carried in first DCI, the first DCI includes a common beam indication field, and the common beam indication field includes one or two subfields. The terminal device determines, based on a beam type of the common beam configured by using the beam configuration information, a quantity of subfields included in the common beam indication field and/or a beam type indicated by the subfield.

In another possible implementation, if the beam type configured by using the beam configuration information is a joint common beam, the common beam indication field includes one subfield, and the subfield indicates the joint common beam; or
if the beam type configured by using the beam configuration information is a separate common beam, the common beam indication field includes two subfields, and the two subfields indicate an uplink common beam and a downlink common beam.

In another possible implementation, if the common beam indication field includes two subfields, a first subfield in the two subfields indicates the uplink common beam, and a second subfield in the two subfields indicates the downlink common beam, or a first subfield in the two subfields indicates the downlink common beam, and a second subfield in the two subfields indicates the uplink common beam.

In another possible implementation, if the common beam indication field includes two subfields, the method further includes:
The terminal device determines, based on the beam configuration information, beam types respectively indicated by the two subfields;
the terminal device determines, based on the beam activation information, beam types respectively indicated by the two subfields; or
the terminal device determines, based on the first DCI, beam types respectively indicated by the two subfields.

In another possible implementation, the beam configuration information includes an uplink common beam set and a downlink common beam set, and that the terminal device determines, based on the beam configuration information, beam types respectively indicated by the two subfields includes:
The terminal device determines, based on configuration rankings of the uplink common beam set and the downlink common beam set, the beam types respectively indicated by the two subfields; or
the terminal device determines, based on set index rankings respectively corresponding to the uplink common beam set and the downlink common beam set, the beam types respectively indicated by the two subfields.

In another possible implementation, that the terminal device determines, based on the beam activation information, beam types respectively indicated by the two subfields includes: The terminal device determines, based on arrangement rankings of an uplink common beam and a downlink common beam activated by using the beam activation information, the beam types respectively indicated by the two subfields.

In another possible implementation, that the terminal device determines, based on the first DCI, beam types respectively indicated by the two subfields includes: The terminal device determines, based on first x bits or last x bits in the common beam indication field or a second indication field included in the first DCI, a beam type indicated by a first subfield in the two subfields and a beam type indicated by a second subfield in the two subfields.

According to a twelfth aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. The network device sends beam indication information to the terminal device. The beam indication information indicates one or more of the some common beams. The beam indication information is carried in first DCI, the first DCI includes a common beam indication field, and the common beam indication field includes one or two subfields. A quantity of subfields included in the common beam indication field and/or a beam type indicated by the subfield are/is determined by using a beam type configured by using the beam configuration information.

In another possible implementation, if the beam type configured by using the beam configuration information is a joint common beam, the common beam indication field includes one subfield, and the subfield indicates the joint common beam; or
if the beam type configured by using the beam configuration information is a separate common beam, the common beam indication field includes two subfields, and the two subfields indicate an uplink common beam and a downlink common beam.

In another possible implementation, if the common beam indication field includes two subfields, a first subfield in the two subfields indicates the uplink common beam, and a second subfield in the two subfields indicates the downlink common beam, or a first subfield in the two subfields indicates the downlink common beam, and a second subfield in the two subfields indicates the uplink common beam.

In another possible implementation, if the common beam indication field includes two subfields, beam types respectively indicated by the two subfields are determined by using the beam configuration information, the beam activation information, or the first DCI.

In another possible implementation, the beam configuration information includes an uplink common beam set and a downlink common beam set; and
the beam types respectively indicated by the two subfields are determined based on configuration rankings of the uplink common beam set and the downlink common beam set; or
the beam types respectively indicated by the two subfields are determined based on set index rankings respectively corresponding to the uplink common beam set and the downlink common beam set.

In another possible implementation, the beam types respectively indicated by the two subfields are determined based on arrangement rankings of an uplink common beam and a downlink common beam activated by using the beam activation information.

In another possible implementation, the beam types respectively indicated by the two subfields are determined by using first x bits or last x bits in the common beam indication field or a second indication field included in the first DCI.

According to a thirteenth aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. DCI sent by the network device to the terminal device does not include a common beam indication field. If the beam activation information is used to activate one common beam, the terminal device performs transmission through the common beam activated by using the beam activation information. If the beam activation information is used to activate a plurality of common beams, the terminal device performs transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

According to a fourteenth aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. DCI sent by the network device to the terminal device does not include a common beam indication field. If the beam activation information is used to activate one common beam, the network device performs transmission through the common beam activated by using the beam activation information. If the beam activation information is used to activate a plurality of common beams, the network device performs transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

According to a fifteenth aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives beam indication information from the network device. The beam indication information indicates one or more of the some common beams.

If the common beam indicated by the common beam indication information is the same as a second common beam, the terminal device ignores the beam indication information. The second common beam includes any one of the following: a common beam currently used by the terminal device and a common beam that is most recently indicated to the terminal device or most recently takes effect.

According to a sixteenth aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives beam indication information from the network device. The beam indication information indicates one or more of the some common beams. If the beam indication information indicates K common beams of a same beam type, and the network device configures K first resources or K first resource sets for the terminal device, the terminal device uses the K common beams as beams corresponding to the K first resources or the K first resource sets.

The K common beams are in a one-to-one correspondence with the K first resources or the K first resource sets, each of the K first resource sets includes the first resource, and the K common beams are respectively used to transmit the corresponding first resources.

The K common beams are ranked based on indication rankings in the beam indication information or beam index rankings of the K common beams.

The K first resources or the K first resource sets are ranked based on resource configuration rankings or resource index rankings.

The first resource includes any one of the following: a CSI-RS for which neither a repetition parameter nor a trs-Info parameter is configured, an SRS of a codebook type, an SRS of a non-codebook type, and a CSI-RS associated with the SRS of the non-codebook type.

According to a seventeenth aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. The network device sends beam indication information to the terminal device. The beam indication information indicates one or more of the some common beams.

If the beam indication information indicates K common beams of a same beam type, and the network device configures K first resources or K first resource sets for the terminal device, the K common beams are beams respectively corresponding to the K first resources or the K first resource sets.

The K common beams are in a one-to-one correspondence with the K first resources or the K first resource sets, each of the K first resource sets includes the first resource, and the K common beams are respectively used to transmit the corresponding first resources.

The K common beams are ranked based on indication rankings in the beam indication information or beam index rankings of the K common beams.

The K first resources or the K first resource sets are ranked based on resource configuration rankings or resource index rankings.

The first resource includes any one of the following: a CSI-RS for which neither a repetition parameter nor a trs-Info parameter is configured, an SRS of a codebook type, an SRS of a non-codebook type, and a CSI-RS associated with the SRS of the non-codebook type.

According to an eighteenth aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives beam indication information from the network device. The beam indication information indicates one or more of the some common beams. The beam indication information is used by the network device to indicate a common beam to the terminal device for a first time after the terminal device performs initial access. Before the common beam indicated by the beam indication information takes effect, the terminal device performs transmission through an SSB beam used during the initial access.

According to a nineteenth aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. The network device sends beam indication information to the terminal device. The beam indication information indicates one or more of the some common beams. The beam indication information is used by the network device to indicate a common beam to the terminal device for a first time after the terminal device performs initial access. Before the common beam indicated by the beam indication information takes effect, the network device performs transmission through an SSB beam used by the terminal device during the initial access.

According to a twentieth aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives beam indication information from the network device. The beam indication information indicates one or more of the some common beams. The beam indication information is used by the network device to indicate a common beam to the terminal device for a first time after beam failure occurs on the terminal device. After the terminal device completes beam failure recovery, and before the common beam indicated by the beam indication information takes effect, the terminal device performs transmission through a beam reported by the terminal device to the network device in a beam failure recovery process.

According to a twenty-first aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. The network device sends beam indication information to the terminal device. The beam indication information indicates one or more of the some common beams.

The beam indication information is used by the network device to indicate a common beam to the terminal device for a first time after beam failure occurs on the terminal device. After the terminal device completes beam failure recovery, and before the common beam indicated by the beam indication information takes effect, the network device performs transmission through a beam reported by the terminal device to the network device in a beam failure recovery process. According to a twenty-second aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives beam indication information from the network device. The beam indication information indicates one or more of the some common beams.

The beam indication information is used by the network device to indicate a common beam to the terminal device for a first time after the terminal device performs initial access. After the terminal device performs initial access, and before the terminal device receives the beam activation information, the terminal device performs transmission through an SSB beam used during the initial access.

After the terminal device receives the beam activation information, and before the common beam indicated by the beam indication information takes effect, the terminal device performs transmission through a first common beam or a last common beam activated by using the beam activation information; or the terminal device performs transmission through a common beam with a largest or smallest common beam indication field value in a common beam activated by using the beam activation information.

According to a twenty-third aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. The network device sends beam indication information to the terminal device. The beam indication information indicates one or more of the some common beams.

The beam indication information is used by the network device to indicate a common beam to the terminal device for a first time after the terminal device performs initial access. After the terminal device performs initial access, and before the network device sends the beam activation information to the terminal device, the network device performs transmission through an SSB beam used by the terminal device during the initial access.

After the network device sends the beam activation information to the terminal device, and before the common beam indicated by the beam indication information takes effect, the network device performs transmission through a first common beam or a last common beam activated by using the beam activation information; or the network device performs transmission through a common beam with a largest or smallest common beam indication field value in a common beam activated by using the beam activation information.

According to a twenty-fourth aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives beam indication information from the network device. The beam indication information indicates one or more of the some common beams.

The beam indication information is carried in first DCI, and the first DCI further schedules first PDSCH data.

If a moment at which the network device sends the first PDSCH data is earlier than a moment at which the common beam indicated by the first DCI takes effect, the terminal device receives the first PDSCH data from the network device through a third common beam.

The third common beam includes any one of the following: if a common beam indicated by the network device to the terminal device for a first time after the terminal device performs initial access or completes beam failure recovery has taken effect, the third common beam is a currently used common beam or a common beam that most recently takes effect or is most recently indicated; if the common beam indicated by the network device to the terminal device for the first time after the terminal device performs initial access does not take effect, the third common beam is an SSB beam used by the terminal device during the initial access; and if the common beam indicated by the network device to the terminal device for the first time after the terminal device completes beam failure recovery does not take effect, the third common beam is a beam reported by the terminal device to the network device during the beam failure recovery.

In a possible implementation, if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further includes the common beam indicated by the first DCI.

According to a twenty-fifth aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. The network device sends beam indication information to the terminal device. The beam indication information indicates one or more of the some common beams.

The beam indication information is carried in first DCI, and the first DCI further schedules first PDSCH data.

If a moment at which the network device sends the first PDSCH data is earlier than a moment at which the common beam indicated by the first DCI takes effect, the network device receives the first PDSCH data from the network device through a third common beam.

The third common beam includes any one of the following: if a common beam indicated by the network device to the terminal device for a first time after the terminal device performs initial access or completes beam failure recovery has taken effect, the third common beam is a currently used common beam or a common beam that most recently takes effect or is most recently indicated; if the common beam indicated by the network device to the terminal device for the first time after the terminal device performs initial access does not take effect, the third common beam is an SSB beam used by the terminal device during the initial access; and if the common beam indicated by the network device to the terminal device for the first time after the terminal device completes beam failure recovery does not take effect, the third common beam is a beam reported by the terminal device to the network device during the beam failure recovery.

In a possible implementation, if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further includes the common beam indicated by the first DCI.

According to a twenty-sixth aspect of this application, a beam management method is provided. The method includes:
A terminal device receives beam configuration information from a network device. The beam configuration information includes configuration information of one or more common beams. The terminal device receives beam activation information from the network device. The beam activation information is used to activate some of the one or more common beams. The terminal device receives first DCI from the network device. The first DCI indicates one or more of the some common beams.

The terminal device receives second DCI from the network device.

If a time interval between a moment at which the network device sends second PDSCH data scheduled by the second DCI and a moment at which the network device sends the second DCI is less than a preset threshold, the terminal device receives the second PDSCH data from the network device through a fourth common beam.

The fourth common beam includes any one of the following: if a common beam indicated by the network device to the terminal device for a first time after the terminal device performs initial access or completes beam failure recovery has taken effect, the fourth common beam is a currently used common beam or a common beam that most recently takes effect or is most recently indicated; if the common beam indicated by the network device to the terminal device for the first time after the terminal device performs initial access does not take effect, the fourth common beam is an SSB beam used by the terminal device during the initial access; and if the common beam indicated by the network device to the terminal device for the first time after the terminal device completes beam failure recovery does not take effect, the fourth common beam is a beam reported by the terminal device to the network device during the beam failure recovery.

According to a twenty-seventh aspect of this application, a beam management method is provided. The method includes:
A network device sends beam configuration information to a terminal device. The beam configuration information includes configuration information of one or more common beams. The network device sends beam activation information to the terminal device. The beam activation information is used to activate some of the one or more common beams. The network device sends first DCI to the terminal device. The first DCI indicates one or more of the some common beams. The network device sends second DCI to the terminal device.

If a time interval between a moment at which the network device sends second PDSCH data scheduled by the second DCI and a moment at which the network device sends the second DCI is less than a preset threshold, the network device receives the second PDSCH data from the network device through a fourth common beam.

The fourth common beam includes any one of the following: if a common beam indicated by the network device to the terminal device for a first time after the terminal device performs initial access or completes beam failure recovery has taken effect, the fourth common beam is a currently used common beam or a common beam that most recently takes effect or is most recently indicated; if the common beam indicated by the network device to the terminal device for the first time after the terminal device performs initial access does not take effect, the fourth common beam is an SSB beam used by the terminal device during the initial access; and if the common beam indicated by the network device to the terminal device for the first time after the terminal device completes beam failure recovery does not take effect, the fourth common beam is a beam reported by the terminal device to the network device during the beam failure recovery.

According to a twenty-eighth aspect of this application, a terminal device is provided. The terminal device includes:
a receiving unit, configured to: receive beam configuration information from a network device, where the beam configuration information includes configuration information of one or more common beams, and the one or more common beams include any one of the following: a separate common beam used for uplink transmission or downlink transmission and a j oint common beam used for uplink transmission and downlink transmission; receive beam activation information from the network device, where the beam activation information is used to activate some of the one or more common beams; and receive beam indication information from the network device, where the beam indication information indicates one or more of the some common beams.

In a possible implementation, the beam configuration information includes a configuration parameter of a first common beam;
if the configuration parameter of the first common beam includes a first parameter and does not include a second parameter, the first common beam is an uplink common beam; or
if the configuration parameter of the first common beam includes the second parameter and does not include the first parameter, the first common beam is a downlink common beam; or
if the configuration parameter of the first common beam includes the first parameter and the second parameter, the first common beam is a joint common beam, where
the first parameter includes at least one of the following: a reference signal resource used to determine an uplink transmission beam, spatial relation information, an uplink power control parameter, and an SRS resource; and
the second parameter includes at least one of the following: QCL information and a BWP parameter.

In another possible implementation, the beam indication information is carried in first DCI, and when a first condition is met, and a HARQ feedback result corresponding to the first DCI is an ACK, it indicates that the one or more common beams indicated by the beam indication information are successfully indicated; and
the first condition includes one or a combination of the following:
the terminal device reports that a common beam function is supported;
the network device configures the common beam function of the terminal device to an enabled state;
the first DCI schedules no PDSCH;
the first DCI schedules a PDSCH, and the terminal device performs HARQ feedback by using a dynamic HARQ-ACK codebook; and
one or more common beams indicated by the first DCI are different from a common beam currently used by the terminal device.

In another possible implementation, after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the first DCI or a HARQ feedback result fed back for the PDSCH scheduled by the first DCI.

In another possible implementation, the beam indication information is carried in first DCI, and when a second condition is met, and a HARQ feedback result corresponding to the first DCI is an ACK or a NACK, it indicates that the one or more common beams indicated by the beam indication information are successfully indicated; and
the second condition includes one or a combination of the following:
the terminal device reports that a common beam function is supported;
the network device configures the common beam function of the terminal device to an enabled state;
the first DCI schedules a physical downlink shared channel PDSCH;
the terminal device performs HARQ feedback by using a semi-static HARQ-ACK codebook; and
one or more common beams indicated by the first DCI are different from a common beam currently used by the terminal device.

In another possible implementation, after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the PDSCH scheduled by the first DCI.

In another possible implementation, the beam indication information is carried in the first DCI, the first DCI includes a common beam indication field, the common beam indication field indicates a common beam of one beam type, the terminal device further includes a processing unit, and the processing unit is configured to:
determine, based on the beam configuration information, the beam type of the common beam indicated by the common beam indication field;
determine, based on the beam activation information, the beam type of the common beam indicated by the common beam indication field; or
determine, based on the first DCI, the beam type of the common beam indicated by the common beam indication field.

In another possible implementation, the processing unit is specifically configured to:
if the network device configures a common beam mode of the terminal device to a joint common beam mode by using the beam configuration information, or the beam configuration information includes configuration information of the joint common beam, determine that the beam type indicated by the common beam indication field is the joint common beam; or
if the network device configures a common beam mode of the terminal device to a separate common beam mode by using the beam configuration information, or the beam configuration information includes configuration information of the separate common beam, determine that the beam type of the common beam indicated by the common beam indication field is the uplink common beam or the downlink common beam.

In another possible implementation, the processing unit is specifically configured to:
if the beam activation information is used to activate the j oint common beam, determine that the beam type of the common beam indicated by the common beam indication field is the joint common beam; or
if the beam activation information is used to activate the separate common beam, determine that the beam type of the common beam indicated by the common beam indication field is the uplink common beam or the downlink common beam.

In another possible implementation, first x bits or last x bits in the common beam indication field or a first indication field included in the first DCI indicates the beam type of the common beam indicated by the common beam indication field, where x is an integer greater than or equal to 1; and
the beam type includes any one of the following: the joint common beam, the uplink common beam, and the downlink common beam; or
the beam type includes any one of the following: the uplink common beam and the downlink common beam.

In another possible implementation, the beam indication information is carried in the first DCI, the first DCI includes a common beam indication field, the common beam indication field includes one or two subfields, the terminal device further includes a processing unit, and the processing unit is further configured to:
determine, based on a beam type of the common beam configured by using the beam configuration information, a quantity of subfields included in the common beam indication field and/or a beam type indicated by the subfield.

In another possible implementation, if the beam type configured by using the beam configuration information is the joint common beam, the common beam indication field includes one subfield, and the subfield indicates the joint common beam; or
if the beam type configured by using the beam configuration information is the separate common beam, the common beam indication field includes two subfields, and the two subfields indicate the uplink common beam and the downlink common beam.

In another possible implementation, if the common beam indication field includes two subfields, a first subfield in the two subfields indicates the uplink common beam, and a second subfield in the two subfields indicates the downlink common beam, or a first subfield in the two subfields indicates the downlink common beam, and a second subfield in the two subfields indicates the uplink common beam.

In another possible implementation, if the common beam indication field includes two subfields, the processing unit is further configured to:
determine, based on the beam configuration information, beam types respectively indicated by the two subfields;
determine, based on the beam activation information, beam types respectively indicated by the two subfields; or
determine, based on the first DCI, beam types respectively indicated by the two subfields.

In another possible implementation, the beam configuration information includes an uplink common beam set and a downlink common beam set, and the processing unit is specifically configured to:
determine, based on configuration rankings of the uplink common beam set and the downlink common beam set, the beam types respectively indicated by the two subfields; or
determine, based on set index rankings respectively corresponding to the uplink common beam set and the downlink common beam set, the beam types respectively indicated by the two subfields.

In another possible implementation, the processing unit is specifically configured to:
determine, based on arrangement rankings of an uplink common beam and a downlink common beam activated by using the beam activation information, the beam types respectively indicated by the two subfields.

In another possible implementation, the processing unit is specifically configured to:
determine, based on first x bits or last x bits in the common beam indication field or a second indication field included in the first DCI, a beam type indicated by a first subfield in the two subfields and a beam type indicated by a second subfield in the two subfields.

In another possible implementation, the terminal device further includes the processing unit, and the processing unit is further configured to:
if the beam activation information is used to activate one common beam, perform transmission through the common beam activated by using the beam activation information; or
if the beam activation information is used to activate a plurality of common beams, perform transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

In another possible implementation, the terminal device further includes the processing unit, and the processing unit is further configured to:
if the common beam indicated by the common beam indication information is the same as a second common beam, ignore the beam indication information, where
the second common beam includes any one of the following: the common beam currently used by the terminal device and a common beam that is most recently indicated to the terminal device or most recently takes effect.

In another possible implementation, the terminal device further includes the processing unit, and the processing unit is further configured to:
use K common beams as beams corresponding to K first resources or K first resource sets, where
the K common beams are in a one-to-one correspondence with the K first resources or the K first resource sets, each of the K first resource sets includes the first resource, and the K common beams are respectively used to transmit the corresponding first resources;
the K common beams are ranked based on indication rankings in the beam indication information or beam index rankings of the K common beams;
the K first resources or the K first resource sets are ranked based on resource configuration rankings or resource index rankings; and
the first resource includes any one of the following: a CSI-RS for which neither a repetition parameter nor a trs-Info parameter is configured, an SRS of a codebook type, an SRS of a non-codebook type, and a CSI-RS associated with the SRS of the non-codebook type.

In another possible implementation, the beam indication information is used by the network device to indicate a common beam to the terminal device for a first time after the terminal device performs initial access, and the terminal device further includes the processing unit; and
before the common beam indicated by the beam indication information takes effect, the processing unit is configured to:
perform transmission by using a synchronization signal and PBCH block SSB beam used during the initial access.

In another possible implementation, the beam indication information is used by the network device to indicate a common beam to the terminal device for a first time after beam failure occurs on the terminal device, and the terminal device further includes the processing unit; and
after the terminal device completes beam failure recovery, and before the common beam indicated by the beam indication information takes effect, the processing unit is configured to:
perform transmission through a beam reported by the terminal device to the network device in a beam failure recovery process.

In another possible implementation, the beam indication information is used by the network device to indicate a common beam to the terminal device for a first time after the terminal device performs initial access, and the terminal device further includes the processing unit;
after the terminal device performs initial access, and before the terminal device receives the beam activation information, the processing unit is further configured to:
perform transmission through an SSB beam used during the initial access; and
after the terminal device receives the beam activation information, and before the common beam indicated by the beam indication information takes effect, the processing unit is further configured to:
   perform transmission through a first common beam or a last common beam activated by using the beam activation information; or
   perform transmission through a common beam with a largest or smallest common beam indication field value in a common beam activated by using the beam activation information.

In another possible implementation, the beam indication information is carried in the first DCI, the first DCI further schedules first PDSCH data, the terminal device further includes the processing unit, and the processing unit is configured to:
if a moment at which the network device sends the first PDSCH data is earlier than a moment at which the common beam indicated by the first DCI takes effect, receive the first PDSCH data from the network device through a third common beam, where
the third common beam includes any one of the following:
   if the common beam indicated by the network device to the terminal device for the first time after the terminal device performs initial access or completes beam failure recovery has taken effect, the third common beam is the currently used common beam or the common beam that most recently takes effect or is most recently indicated;
   if the common beam indicated by the network device to the terminal device for the first time after the terminal device performs initial access does not take effect, the third common beam is the SSB beam used by the terminal device during the initial access; and
   if the common beam indicated by the network device to the terminal device for the first time after the terminal device completes beam failure recovery does not take effect, the third common beam is the beam reported by the terminal device to the network device during the beam failure recovery.

In another possible implementation, if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further includes the common beam indicated by the first DCI.

In another possible implementation, the receiving unit is further configured to:
receive second DCI from the network device; and
the terminal device further includes the processing unit, and the processing unit is configured to:
   if a time interval between a moment at which the network device sends second PDSCH data scheduled by the second DCI and a moment at which the network device sends the second DCI is less than the preset threshold, receive the second PDSCH data from the network device through a fourth common beam, where
   the fourth common beam includes any one of the following: if the common beam indicated by the network device to the terminal device for the first time after the terminal device performs initial access or completes beam failure recovery has taken effect, the fourth common beam is the currently used common beam or the common beam that most recently takes effect or is most recently indicated;
   if the common beam indicated by the network device to the terminal device for the first time after the terminal device performs initial access does not take effect, the fourth common beam is the SSB beam used by the terminal device during the initial access; and
   if the common beam indicated by the network device to the terminal device for the first time after the terminal device completes beam failure recovery does not take effect, the fourth common beam is the beam reported by the terminal device to the network device during the beam failure recovery.

According to a twenty-ninth aspect of this application, a network device is provided. The network device includes:
a sending unit, configured to: send beam configuration information to a terminal device, where the beam configuration information includes configuration information of one or more common beams, and the one or more common beams include any one of the following: a separate common beam used for uplink transmission or downlink transmission and a joint common beam used for uplink transmission and downlink transmission; send beam activation information to the terminal device, where the beam activation information is used to activate some of the one or more common beams; and send beam indication information to the terminal device, where the beam indication information indicates one or more of the some common beams.

In a possible implementation, the beam configuration information includes a configuration parameter of a first common beam;
if the configuration parameter of the first common beam includes a first parameter and does not include a second parameter, the first common beam is an uplink common beam; or
if the configuration parameter of the first common beam includes the second parameter and does not include the first parameter, the first common beam is a downlink common beam; or
if the configuration parameter of the first common beam includes the first parameter and the second parameter, the first common beam is a joint common beam, where
the first parameter includes at least one of the following: a reference signal resource used to determine an uplink transmission beam, spatial relation information, an uplink power control parameter, and an SRS resource; and
the second parameter includes at least one of the following: QCL information and a BWP parameter.

In another possible implementation, the beam indication information is carried in first DCI, and when a first condition is met, and a hybrid automatic repeat request HARQ feedback result corresponding to the first DCI is an ACK, it indicates that the one or more common beams indicated by the beam indication information are successfully indicated; and
the first condition includes one or a combination of the following:
the terminal device reports that a common beam function is supported;
the network device configures the common beam function of the terminal device to an enabled state;
the first DCI schedules no physical downlink shared channel PDSCH;
the first DCI schedules a PDSCH, and the terminal device performs HARQ feedback by using a dynamic hybrid automatic repeat request-acknowledgement HARQ-ACK codebook; and
one or more common beams indicated by the first DCI are different from a common beam currently used by the terminal device.

In another possible implementation, after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the first DCI or a HARQ feedback result fed back for the PDSCH scheduled by the first DCI.

In another possible implementation, the beam indication information is carried in first DCI, and when a second condition is met, and a HARQ feedback result corresponding to the first DCI is an ACK or a NACK, it indicates that the one or more common beams indicated by the beam indication information are successfully indicated; and
the second condition includes one or a combination of the following:
the terminal device reports that a common beam function is supported;
the network device configures the common beam function of the terminal device to an enabled state;
the first DCI schedules a PDSCH;
the terminal device performs HARQ feedback by using a semi-static HARQ-ACK codebook; and
one or more common beams indicated by the first DCI are different from a common beam currently used by the terminal device.

In another possible implementation, after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the PDSCH scheduled by the first DCI.

In another possible implementation, the beam indication information is carried in the first DCI, the first DCI includes a common beam indication field, and the common beam indication field indicates a common beam of one beam type; and
the beam type of the common beam indicated by the common beam indication field is determined by using the beam configuration information;
the beam type of the common beam indicated by the common beam indication field is determined by using the beam activation information; or
the beam type of the common beam indicated by the common beam indication field is determined by using the first DCI.

In another possible implementation, if the network device configures a common beam mode of the terminal device to a joint common beam mode by using the beam configuration information, or the beam configuration information includes configuration information of the j oint common beam, the beam type indicated by the common beam indication field is the joint common beam; or
if the network device configures a common beam mode of the terminal device to a separate common beam mode by using the beam configuration information, or the beam configuration information includes configuration information of the separate common beam, the beam type of the common beam indicated by the common beam indication field is the uplink common beam or the downlink common beam.

In another possible implementation, if the beam activation information is used to activate the joint common beam, the beam type of the common beam indicated by the common beam indication field is the joint common beam; or
if the beam activation information is used to activate the separate common beam, the beam type of the common beam indicated by the common beam indication field is the uplink common beam or the downlink common beam.

In another possible implementation, first x bits or last x bits in the common beam indication field or a first indication field included in the first DCI indicates the beam type of the common beam indicated by the common beam indication field, where x is an integer greater than or equal to 1; and
the beam type includes any one of the following: the joint common beam, the uplink common beam, and the downlink common beam; or
the beam type includes any one of the following: the uplink common beam and the downlink common beam.

In another possible implementation, the beam indication information is carried in the first DCI, the first DCI includes a common beam indication field, and the common beam indication field includes one or two subfields; and
a quantity of subfields included in the common beam indication field and/or a beam type indicated by the subfield are/is determined by using a beam type configured by using the beam configuration information.

In another possible implementation, if the beam type configured by using the beam configuration information is the joint common beam, the common beam indication field includes one subfield, and the subfield indicates the joint common beam; or
if the beam type configured by using the beam configuration information is the separate common beam, the common beam indication field includes two subfields, and the two subfields indicate the uplink common beam and the downlink common beam.

In another possible implementation, if the common beam indication field includes two subfields, a first subfield in the two subfields indicates the uplink common beam, and a second subfield in the two subfields indicates the downlink common beam, or a first subfield in the two subfields indicates the downlink common beam, and a second subfield in the two subfields indicates the uplink common beam.

In another possible implementation, if the common beam indication field includes two subfields, beam types respectively indicated by the two subfields are determined by using the beam configuration information, the beam activation information, or the first DCI.

In another possible implementation, the beam configuration information includes an uplink common beam set and a downlink common beam set; and
the beam types respectively indicated by the two subfields are determined based on configuration rankings of the uplink common beam set and the downlink common beam set; or
the beam types respectively indicated by the two subfields are determined based on set index rankings respectively corresponding to the uplink common beam set and the downlink common beam set.

In another possible implementation, the beam types respectively indicated by the two subfields are determined based on arrangement rankings of an uplink common beam and a downlink common beam activated by using the beam activation information.

In another possible implementation, the beam types respectively indicated by the two subfields are determined by using first x bits or last x bits in the common beam indication field or a second indication field included in the first DCI.

In another possible implementation, the beam indication information is carried in the first DCI, and if the first DCI does not include the common beam indication field, the network device further includes a processing unit, and the processing unit is configured to:
if the beam activation information is used to activate one common beam, perform transmission through the common beam activated by using the beam activation information; or
if the beam activation information is used to activate a plurality of common beams, perform transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

In another possible implementation, if the beam indication information indicates K common beams of a same beam type, and the network device configures K first resources or K first resource sets for the terminal device, the K common beams are beams corresponding to the K first resources or the K first resource sets;
the K common beams are in a one-to-one correspondence with the K first resources or the K first resource sets, each of the K first resource sets includes the first resource, and the K common beams are respectively used to transmit the corresponding first resources;
the K common beams are ranked based on indication rankings in the beam indication information or beam index rankings of the K common beams;
the K first resources or the K first resource sets are ranked based on resource configuration rankings or resource index rankings; and
the first resource includes any one of the following: a CSI-RS for which neither a repetition parameter nor a trs-Info parameter is configured, an SRS of a codebook type, an SRS of a non-codebook type, and a CSI-RS associated with the SRS of the non-codebook type.

In another possible implementation, the beam indication information is used by the network device to indicate a common beam to the terminal device for a first time after the terminal device performs initial access, the network device further includes the processing unit, and before the common beam indicated by the beam indication information takes effect, the processing unit is configured to:
perform transmission with the terminal device by using a synchronization signal and PBCH block SSB beam used by the terminal device during the initial access.

In another possible implementation, the beam indication information is used by the network device to indicate a common beam to the terminal device for a first time after beam failure occurs on the terminal device, and the network device further includes the processing unit; and
after the terminal device completes beam failure recovery, and before the common beam indicated by the beam indication information takes effect, the processing unit is configured to:
perform transmission through a beam reported by the terminal device to the network device in a beam failure recovery process.

In another possible implementation, the beam indication information is used by the network device to indicate a common beam to the terminal device for a first time after the terminal device performs initial access, and the network device further includes the processing unit;
after the terminal device performs initial access, and before the network device sends the beam activation information, the processing unit is configured to:
perform transmission through an SSB beam used during the initial access; and
after the network device sends the beam activation information, and before the common beam indicated by the beam indication information takes effect, the processing unit is further configured to:
   perform transmission through a first common beam or a last common beam activated by using the beam activation information; or
   perform transmission through a common beam with a largest or smallest common beam indication field value in a common beam activated by using the beam activation information.

In another possible implementation, the beam indication information is carried in the first DCI, the first DCI further schedules first PDSCH data, the network device further includes the processing unit, and the processing unit is further configured to:
if a moment at which the network device sends the first PDSCH data is earlier than a moment at which the common beam indicated by the first DCI takes effect, send the first PDSCH data to the network device through a third common beam, where
the third common beam includes any one of the following:
   if the common beam indicated by the network device to the terminal device for the first time after the terminal device performs initial access or completes beam failure recovery has taken effect, the third common beam is the currently used common beam or a common beam that most recently takes effect or is most recently indicated;
   if the common beam indicated by the network device to the terminal device for the first time after the terminal device performs initial access does not take effect, the third common beam is the SSB beam used by the terminal device during the initial access; and
   if the common beam indicated by the network device to the terminal device for the first time after the terminal device completes beam failure recovery does not take effect, the third common beam is the beam reported by the terminal device to the network device during the beam failure recovery.

In another possible implementation, if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further includes the common beam indicated by the first DCI.

In another possible implementation, the sending unit is further configured to:
send second DCI to the terminal device; and
the network device further includes the processing unit, and the processing unit is configured to:
   if a time interval between a moment at which the network device sends second PDSCH data scheduled by the second DCI and a moment at which the network device sends the second DCI is less than the preset threshold, send the second PDSCH data to the terminal device through a fourth common beam, where
   the fourth common beam includes any one of the following:
      if the common beam indicated by the network device to the terminal device for the first time after the terminal device performs initial access or completes beam failure recovery has taken effect, the fourth common beam is the currently used common beam or the common beam that most recently takes effect or is most recently indicated;
      if the common beam indicated by the network device to the terminal device for the first time after the terminal device performs initial access does not take effect, the fourth common beam is the SSB beam used by the terminal device during the initial access; and
      if the common beam indicated by the network device to the terminal device for the first time after the terminal device completes beam failure recovery does not take effect, the fourth common beam is the beam reported by the terminal device to the network device during the beam failure recovery.

According to a thirtieth aspect of this application, a communication apparatus is provided. The communication apparatus includes a processor and a memory. The memory stores a computer program or computer instructions, and the processor is configured to invoke and run the computer program or the computer instructions stored in the memory, so that the processor implements any implementation of any one of the first aspect, the third aspect, the fifth aspect, the seventh aspect, the ninth aspect, the eleventh aspect, the thirteenth aspect, the fifteenth aspect, the sixteenth aspect, the eighteenth aspect, the twentieth aspect, the twenty-second aspect, the twenty-fourth aspect, and the twenty-sixth aspect.

Optionally, the communication apparatus further includes a transceiver, and the processor is configured to control the transceiver to receive and send a signal.

According to a thirty-first aspect of this application, a communication apparatus is provided. The communication apparatus includes a processor and a memory. The memory stores a computer program or computer instructions, and the processor is configured to invoke and run the computer program or the computer instructions stored in the memory, so that the processor implements any implementation of any one of the second aspect, the fourth aspect, the sixth aspect, the eighth aspect, the tenth aspect, the twelfth aspect, the fourteenth aspect, the seventeenth aspect, the nineteenth aspect, the twenty-first aspect, the twenty-third aspect, the twenty-fifth aspect, and the twenty-seventh aspect.

Optionally, the communication apparatus further includes a transceiver, and the processor is configured to control the transceiver to receive and send a signal.

According to a thirty-second aspect of this application, a computer program product including instructions is provided. When the computer program product is run on a computer, the computer is enabled to perform any implementation of any one of the first aspect to the twenty-seventh aspect.

According to a thirty-third aspect of this application, a computer-readable storage medium is provided, and includes computer instructions. When the instructions are run on a computer, the computer is enabled to perform any implementation of any one of the first aspect to the twenty-seventh aspect.

According to a thirty-fourth aspect of this application, a chip apparatus is provided, and includes a processor, configured to invoke a computer program or computer instructions in a memory, so that the processor performs any implementation of any one of the first aspect to the twenty-seventh aspect.

Optionally, the processor is coupled to the memory by using an interface.

According to a thirty-fifth aspect of this application, a communication system is provided. The communication system includes the terminal device according to the twenty-eighth aspect and the communication apparatus according to the twenty-ninth aspect.

### BRIEF DESCRIPTION OF DRAWINGS

FIG. 1 is a schematic diagram of a wireless communication system to which a beam management method is applicable according to an embodiment of this application;
FIG. 2 is another schematic diagram of a wireless communication system to which beam management is applicable according to an embodiment of this application;
FIG. 3 is a schematic diagram of a structure of a medium access control-control element (medium access control-control element, MAC CE) that is used to activate a transmission configuration indicator (transmission configuration index, TCI) and to which a beam management method is applicable according to an embodiment of this application;
FIG. 4 is an example diagram of a beam indication method to which a beam management method is applicable according to an embodiment of this application;
FIG. 5 is a schematic diagram of an embodiment of a beam management method according to an embodiment of this application;
FIG. 6 is a schematic diagram of a structure of a MAC CE according to a beam management method according to an embodiment of this application;
FIG. 7 is a schematic diagram of another embodiment of a beam management method according to an embodiment of this application;
FIG. 8 is a schematic diagram of another embodiment of a beam management method according to an embodiment of this application;
FIG. 9 is a schematic diagram of another embodiment of a beam management method according to an embodiment of this application;
FIG. 10 is a schematic diagram of another embodiment of a beam management method according to an embodiment of this application;
FIG. 11 is a schematic diagram of another embodiment of a beam management method according to an embodiment of this application;
FIG. 12 is a schematic diagram of another embodiment of a beam management method according to an embodiment of this application;
FIG. 13 is a schematic diagram of another embodiment of a beam management method according to an embodiment of this application;
FIG. 14 is a schematic diagram of another embodiment of a beam management method according to an embodiment of this application;
FIG. 15 is a schematic diagram of another embodiment of a beam management method according to an embodiment of this application;
FIG. 16A is a schematic diagram of another embodiment of a beam management method according to an embodiment of this application;
FIG. 16B is a schematic diagram of a scenario of a beam management method according to an embodiment of this application;
FIG. 17A is a schematic diagram of another embodiment of a beam management method according to an embodiment of this application;
FIG. 17B is a schematic diagram of another scenario of a beam management method according to an embodiment of this application;
FIG. 18 is a schematic diagram of a structure of a communication apparatus according to an embodiment of this application;
FIG. 19 is another schematic diagram of a structure of a communication apparatus according to an embodiment of this application;
FIG. 20 is another schematic diagram of a structure of a communication apparatus according to an embodiment of this application;
FIG. 21 is another schematic diagram of a structure of a communication apparatus according to an embodiment of this application; and
FIG. 22 is another schematic diagram of a structure of a communication apparatus according to an embodiment of this application.

### DESCRIPTION OF EMBODIMENTS

The technical solutions in this application are described below with reference to the accompanying drawings.

The technical solutions in embodiments of this application are applicable to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and a universal mobile telecommunications system (universal mobile telecommunications system, UMTS).

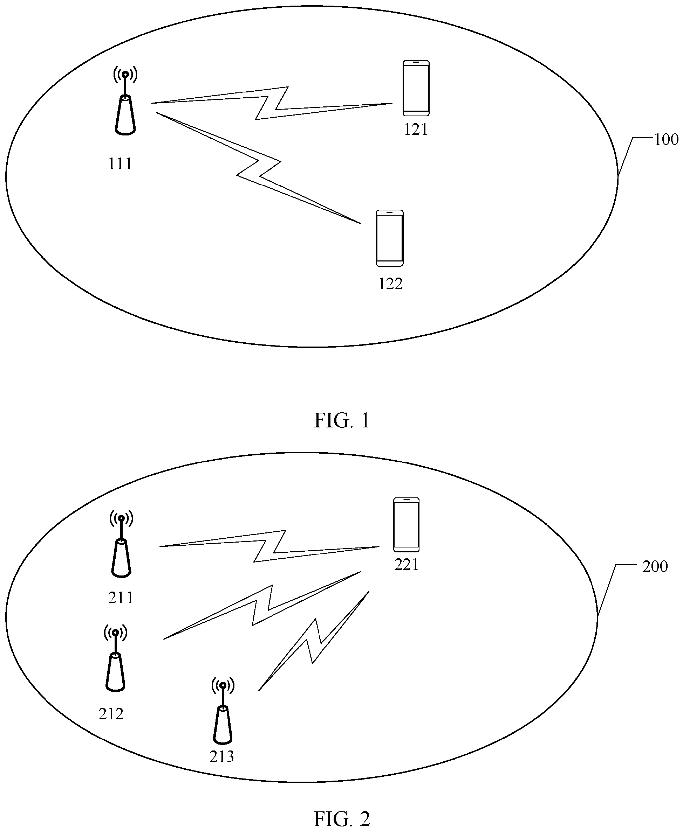

For ease of understanding embodiments of this application, a communication system to which embodiments of this application are applicable is first described in detail with reference to FIG. 1 and FIG. 2.

FIG. 1 is a schematic diagram of a wireless communication system 100 to which embodiments of this application are applicable. As shown in FIG. 1, the wireless communication system 100 may include at least one network device, for example, a network device 111 shown in FIG. 1. The wireless communication system 100 may further include at least one terminal device, for example, a terminal device 121 and a terminal device 122 shown in FIG. 1. A plurality of antennas may be configured for each of the network device and the terminal device. The network device and the terminal device may communicate with each other by using a multi-antenna technology.

FIG. 2 is a schematic diagram of a wireless communication system 200 to which embodiments of this application are applicable. As shown in FIG. 2, the wireless communication system 200 may include at least one network device, for example, network devices 211, 212, and 213 shown in FIG. 2. The wireless communication system 200 may further include at least one terminal device, for example, a terminal device 221 shown in FIG. 2. A plurality of antennas may be configured for each of the network device and the terminal device. The network device and the terminal device may communicate with each other by using a multi-antenna technology.

It should be further understood that the network device in the wireless communication system may be any device that has a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the device may be a gNB or a transmission point (a TRP or a TP) in a 5G system such as an NR system, one antenna panel or a group of antenna panels (including a plurality of antenna panels) of a base station in a 5G system, or a network node, for example, a baseband unit (BBU) or a distributed unit (distributed unit, DU), that forms a gNB or a transmission point.

In some deployments, the gNB may include a central unit (centralized unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing functions, and functions related to an active antenna. Information at the RRC layer is eventually converted into information at the PHY layer, or is converted from information at the PHY layer. Therefore, in this architecture, higher layer signaling such as RRC layer signaling may be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. It should be further understood that the terminal device in the wireless communication system may also be referred to as user equipment (user equipment, UE), an access terminal, a subscriber unit, a subscriber station, a mobile station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application.

For ease of understanding embodiments of this application, several terms in this application are first briefly described below.

### 1. Beam

The beam may be represented in an NR protocol as a spatial domain filter (spatial domain filter), or may be referred to as a spatial filter (spatial filter), a spatial domain parameter (spatial domain parameter), a spatial parameter (spatial parameter), a spatial domain setting (spatial domain setting), a spatial setting (spatial setting), quasi co-location (quasi co-location, QCL) information, a QCL assumption, a QCL indication, or the like. The beam may be indicated by using a TCI-state parameter for transmission, or may be indicated by using a spatial relation parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI-state (including an uplink TCI-state and a downlink TCI-state), the spatial relation, or the like. The terms are equivalent to each other. Alternatively, the beam may be replaced with another term representing the beam. This is not limited in this application.

A beam used to send a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a TCI-state.

A beam used to receive a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation, an uplink TCI-state, or an SRS resource (representing a transmission beam using the SRS). Therefore, the uplink beam may alternatively be replaced with the SRS resource.

The transmission beam may refer to distribution of signal strength formed in different spatial directions after a signal is transmitted through an antenna. The reception beam may refer to distribution of signal strength that is of a radio signal received from an antenna and that is in different spatial directions.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital beamforming technology, a hybrid analog beamforming technology, or the like.

The beam usually corresponds to a resource. For example, during beam measurement, a network device measures different beams by using different resources, and the network device knows quality of the corresponding beams when a terminal device feeds back measured resource quality. During data transmission, beam information is indicated by using a resource corresponding to the beam information. For example, the network device indicates information about a physical downlink shared channel (physical downlink sharing channel, PDSCH) beam of the terminal device by using a TCI field in DCI.

In a possible implementation, a plurality of beams having a same or similar communication feature are considered as one beam. One beam may include one or more antenna ports, and is used to transmit a data channel, a control channel, a sounding signal, and the like. The one or more antenna ports forming the beam may be considered as one antenna port set.

### 2. TCI-state (indicating a downlink beam)

A network device may generate different beams that point to different transmission directions. In downlink data transmission, when sending data to a terminal device by using a specific beam, the network device needs to notify the terminal device of information about the transmission beam used by the network device. In this way, the terminal device can receive, by using a reception beam corresponding to the transmission beam, the data sent by the network device. In a 3GPP R15 protocol or a 3GPP R16 protocol, the network device indicates, by using a TCI field in DCI, related information about the transmission beam used by the network device to the terminal device. Specifically, the TCI field has a size of 3 bits, and may specifically represent eight different field values (codepoint). Each value of the TCI field corresponds to one TCI-state index, and the TCI-state index may uniquely identify a TCI-state. The TCI-state includes several parameters, and the related information about the transmission beam may be determined by using these parameters. The TCI-state is configured by the network device for each terminal device. A structure of the TCI-state is as follows:

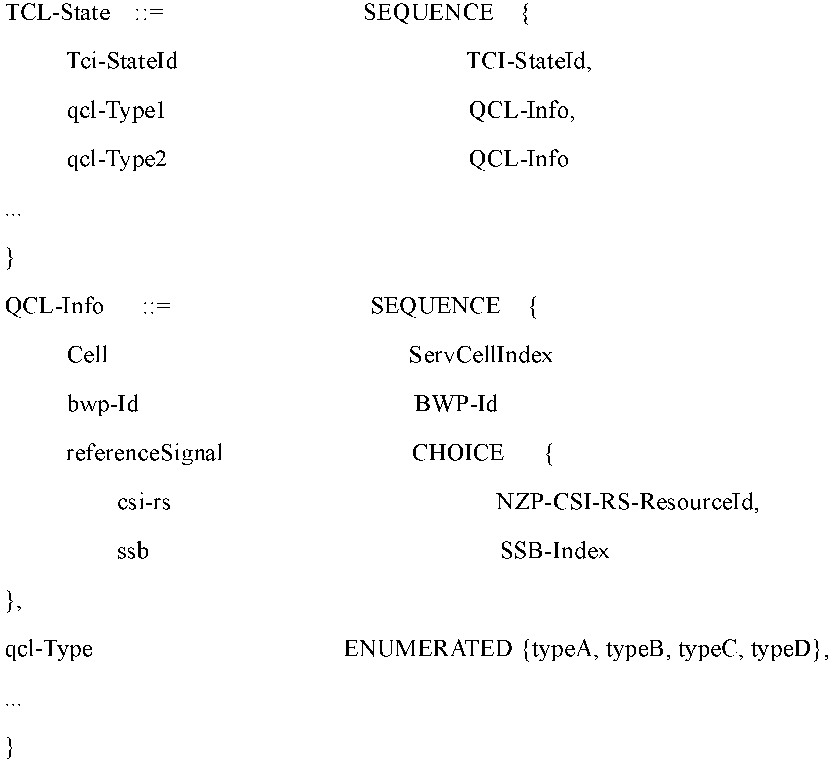

Each TCI-state includes an index tci-StateId of the TCI-state and two pieces of QCL-Info. Each piece of QCL-Info includes a cell (cell) field and a bwp-Id that represent a bandwidth part (bandwidth part, BWP) of a cell to which the TCI-state is applied. That is, different QCL-Info may be configured for different BWPs of different cells or a same cell. The QCL-Info further includes a reference signal (reference signal) used to represent a reference signal resource with which a quasi co-location (quasi co-location, QCL) relationship is formed. In the R15/R16 protocol, the beam is usually replaced with another term. For example, in both data transmission and channel measurement, the beam corresponds to a reference signal resource, and one beam corresponds to one reference signal resource. Therefore, the representing a reference signal resource with which a QCL relationship is formed herein is essentially representing a beam with which a QCL relationship is formed. The QCL relationship means that two reference signal resources (or two antenna ports, where the antenna ports and the reference signal resources are also in a one-to-one correspondence) have some same spatial parameters. Specifically, the spatial parameters that are the same depend on a type, namely, another field qcl-Type of the QCL-Info, of the QCL-Info. There may be four values for qcl-Type: {typeA, typeB, typeC, typeD}. Herein, typeD is used as an example, and typeD indicates that the two reference signal resources have same spatial reception parameter information. That is, two beams correspond to a same reception beam. A maximum of one of the two pieces of QCL-Info included in the TCI-state can be of TypeD.

The following uses an example to describe in detail how the network device indicates information about a reception beam corresponding to a data transmission beam to the terminal device by using the TCI-state based on the R15/R16 protocol. This includes TCI-state configuration, activation, and indication.

Transmission configuration indicator state (transmission configuration index state, TCI-state) configuration: The network device configures a plurality of TCI-states for the terminal device by using radio resource control (radio resource control, RRC) signaling. Each of these TCI-states includes QCL-Info whose type is typeD. Alternatively, the network device may configure TCI-states that do not include QCL-Info whose type is typeD. However, these TCI-states do not indicate the data transmission beam, and therefore are not further described herein.

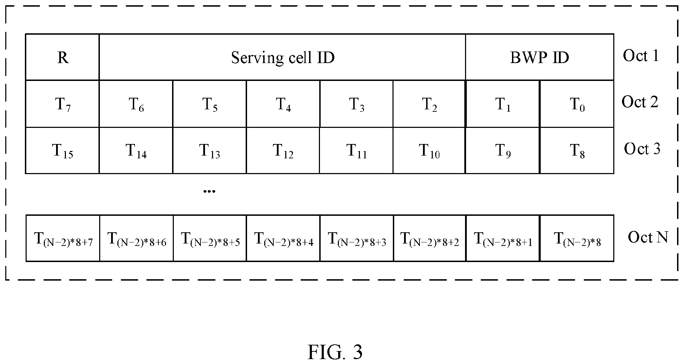

TCI-state activation: After configuring the plurality of TCI-states, the network device further needs to activate eight of the TCI-states by using a MAC CE. The eight TCI-states are in a one-to-one correspondence with the eight values of the TCI field in the DCI. That is, the eight TCI-states corresponding to the eight values of the TCI field in the DCI are determined by using medium access control MAC control element CE signaling. FIG. 3 is a schematic diagram of a structure of a MAC CE that is used to activate a TCI and to which an embodiment of this application is applicable. As shown in FIG. 3, fields T0 to T(N-2)^{∗}8+07 respectively correspond to TCI-states that are configured in a first step and whose indices are respectively 0 to (N-2)^{∗}8+7. A size of each field is 1 bit, and a value may be 0 or 1. The value 1 indicates that the TCI-state is activated, and the value 0 indicates that the TCI-state is not activated. Theoretically, each MAC CE may include eight activation fields whose values are 1, and values of all other fields are 0. TCI-states corresponding to the eight fields whose values are 1 are the eight TCI-states corresponding to the eight values of the TCI field in the DCI. For example, a smallest value 000 of the TCI field corresponds to a TCI-state with a smallest activation index in the MAC CE, and so on. There is a one-to-one correspondence. There are many types of MAC CEs. In addition to the MAC CE used to activate the TCI-state, there are many MAC CEs used for other purposes. This application relates only to a MAC CE used to activate the TCI-state/a TCI-state combination. Therefore, unless otherwise specified, the MAC CE in this application is such a MAC CE.

TCI-state indication: The network device indicates a specific TCI-state by using the TCI field in the DCI. For example, if a value of the TCI field in the DCI sent by the network device to the terminal device is 000, it indicates that a TCI-state corresponding to 000 is used for the data transmission beam, and if a reference signal included in QCL-Info whose type is typeD in the TCI-state is a channel state information-reference signal (channel state information-reference signal, CSI-RS) whose index is #1, it indicates that a beam used for data transmission is the same as a reception beam corresponding to the CSI-RS whose index is #1. The reception beam corresponding to the CSI-RS whose index is #1 may be determined by using a beam measurement procedure, and is known to the terminal device. Therefore, the terminal device may determine, based on a specific value of the TCI field, a reception beam corresponding to the data transmission beam, and then receive data by using the corresponding reception beam.

### 3. Spatial relation (indicating an uplink beam)

In a current protocol, a transmission beam for uplink transmission is indicated by using the spatial relation. A function of the spatial relation is similar to that of a TCI-state, and is used to notify a terminal device of a transmission beam used for uplink transmission.

The spatial relation also needs to be configured first by using RRC. A structure configured for the spatial relation is as follows:

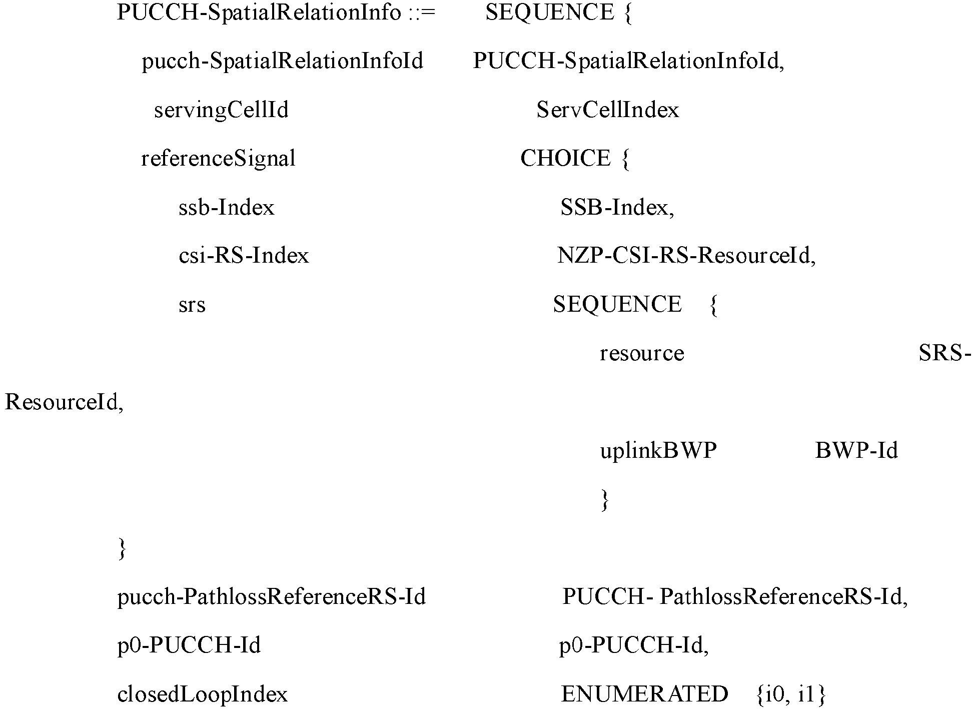

A spatial relation identifier, a cell identifier, a target reference signal resource, a path loss measurement reference signal, a power control parameter, and the like are included. The target reference signal resource (which may be one of an SRS, an SSB, and a CSI-RS) indicates a corresponding uplink beam. If a spatial relation #1 is used for uplink transmission, and the spatial relation #1 includes a target reference signal resource #2, it indicates that a transmission beam used for uplink transmission is a transmission beam or a reception beam of the target reference signal. For example, when the target reference signal resource is an uplink resource SRS, it indicates that the transmission beam used for uplink transmission is a transmission beam of the SRS (the transmission beam of the SRS is known). For another example, when the target reference signal resource is a downlink resource such as an SSB or a CSI-RS, it indicates that the transmission beam used for uplink transmission is a reception beam of the SSB or a reception beam of the CSI-RS (the reception beam of the SSB or the reception beam of the CSI-RS is known).

A network device may configure a plurality of spatial relations for the terminal device. Then, one of the spatial relations is activated by using a MAC CE, to perform corresponding data transmission. Uplink transmission includes a physical uplink control channel (physical uplink control channel, PUCCH), a sounding reference signal (sounding reference signal, SRS), a physical uplink shared channel (physical uplink sharing channel, PUSCH), and the like. All of the physical uplink control channel, the sounding reference signal, the physical uplink shared channel, and the like require corresponding spatial relations. The spatial relation of the PUCCH is indicated by using MAC CE signaling. The spatial relation of the SRS is also indicated by using MAC CE signaling. During PUSCH transmission, a specific SRS is associated, and a spatial relation of the SRS is used for transmission.

### 4. Panel

The panel is an antenna panel, and may be an antenna panel of a network device, or may be an antenna panel of a terminal device. There are usually one or more antennas on one antenna panel. These antennas are arranged into an antenna array to perform beamforming, so as to form an analog beam. The antenna array may generate analog beams pointing to different directions. That is, a plurality of analog beams may be formed on each antenna panel, and an analog beam, on the antenna panel, that is best for use may be determined through beam measurement. A plurality of antenna panels may be configured for the terminal device. These antenna panels may be distributed at different locations, and face different directions. In this way, it can be ensured that regardless of a direction that the terminal device faces, at least one antenna panel faces the network device, and data transmission can be performed with the network device. The terminal device may simultaneously enable all the antenna panels for transmission. Alternatively, to reduce power consumption of the terminal device, the terminal device may perform transmission for each time by using only one antenna panel, and another unused antenna panel may be disabled. Whether the antenna panel of the terminal device is in an enabled state or a disabled state usually needs to be notified to the network device. In other words, the terminal device and the network device usually need to exchange status information of the antenna panel.

In embodiments of this application, unless otherwise specified, each antenna panel is the antenna panel of the terminal device. The antenna panel may alternatively be represented by a panel index or the like. In addition, the antenna panel may be implicitly represented in another manner. For example, the antenna panel may be represented by using an antenna port (for example, a CSI-RS port, an SRS port, a demodulation reference signal (demodulation reference signal, DMRS) port, a phase tracking reference signal (phase tracking reference signal, PTRS) port, a CRS port, a time/frequency tracking reference signal (tracking reference signal, TRS) port, or an SSB port) or an antenna port group, may be represented by using a resource (for example, a CSI-RS resource, an SRS resource, a DMRS resource, a PTRS resource, a cell-specific reference signal (cell reference signal, CRS) resource, a time/frequency tracking reference signal (tracking reference signal, TRS) resource, or an SSB resource) or a resource group, may be represented by using a channel (for example, a PUCCH, a PUSCH, a physical random access channel (physical random access channel, PRACH), a physical downlink control channel (physical downlink sharing channel, PDSCH), a physical downlink control channel (physical downlink control channel, PDCCH), or a physical broadcast channel (physical broadcast channel, PBCH)), may be represented by using a beam, QCL, a TCI-state, a spatial relation, or an index configured in QCL, a TCI-state, or a spatial relation, or may be represented by using a beam group, a QCL group, a TCI-state group, or a spatial relation group. That is, an identifier of the antenna panel/panel in this application may be replaced with an identifier of the foregoing content.

In embodiments of this application, the network device is an apparatus deployed in a radio access network to provide a wireless communication function to the terminal device. The network device may include macro base stations, micro base stations (also referred to as small cells), relay stations, and access points in various forms. In systems using different radio access technologies, names of the network device may vary, for example, a base transceiver station (base transceiver station, BTS) in a global system for mobile communications (global system for mobile communications, GSM) or a code division multiple access (code division multiple access, CDMA) network, a NodeB (NodeB, NB) in wideband code division multiple access (wideband code division multiple access, WCDMA), or an eNB or an eNodeB (evolutional NodeB) in long term evolution (long term evolution, LTE). Alternatively, the network device may be a radio controller in a cloud radio access network (cloud radio access network, CRAN) scenario. Alternatively, the network device may be a base station device in a future 5G network or a network device in a future evolved public land mobile network (public land mobile network, PLMN). Alternatively, the network device may be a wearable device or a vehicle-mounted device. Alternatively, the network device may be a transmission and reception point (transmission and reception point, TRP).

The terminal device in embodiments of this application may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or the like.

### 5. Common beam

In the conventional technology, each channel is indicated by using a separate beam. For example, beams of a PDCCH and a PDSCH are indicated by using a TCI-state, and beams of a PUCCH and a PUSCH are indicated by using a spatial relation. Each channel corresponds to one beam. In this application, a common beam is defined for a plurality of uplink and downlink channels.

The common beam is a same beam jointly used for a plurality of channels, a plurality of types of channels, a plurality of reference signals, and/or a plurality of types of reference signals. The plurality of channels or the plurality of types of channels include but are not limited to at least one of the following channels: the PDCCH, the PDSCH, the PUCCH, the PUSCH, and a PRACH. The reference signal includes but is not limited to at least one of the following signals: an SSB, a CSI-RS, a DMRS, a phase tracking reference signal (phase tracking reference signal, PTRS), a TRS, an SRS, and the like.

For example, common beams may be specifically classified into the following three types:
a joint (joint) common beam: used for simultaneous transmission of one or more uplink and downlink channels or one or more uplink and downlink reference signals, for example, the PDCCH, the PDSCH, the PUCCH, and the PUSCH;
an uplink common beam: used for simultaneous transmission of a plurality of uplink channels, used for simultaneous transmission of a plurality of types of uplink channels, and/or used for simultaneous transmission of one or more uplink reference signals, for example, the PUCCH, the PUSCH, and the SRS; and
a downlink common beam: used for simultaneous transmission of a plurality of downlink channels, used for simultaneous transmission of a plurality of types of downlink channels, and/or used for simultaneous transmission of one or more downlink reference signals, for example, the PDCCH, the PDSCH, and the CSI-RS.

Unless otherwise specified, a subsequently described common beam may be any one of the common beams.

Alternatively, common beams may be classified into the following two types:
a joint common beam: used for both uplink transmission and downlink transmission, for example, used for simultaneous transmission of one or more uplink channels or reference signals and used for simultaneous transmission of one or more downlink channels or reference signals, for example, the PDCCH, the PDSCH, the PUCCH, and the PUSCH; and
a separate (separate) common beam: A common beam obtained by combining an uplink common beam and a downlink common beam into one type of common beam is referred to as the common beam. For example, the separate common beam may be an uplink common beam or a downlink common beam.

Unless otherwise specified, a subsequently described common beam may be any one of the common beams.

### Quantity of common beams

A network device may configure, activate, and indicate a common beam for a terminal device, and the common beam is a joint common beam. The network device may configure, activate, and indicate a plurality of common beams for the terminal device. The plurality of common beams are common beams of different types, for example, an uplink common beam and a downlink common beam, or a control channel common beam and a data channel common beam. The plurality of common beams may alternatively be common beams of a same type, that is, a plurality of common beams of a same type may be configured, activated, and indicated for the terminal device.

### Form of the common beam

The common beam may be a newly defined structure (different from existing structures of a TCI-state and a spatial relation). For example, the common beam includes beam indication-related information, including but not limited to one or more of the following: a common beam ID, a logical cell ID (cell ID), a physical cell ID, a frequency component ID (bandwidth part, BWP), a reference signal resource for beam determining, a quasi co-location (Quasi co-location, QCL) type, and an uplink power control-related parameter (for example, a path loss measurement reference signal resource, p0, and a closed-loop index).

### Application range of the common beam

The common beam may be at a cell level, that is, the common beam is used for transmission of a plurality of channels in one cell. The common beam may be at a BWP level, and is used for transmission of a plurality of beams in one BWP. The common beam may span different cells, that is, used for transmission of a plurality of channels in a plurality of cells. The plurality of cells may be a plurality of cells on one frequency band (band). Alternatively, the plurality of cells may be a plurality of cells on different frequency bands. The common beam may be at a control resource set (control resource set, CORESET) level, that is, a same common beam is used for all PDCCHs corresponding to a CORESET, all PDSCHs scheduled by the PDCCHs of the CORESET, all PUSCHs scheduled by the PDCCHs of the CORESET, and/or PUCCHs/PUSCHs for transmitting ACKs/NACKs of the PDSCHs scheduled by the PDCCHs of the CORESET.

The common beam is also represented by using a TCI-state or a spatial relation. For example, the downlink common beam is represented by using the TCI-state, and the uplink common beam is represented by using the spatial relation.

That is, the common beam in this application may be represented in a protocol in a form of the TCI-state or the spatial relation, another parameter indicating an uplink transmission beam, or another parameter indicating a downlink transmission beam.

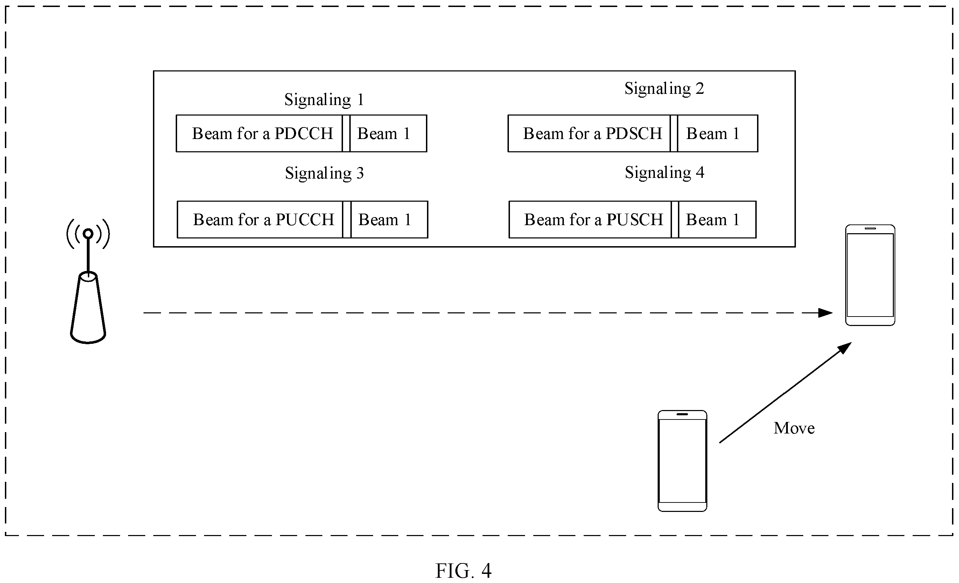

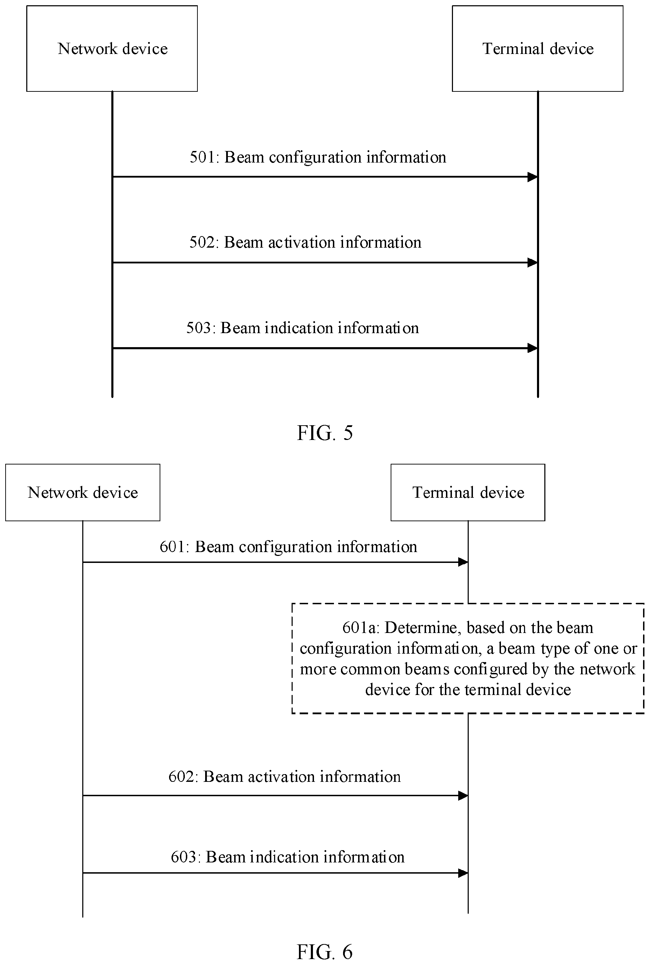

Compared with the common beam, a beam, for example, a TCI-state, a spatial relation, and a spatial filter, defined in a 3GPP R15 protocol and a 3GPP R16 protocol is referred to as an ordinary beam. The ordinary beam is used for transmission of a single channel, and cannot be used for simultaneous transmission of a plurality of channels or a plurality of reference signals. The network device needs to separately indicate a common beam for each channel for transmission. FIG. 4 is an example diagram of a beam indication method to which an embodiment of this application is applicable. As shown in FIG. 4, the network device respectively indicates beams for the PDCCH, the PDSCH, the PUCCH, and the PUSCH by using different signaling. Different signaling is used for each type of channel. Consequently, there are high signaling overheads. However, generally, beams corresponding to a plurality of different channels are usually the same, and there is no need to separately indicate the beams, to avoid a waste of signaling overheads. FIG. 5 is a schematic diagram of an embodiment of a beam management method according to an embodiment of this application. In FIG. 5, the beam management method includes the following steps.

501: A network device sends beam configuration information to a terminal device. Correspondingly, the terminal device receives the beam configuration information from the network device.

The beam configuration information includes configuration information of one or more common beams.

Specifically, the network device may send the beam configuration information to the terminal device by using radio resource control (radio resource control, RRC). The beam configuration information includes a configuration parameter of the one or more common beams. The configuration parameter of the one or more common beams included in the beam configuration information may be delivered to the terminal device by using one or more pieces of RRC.

For a beam type of the one or more common beams, refer to the foregoing related descriptions of the common beam type.

502: The network device sends beam activation information to the terminal device. Correspondingly, the terminal device receives the beam activation information from the network device.

The beam activation information is used to activate some of the one or more common beams.

Specifically, the network device sends the beam activation information to the terminal device by using a MAC CE, to activate a group of common beams. The group of common beams is a common beam in the one or more common beams in step 501. The group of common beams includes one or more common beams.

For example, the MAC CE includes beam indices respectively corresponding to the one or more common beams included in the group of common beams. Alternatively, the MAC CE includes a bitmap, and the bitmap is used to identify the group of common beams.

503: The network device sends beam indication information to the terminal device. Correspondingly, the terminal device receives the beam indication information from the network device.

The beam indication information indicates one or more of the some common beams. Specifically, the network device sends the beam indication information to the terminal device by using first DCI. The first DCI indicates one or more common beams in the group of common beams activated by the MAC C.

The terminal device performs transmission through the common beam indicated by the beam indication information. If the beam indication information indicates a downlink common beam, the terminal device uses the common beam indicated by the beam indication information as a beam of a downlink channel or a downlink reference signal. If the beam indication information indicates an uplink common beam, the terminal device uses the common beam indicated by the beam indication information as a beam of an uplink channel or an uplink reference signal. If the beam indication information indicates a j oint common beam, the terminal device uses the common beam indicated by the beam indication information as a beam of an uplink channel, an uplink reference signal, a downlink channel, and a downlink reference signal.

In the embodiment shown in FIG. 5, the network device configures one or more common beams for the terminal device by using the beam configuration information, the network device activates some of the one or more common beams for the terminal device by using the beam activation information, and then the network device indicates one or more of the some common beams to the terminal device by using the beam indication information. The common beam is a same beam jointly used for a plurality of channels or a plurality of signals. Therefore, a corresponding beam may be uniformly indicated for the plurality of channels or the plurality of signals. In the embodiment shown in FIG. 5, efficient beam indication is implemented, a complex indication instruction is avoided, and extra overheads are saved.

This application provides Embodiment 1. A technical solution in Embodiment 1 provided in this application is described below with reference to FIG. 6.

FIG. 6 is a schematic diagram of another embodiment of a beam management method according to an embodiment of this application. In FIG. 6, the beam management method includes the following steps.

601: A network device sends beam configuration information to a terminal device. Correspondingly, the terminal device receives the beam configuration information from the network device.

Step 601 is similar to step 501 in the embodiment shown in FIG. 5. For details, refer to the related descriptions of step 501 in the embodiment shown in FIG. 5. Details are not described herein.

In some possible implementations, one or more common beams configured by using the beam configuration information for the terminal device include a first common beam. The beam configuration information includes a configuration parameter of the first common beam. If the configuration parameter of the first common beam includes a first parameter and does not include a second parameter, the first common beam is an uplink common beam. If the configuration parameter of the first common beam includes the second parameter and does not include the first parameter, the first common beam is a downlink common beam. If the configuration parameter of the first common beam includes the first parameter and the second parameter, the first common beam is a joint common beam.

The first parameter includes at least one of the following: a reference signal resource used to determine an uplink transmission beam, spatial relation information, an uplink power control parameter, a sounding reference signal resource, a spatial relation parameter, and first QCL information. The first QCL information includes QCL information of typeE or typeF.

The second parameter includes at least one of the following: second QCL information and a bandwidth part BWP parameter. The second QCL information includes QCL information of any one of typeA, typeB, typeC, and typeD.

For example, the uplink power control parameter includes a path loss measurement resource, a p0 parameter, and a closed-loop index (closeloop index). The BWP parameter includes a BWP ID.

In some possible implementations, the beam configuration information includes one or more common beam sets. Common beams respectively included in the one or more common beam sets have different beam types. For example, if the beam configuration information includes one common beam set, a beam type of a common beam included in the common beam set is a joint common beam. If the beam configuration information includes two common beam sets, a common beam included in one of the two common beam sets is an uplink common beam, and a common beam included in the other common beam set is a downlink common beam. If the beam configuration information includes three common beam sets, a beam type included in one of the three common beam sets is a joint common beam, a beam type included in one common beam set is an uplink common beam, and a beam type included in the other common beam set is a downlink common beam.

Optionally, this embodiment further includes step 601a. Step 601a is performed after step 601.

Step 601a: The terminal device determines, based on the beam configuration information, a beam type of the one or more common beams configured by the network device for the terminal device. Two possible implementations in which the terminal device determines the beam type of the one or more common beams configured by the network device for the terminal device are shown below. This application is still applicable to other possible determining manners. The following two possible determining manners do not constitute a limitation on the technical solutions in this application. 1. The terminal device determines the beam type of the one or more common beams based on a configuration parameter of the one or more common beams included in the beam configuration information.

Specifically, the beam configuration information includes a configuration parameter corresponding to each of the one or more common beams. The terminal device determines a beam type of each common beam based on whether the configuration parameter of each of the one or more common beams includes the first parameter and the second parameter. If the configuration parameter of the common beam includes the first parameter and does not include the second parameter, the common beam is an uplink common beam. If the configuration parameter of the common beam includes the second parameter and does not include the first parameter, the common beam is a downlink common beam. If the configuration parameter of the common beam includes the first parameter and the second parameter, the common beam is a joint common beam.

In some possible implementations, the beam configuration information includes one or more common beam sets. Common beams respectively included in the one or more common beam sets have different beam types. For example, if the beam configuration information includes one common beam set, a beam type of a common beam included in the common beam set is a joint common beam. If the beam configuration information includes two common beam sets, a common beam included in one of the two common beam sets is an uplink common beam, and a common beam included in the other common beam set is a downlink common beam. If the beam configuration information includes three common beam sets, a beam type included in one of the three common beam sets is a joint common beam, a beam type included in one common beam set is an uplink common beam, and a beam type included in the other common beam set is a downlink common beam. 2. The terminal device determines, based on a quantity of common beam sets included in the beam configuration information, the beam type of the one or more common beams configured by the network device for the terminal device.

Specifically, the terminal device determines, based on the quantity of common beam sets included in the beam configuration information, a beam type of a common beam included in each common beam set.

For example, if the beam configuration information includes one common beam set, a beam type of a common beam included in the common beam set is a joint common beam.

For example, if the beam configuration information includes two common beam sets, beam types of common beams respectively included in the two common beam sets are respectively an uplink common beam and a downlink common beam. Specifically, a common beam in a first common beam set in the two common beam sets is an uplink common beam, and a common beam in a second common beam set in the two common beam sets is a downlink common beam. Alternatively, a common beam in a first common beam set in the two common beam sets is a downlink common beam, and a common beam in a second common beam set in the two common beam sets is an uplink common beam.

For example, if the beam configuration information includes three common beam sets, a beam type of a common beam included in a first common beam set in the three common beam sets is a joint common beam, and beam types of common beams included in the other two common beam sets are respectively an uplink common beam and a downlink common beam. Specifically, a common beam in a second common beam set is an uplink common beam, and a common beam in a third common beam set is a downlink common beam. Alternatively, a common beam in a second common beam set is a downlink common beam, and a common beam in a third common beam set is an uplink common beam.

Alternatively, if the beam configuration information includes three common beam sets, a beam type of a common beam included in a third common beam set is a joint common beam, and beam types of common beams included in the first two common beam sets are respectively an uplink common beam and a downlink common beam. Specifically, a common beam in a first common beam set is an uplink common beam, and a common beam in a second common beam set is a downlink common beam. Alternatively, a common beam in a first common beam set is a downlink common beam, and a common beam in a second common beam set is an uplink common beam.

602: The network device sends beam activation information to the terminal device. Correspondingly, the terminal device receives the beam activation information from the network device.

Step 602 is similar to step 502 in the embodiment shown in FIG. 5. For details, refer to the related descriptions of step 502 in the embodiment shown in FIG. 5. Details are not described herein. Optionally, based on step 601, the terminal device may determine a beam type of a common beam activated by the network device for the terminal device.

603: The network device sends beam indication information to the terminal device. Correspondingly, the terminal device receives the beam indication information from the network device.

Step 603 is similar to step 503 in the embodiment shown in FIG. 5. For details, refer to the related descriptions of step 503 in the embodiment shown in FIG. 5. Details are not described herein. Optionally, based on step 601, the terminal device may determine a beam type of a common beam indicated by the network device to the terminal.

In the technical solution in Embodiment 1, in a process in which the network device manages the common beam of the terminal device, the terminal device may determine the beam type of the one or more common beams based on the beam configuration information. Specifically, the terminal device may determine the beam type of the one or more common beams based on the configuration parameter or the quantity of common beam sets included in the beam configuration information.

There is no need to indicate the beam type of the one or more common beams by using other information or fields, to reduce network resource overheads, for example, signaling overheads or indication bit overheads.

It should be noted that Embodiment 1 is merely an example. The beam type of the common beam in this embodiment of this application may alternatively be represented in another form. This is not specifically limited in this application.

This application provides Embodiment 2. Embodiment 2 includes step 501 to step 503 in the embodiment shown in FIG. 5.

In step 501 in Embodiment 2, one or more common beams configured by the network device for the terminal device include any one of the following: a separate common beam used for uplink transmission or downlink transmission and a j oint common beam used for uplink transmission and downlink transmission.

In this embodiment, the network device configures the separate common beam or the joint common beam for the terminal device. For the terminal device, the terminal device does not expect to be configured with both the separate common beam and the joint common beam. That is, the separate common beam and the joint common beam cannot be simultaneously configured.

In this case, in step 502 and step 503 in Embodiment 2, the terminal device may determine beam types of some common beams activated by the network device and a beam type of a common beam indicated by the network device. For example, in step 501, the one or more common beams include the joint common beam. In this case, the terminal device may determine that the common beam activated by the network device is a joint common beam, and determine that the common beam indicated by the network device is a joint common beam.

In the technical solution in Embodiment 2, a beam type of the common beam configured by the network device for the terminal device is limited. For the terminal device, the separate common beam and the joint common beam cannot be simultaneously configured. The joint common beam may be used for both uplink transmission and downlink transmission. Therefore, if the network device configures the j oint common beam for the terminal device, the separate common beam does not need to be configured for the terminal device, to avoid a waste of beam resources and improve utilization of the beam resources. The separate common beam may be used for uplink transmission or downlink transmission. Therefore, if the network device configures the separate common beam for the terminal device, the joint common beam does not need to be configured for the terminal device, to avoid a waste of beam resources and improve utilization of the beam resources.

This application provides Embodiment 3. Embodiment 3 includes step 501 to step 503.

In step 501 in Embodiment 3, the network device may configure common beams of various beam types for the terminal device by using a common beam set. Three possible implementations are shown below. It should be noted that the following three possible implementations are merely examples, and other possible implementations are also applicable to the technical solution in this embodiment of this application.

Configuration manner 1: The beam configuration information includes a first common beam set, a second common beam set, and a third common beam set, the first common beam set includes a joint common beam, the second common beam set includes an uplink common beam, and the third common beam set includes a downlink common beam.

In the manner 1, the terminal device may distinguish the beam type of the common beam by using the common beam set. Specifically, after step 501, the terminal device determines, based on the common beam set included in the beam configuration information, a beam type corresponding to each of one or more common beams configured by the network device for the terminal device. Common beams included in different common beam sets may be represented by using beam indices. Two possible implementations are shown below.

Implementation 1: The network device separately represents, by using global beam indices, the common beam included in the first common beam set, the common beam included in the second common beam set, and the common beam included in the third common beam set. Common beams in different common beam sets have different beam indices.

For example, the first common beam set includes two joint common beams that respectively correspond to beam indices {#0, #2}; the second common beam set includes three uplink common beams that respectively correspond to beam indices {#1, #3, #5}; and the third common beam set includes two downlink common beams that respectively correspond to beam indices {#4, #6}. After step 501, the terminal device determines, based on a beam index of the one or more common beams included in the beam configuration information, the beam type corresponding to each of the one or more common beams. After step 502, the terminal device determines beam types of some common beams based on beam indices of the some common beams activated by using the beam activation information. After step 503, the terminal device determines, based on a beam index of one or more common beams indicated by the beam indication information, a beam type corresponding to each of the one or more common beams indicated by the beam indication information.

Implementation 2: The network device separately represents, by using local beam indices, the common beam included in the first common beam set, the common beam included in the second common beam set, and the common beam included in the third common beam set. Beam indices of common beams in different common beam sets may be the same.

For example, the first common beam set includes two joint common beams that respectively correspond to beam indices {#0, #1}; the second common beam set includes three uplink common beams that respectively correspond to beam indices {#0, #1, #3}; and the third common beam set includes two downlink common beams that respectively correspond to beam indices {#0, #1}. Configuration manner 2: The beam configuration information includes a fourth common beam set and a fifth common beam set, the fourth common beam set includes a joint common beam set, and the fifth common beam set includes a separate common beam. That is, an uplink common beam and a downlink common beam are included in the fifth common beam set.

In the manner 2, the terminal device may distinguish the beam type of the common beam by using the common beam set. Specifically, after step 501, the terminal device determines, based on the common beam set included in the beam configuration information, a beam type corresponding to each of one or more common beams configured by the network device for the terminal device. Common beams included in different common beam sets may be represented by using beam indices. Two possible implementations are shown below.

Implementation 1: The network device separately represents, by using global beam indices, the common beam included in the fourth common beam set and the common beam included in the fifth common beam set. Common beams in different common beam sets have different beam indices.

For example, the fourth common beam set includes two joint common beams that respectively correspond to beam indices {#0, #2}; and the fifth common beam set includes four common beams (including an uplink common beam and a downlink common beam) that respectively correspond to beam indices {#1, #3, #4, #5}.

After step 501, the terminal device determines, based on a beam index of the one or more common beams included in the beam configuration information, the beam type corresponding to each of the one or more common beams. After step 502, the terminal device determines beam types of some common beams based on beam indices of the some common beams activated by using the beam activation information. After step 503, the terminal device determines, based on a beam index of one or more common beams indicated by the beam indication information, a beam type corresponding to each of the one or more common beams indicated by the beam indication information.

Implementation 2: The network device separately represents, by using local beam indices, the common beam included in the fourth common beam set and the common beam included in the fifth common beam set. Beam indices of common beams in different common beam sets may be the same.

For example, the fourth common beam includes two joint common beams that respectively correspond to beam indices {#0, #2}; and the fifth common beam set includes four common beams (including an uplink common beam and a downlink common beam) that respectively correspond to beam indices {#0, #1, #2, #3}.

Configuration manner 3: The beam configuration information includes a sixth common beam set, and the sixth common beam set includes an uplink common beam, a downlink common beam, and a joint common beam.

In the technical solution in Embodiment 3, three possible configuration manners in which the network device configures common beams of various types for the terminal device are provided. That is, the network device configures common beams of various beam types for the terminal device by using the common beam set, to provide a basis for implementation of the solution. This application provides Embodiment 4. Embodiment 4 includes step 501 to step 503 in FIG. 5. In step 502 in Embodiment 4, optionally, the beam activation information is carried in a MAC CE. In a possible implementation, common beams of different beam types are activated by using different MAC CEs.

In this possible implementation, optionally, the terminal device determines, based on a beam index of a common beam included in the MAC CE, a beam type of the common beam activated by using the MAC CE.

For example, with reference to the implementation 1 in the configuration manner 1 in Embodiment 3, the terminal device may determine, based on the beam index of the common beam included in the MAC CE, the beam type of the common beam activated by using the MAC CE. For example, if the beam index of the common beam is #0, the terminal device may determine that the common beam belongs to the first common beam set, that is, is a joint common beam.

For example, with reference to the implementation 1 in the configuration manner 2 in Embodiment 3, the terminal device may determine, based on the beam index of the common beam included in the MAC CE, the beam type of the common beam activated by using the MAC CE. For example, if the beam index of the common beam is #2, the terminal device may determine that the common beam belongs to the fourth common beam set, that is, is a joint common beam. For example, if the beam index of the common beam is #1, the terminal device may determine that the common beam belongs to the fifth common beam set, that is, is a separate common beam. Specifically, whether the common beam is an uplink common beam or a downlink common beam should be specifically determined by the terminal device with reference to another related field or in another manner. In another possible implementation, common beams of a plurality of different beam types are activated by using a same MAC CE. That is, one MAC CE may be used to activate common beams of a plurality of different beam types.

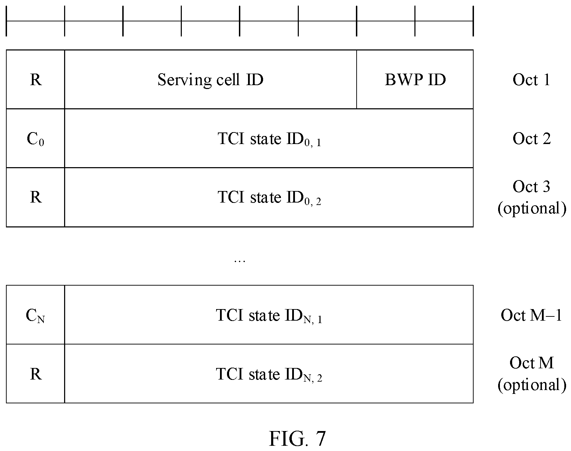

For example, one MAC CE is used to activate a group of uplink common beams and a group of downlink common beams. A possible format of the MAC CE is shown below with reference to FIG. 7.

FIG. 7 shows a possible format of a MAC CE according to an embodiment of this application. In FIG. 7, in the MAC CE, all TCI state IDs_{i, 1} correspond to common beams of a first beam type, and all TCI state IDsi, ₂ correspond to common beams of a second beam type. Herein, i is an integer greater than or equal to 0 and less than or equal to N.

The first beam type is an uplink common beam, and the second beam type is a downlink common beam. Alternatively, the first beam type is a downlink common beam, and the first beam type is an uplink common beam.

The first beam type and the second beam type may be specifically specified in a communication protocol, may be configured by the network device for the terminal device by using RRC, or may be indicated by using a first bit (bit) in the MAC CE.

It may be learned from FIG. 7 that a Cᵢ field (1 bit) before each TCI state ID_{i, 1} indicates whether there is a TCI state ID_{i, 2}.

If the MAC CE is used to activate joint common beams, the activated joint common beams are in a one-to-one correspondence with field values in a common beam indication field in DCI. The DCI includes DCI used for uplink scheduling or downlink scheduling.

In this embodiment, the joint common beam can be associated only with a field value in a common beam indication field in the DCI used for downlink scheduling, that is, the joint common beam can be indicated only by using the DCI used for downlink scheduling. Alternatively, the joint common beam can be associated only with a field value in a common beam indication field in the DCI used for uplink scheduling, that is, the joint common beam can be indicated only by using the DCI used for uplink scheduling. Alternatively, the joint common beam may be associated with a field value in a common beam indication field in the DCI used for uplink scheduling and a field value in a common beam indication field in the DCI used for downlink scheduling, that is, the joint common beam may be indicated by using the DCI used for uplink scheduling or the DCI used for downlink scheduling.

If the MAC CE is used to separately activate an uplink common beam and a downlink common beam, the activated uplink common beam and the activated downlink common beam are respectively mapped to common beam indication field values in different types of DCI, that is, are associated with the common beam field values in the different types of DCI.

For example, the activated uplink common beam is associated with a common beam indication field in DCI used for uplink scheduling, that is, the activated uplink common beam can be indicated only by using the DCI used for uplink scheduling, and the activated downlink common beam is associated with a common beam indication field in DCI used for downlink scheduling, that is, the activated downlink common beam can be indicated only by using the DCI used for downlink scheduling.

In the technical solution in Embodiment 4, a technical solution of activating a common beam of one beam type by using a MAC CE is provided, and a technical solution of activating common beams of a plurality of beam types by using one MAC CE is provided. In other words, some specific common beam activation manners are provided. In the technical solution of activating common beams of a plurality of beam types by using one MAC CE, signaling overheads used by the network device and the terminal device to activate the common beam can be reduced, to implement efficient beam activation.

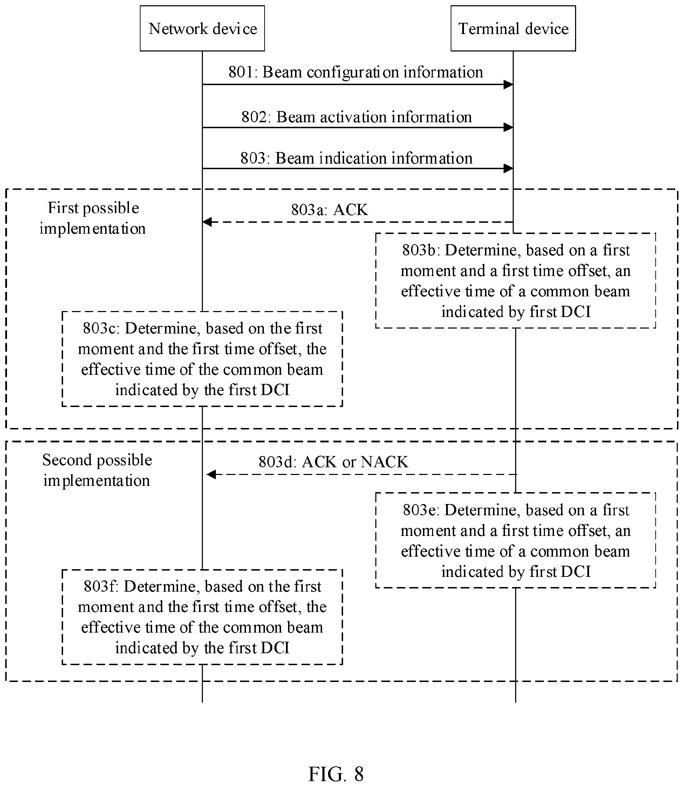

This application provides Embodiment 5. A technical solution in Embodiment 5 provided in this application is described below with reference to FIG. 8.

FIG. 8 is a schematic diagram of another embodiment of a beam management method according to an embodiment of this application. In FIG. 8, the beam management method includes the following steps.

801: A network device sends beam configuration information to a terminal device. Correspondingly, the terminal device receives the beam configuration information from the network device.

802: The network device sends beam activation information to the terminal device. Correspondingly, the terminal device receives the beam activation information from the network device.

803: The network device sends beam indication information to the terminal device. Correspondingly, the terminal device receives the beam indication information from the network device.

Step 801 to step 803 are similar to the related descriptions of step 501 to step 503 in the embodiment shown in FIG. 5. For details, refer to the related descriptions of step 501 and step 502 in the embodiment shown in FIG. 5.

Optionally, in step 803, the beam indication information is carried in first DCI. Two implementations indicating that the terminal device successfully receives the first DCI are shown below.

In a first possible implementation, when a first condition is met, and a HARQ feedback result corresponding to the first DCI is an ACK, it indicates that the terminal device successfully receives the first DCI, or it indicates that one or more common beams indicated by the first DCI are successfully indicated.

The first condition includes one or a combination of the following:
1. The terminal device reports that a common beam function is supported.
2. The network device configures the common beam function of the terminal device to an enabled state.
3. The first DCI schedules no PDSCH.
4. The first DCI schedules a PDSCH, and the terminal device performs HARQ feedback by using a dynamic HARQ-ACK codebook.
5. The one or more common beams indicated by the first DCI are different from a common beam currently used by the terminal device.

In this implementation, that the terminal device successfully receives the first DCI includes: The terminal device receives the first DCI from the network device, and successfully decodes the first DCI.

Optionally, when the first condition is met, and the HARQ feedback result corresponding to the first DCI is the ACK, the common beam indicated by the first DCI takes effect in a time obtained by adding a first moment and a first time offset; or when the first condition is met, and the HARQ feedback result corresponding to the first DCI is the ACK, the common beam indicated by the first DCI takes effect in a first slot obtained by adding a first moment and a first time offset.

The first moment is a moment at which the terminal device receives the first DCI or a moment at which the terminal device sends the HARQ feedback result corresponding to the first DCI, namely, a moment at which the terminal device feeds back the ACK.

The HARQ feedback result corresponding to the first DCI is a HARQ feedback result fed back for the first DCI or a HARQ feedback result fed back for the PDSCH scheduled by the first DCI.

The first moment may be specifically a slot, a symbol, a second, or a millisecond. This is not specifically limited in this application. The first time offset includes X time units. Herein, X is an integer greater than or equal to 1. Optionally, the time unit includes one slot, one slot group, one symbol, one symbol group, or one millisecond.

The first time offset is a preset time offset or a time offset configured by the network device for the terminal device. This is not specifically limited in this application.

In this implementation, optionally, the embodiment shown in FIG. 8 further includes step 803a to step 803c. Step 803a to step 803c are performed after step 803. There is no fixed execution sequence between step 803b and step 803c. Step 803b may be performed before step 803c, step 803c may be performed before step 803b, or step 803b and step 803c may be simultaneously performed based on a situation.

Step 803a: The terminal device sends an ACK to the network device.

Step 803b: The terminal device determines, based on the first moment and the first time offset, an effective time of the common beam indicated by the first DCI.

For related descriptions of the first moment and the first time offset, refer to the foregoing related descriptions.

Step 803c: The network device determines, based on the first moment and the first time offset, the effective time of the common beam indicated by the first DCI.

Example 1: If the first DCI schedules no PDSCH, the terminal device performs HARQ feedback for the first DCI. If the terminal device successfully receives the first DCI, the terminal device feeds back the ACK to the network device, which indicates that the terminal device successfully receives the first DCI, or indicates that the terminal device successfully receives the beam indication information. In other words, if the first DCI schedules no PDSCH, and the terminal device feeds back the ACK to the network device, it indicates that the terminal device successfully receives the first DCI.

In this case, the common beam indicated by the first DCI takes effect in the time obtained by adding the first moment and the first time offset, or the common beam indicated by the first DCI takes effect in the first slot obtained by adding the first moment and the first time offset.

Further, only when the common beam indicated by the first DCI is different from the common beam currently used by the terminal device or a common beam previously indicated by the network device to the terminal device, the common beam indicated by the first DCI takes effect in the time obtained by adding the first moment and the first time offset, or takes effect in the first slot obtained by adding the first moment and the first time offset.

Example 2: If the first DCI schedules the PDSCH, the terminal device may perform HARQ feedback only for the PDSCH scheduled by the first DCI. This is because the terminal device may notify, by using the HARQ feedback result corresponding to the PDSCH scheduled by the first DCI, the network device of the PDSCH scheduled by the first DCI and whether the first DCI is successfully received by the terminal device.

When the first DCI schedules the PDSCH, and the terminal device performs HARQ feedback by using the dynamic HARQ-ACK codebook, if the terminal device feeds back the ACK to the network device, it indicates that the terminal device successfully receives the first DCI; or if the terminal device feeds back a NACK to the network device, it indicates that the terminal device does not successfully receive the first DCI. When the ACK is fed back, the common beam indicated by the first DCI takes effect in the time obtained by adding the first moment and the first time offset, or takes effect in the first slot obtained by adding the first moment and the first time offset.

Further, only when the common beam indicated by the first DCI is different from the common beam currently used by the terminal device or a common beam previously indicated by the network device to the terminal device, the common beam indicated by the first DCI takes effect in the time obtained by adding the first moment and the first time offset, or takes effect in the first slot obtained by adding the first moment and the first time offset.

In the example 1 and the example 2, the first DCI is used by the network device to indicate a common beam to the terminal device for an (n+1)^{th} time after the terminal device performs initial access. The common beam currently used by the terminal device or the common beam previously indicated by the network device to the terminal device is a common beam that is indicated by the network device to the terminal device for an n^{th} time after the terminal device performs initial access and that takes effect. Herein, n is an integer greater than or equal to 1.

Optionally, if the common beam indicated by the first DCI is the same as the common beam currently used by the terminal device, the terminal device may ignore the first DCI, and the terminal device does not need to determine, based on the effective time of the common beam shown above, that the common beam takes effect.

For the network device, the moment at which the terminal device receives the first DCI may be understood as a moment at which the network device sends the first DCI, and the moment at which the terminal device sends the HARQ feedback result corresponding to the first DCI may be understood as a moment at which the network device receives the HARQ feedback result corresponding to the first DCI. Therefore, the network device may determine, based on the first moment and the first time offset, the effective time of the common beam indicated by the first DCI. In this way, the network device and the terminal device can switch to the common beam at the effective time, so that transmission is performed between the network device and the terminal device through the common beam.

In a second possible implementation, when a second condition is met, and a HARQ feedback result corresponding to the first DCI is an ACK or a NACK, it indicates that the terminal device successfully receives the first DCI, or it indicates that one or more common beams indicated by the first DCI are successfully indicated.

The second condition includes one or a combination of the following:
1. The terminal device reports that a common beam function is supported.
2. The network device configures the common beam function of the terminal device to an enabled state.
3. The first DCI schedules a PDSCH.
4. The terminal device performs HARQ feedback by using a semi-static HARQ-ACK codebook.
5. The one or more common beams indicated by the first DCI are different from a common beam currently used by the terminal device.

In this implementation, that the terminal device successfully receives the first DCI means that the terminal device receives the first DCI from the network device, and successfully decodes the first DCI.

Optionally, when the first condition is met, and the HARQ feedback result corresponding to the first DCI is the ACK, the common beam indicated by the first DCI takes effect in a time obtained by adding a first moment and a first time offset, or the common beam indicated by the first DCI takes effect in a first slot obtained by adding a first moment and a first time offset.

The first moment is a moment at which the terminal device receives the first DCI or a moment at which the terminal device sends the HARQ feedback result corresponding to the first DCI, namely, a moment at which the terminal device feeds back the ACK or the NACK.

It should be noted that optionally, if the first moment is the moment at which the terminal device receives the first DCI, the first time offset needs to be greater than a time interval between the moment at which the terminal device receives the first DCI and the moment at which the HARQ feedback result corresponding to the first DCI is sent. That is, an effective time of the common beam indicated by the first DCI needs to be later than a time at which the HARQ feedback result corresponding to the first DCI is sent.

The first time offset may be designed as a fixed value, namely, a value specified in a communication protocol. In this case, in actual application, it should be ensured that the time interval between the moment at which the terminal device receives the first DCI and the time at which the HARQ feedback result corresponding to the first DCI is sent is less than the fixed value. If the moment at which the terminal device receives the first DCI and the time at which the HARQ feedback result corresponding to the first DCI is sent are greater than the fixed value, the terminal device ignores the first DCI, that is, the common beam indicated by the first DCI does not take effect, or takes effect after a delay of a period of time. For example, the effective time of the common beam indicated by the first DCI is delayed to the first slot after the sending moment at which the terminal device sends the HARQ feedback result corresponding to the first DCI.

The HARQ feedback result corresponding to the first DCI is a HARQ feedback result fed back for the PDSCH scheduled by the first DCI.

The first time offset is a preset time offset or a time offset configured by the network device for the terminal device. This is not specifically limited in this application.

In this implementation, the first moment may be specifically a slot, a symbol, a second, or a millisecond. This is not specifically limited in this application. The first time offset includes X time units. Herein, X is an integer greater than or equal to 1. Optionally, the time unit includes one slot, one slot group, one symbol, one symbol group, or one millisecond.

In this implementation, optionally, the embodiment shown in FIG. 8 further includes step 803d to step 803f. Step 803d to step 803f are performed after step 803d. There is no fixed execution sequence between step 803e and step 803f. Step 803e may be performed before step 803f, step 803e may be performed before step 803f, or step 803e and step 803f may be simultaneously performed based on a situation.

Step 803d: The terminal device sends an ACK or a NACK to the network device.

Step 803 e: The terminal device determines, based on the first moment and the first time offset, the effective time of the common beam indicated by the first DCI. For related descriptions of the first moment and the first time offset, refer to the foregoing related descriptions.

Step 803f: The network device determines, based on the first moment and the first time offset, the effective time of the common beam indicated by the first DCI.

Example 3: If the first DCI schedules the PDSCH, the terminal device may perform HARQ feedback only for the PDSCH scheduled by the first DCI. This is because the terminal device may notify, by using the HARQ feedback result corresponding to the PDSCH scheduled by the first DCI, the network device of the PDSCH scheduled by the first DCI and whether the first DCI is successfully received by the terminal device.

When the first DCI schedules the PDSCH, and the terminal device performs HARQ feedback by using the semi-static HARQ-ACK codebook, if the terminal device feeds back an ACK or a NACK to the network device, it may indicate that the terminal device successfully receives the first DCI. This is because the terminal device feeds back the NACK to the network device only when the terminal device successfully receives the first DCI and the terminal device does not successfully receive the PDSCH scheduled by the first DCI. If the terminal device neither successfully receives the first DCI nor successfully receives the PDSCH scheduled by the first DCI, the terminal device does not feed back any information to the network device.

Therefore, when the first DCI schedules the PDSCH, and the terminal device performs HARQ feedback by using the semi-static HARQ-ACK codebook, if the terminal device feeds back the ACK or the NACK to the network device, it indicates that the terminal device successfully receives the first DCI. In this case, the common beam indicated by the first DCI takes effect in the time obtained by adding the first moment and the first time offset, or takes effect in the first slot obtained by adding the first moment and the first time offset.

Further, only when the common beam indicated by the first DCI is different from the common beam currently used by the terminal device or a common beam previously indicated by the network device to the terminal device, the common beam indicated by the first DCI takes effect in the time obtained by adding the first moment and the first time offset, or takes effect in the first slot obtained by adding the first moment and the first time offset.

It should be noted that for the network device, the moment at which the terminal device receives the first DCI may be understood as a moment at which the network device sends the first DCI, and the moment at which the terminal device sends the HARQ feedback result corresponding to the first DCI may be understood as a moment at which the network device receives the HARQ feedback result corresponding to the first DCI. Therefore, the network device may determine, based on the first moment and the first time offset, the effective time of the common beam indicated by the first DCI. In this way, the network device and the terminal device can switch to the common beam at the effective time, so that transmission is performed between the network device and the terminal device through the common beam.

In the example 3, the first DCI is used by the network device to indicate a common beam to the terminal device for an (n+1)^{th} time after the terminal device performs initial access. The common beam currently used by the terminal device or the common beam previously indicated by the network device to the terminal device is a common beam that is indicated by the network device to the terminal device for an n^{th} time after the terminal device performs initial access and that takes effect. Herein, n is an integer greater than or equal to 1.

How to determine a codebook type used by the terminal device is described below.

When the network device configures a pdsch-HARQ-ACK-Codebook parameter of the terminal device to dynamic (dynamic), the terminal device performs HARQ feedback by using a dynamic HARQ-ACK codebook rule. Specifically, when the terminal device uses the dynamic HARQ-ACK codebook, the first DCI includes a downlink assignment index (downlink assignment index, DAI) field, or a length of a DAI field included in the first DCI is not 0. Therefore, in the first condition, that the terminal device performs HARQ feedback by using a dynamic HARQ-ACK codebook may be replaced with the following content: The first DCI includes the DAI field or the length of the DAI field included in the first DCI is not 0.

When the network device configures a pdsch-HARQ-ACK-Codebook parameter of the terminal device to non-dynamic or semi-static (semi-static), the terminal device performs HARQ feedback by using a semi-static HARQ-ACK codebook rule. Specifically, when the terminal device uses the semi-static HARQ-ACK codebook or does not use a dynamic HARQ-ACK codebook, the first DCI does not include a DAI field, or a length of a DAI field included in the first DCI is 0. Therefore, in the second condition, that the terminal device uses a semi-static HARQ-ACK codebook may be replaced with the following content: The first DCI does not include the DAI field or the length of the DAI field included in the first DCI is 0.

In the technical solution in Embodiment 5, several possible cases indicating that the terminal device successfully receives the first DCI are shown. Specifically, the HARQ feedback result of the terminal device for the first DCI or the HARQ feedback result of the terminal device for the PDSCH scheduled by the first DCI indicates that the terminal device successfully receives the first DCI. That is, specific manners in which the network device determines, in a plurality of application scenarios, that the first DCI is successfully received are provided. In addition, the network device and the terminal device may determine the effective time of the common beam indicated by the first DCI, and switch to the common beam at the effective time, so that transmission is performed between the network device and the terminal device through the common beam.

Optionally, in step 503 in the embodiment shown in FIG. 5, the beam indication information is carried in first DCI.

The first DCI includes a common beam indication field. The common beam indication field indicates a common beam of one beam type. For a specific process in which the terminal device determines the beam type indicated by the common beam indication field, refer to the following technical solution in Embodiment 6. Alternatively, the common beam indication field indicates common beams of two beam types. For a specific process in which the terminal device determines the beam type indicated by the common beam indication field, refer to the following technical solution in Embodiment 7.

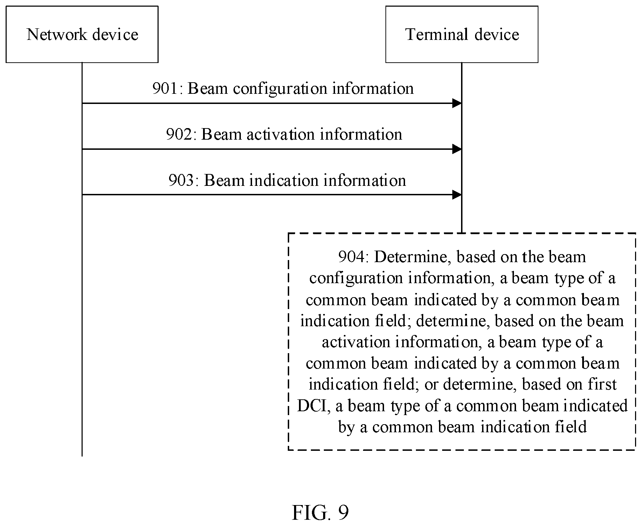

This application provides Embodiment 6. The technical solution in Embodiment 6 provided in this application is described below with reference to FIG. 9.

FIG. 9 is a schematic diagram of another embodiment of a beam management method according to an embodiment of this application. In FIG. 9, the beam management method includes the following steps.

901: A network device sends beam configuration information to a terminal device. Correspondingly, the terminal device receives the beam configuration information from the network device.

902: The network device sends beam activation information to the terminal device. Correspondingly, the terminal device receives the beam activation information from the network device.

903: The network device sends beam indication information to the terminal device. Correspondingly, the terminal device receives the beam indication information from the network device.

Step 901 to step 903 are similar to the related descriptions of step 501 to step 503 in the embodiment shown in FIG. 5. For details, refer to the related descriptions of step 501 and step 502 in the embodiment shown in FIG. 5.

Optionally, in step 903, the beam indication information is carried in first DCI.

K field values in a common beam indication field in the first DCI may be in a one-to-one correspondence with K common beams activated by using the beam activation information. For example, when the common beam indication field in the first DCI has a value, it indicates a common beam corresponding to the field value.

There are a plurality of beam types of common beams. The terminal device first determines a beam type indicated by the common beam indication field, and then determines a specific common beam or specific common beams with reference to the beam activation information.

This embodiment describes how the terminal device determines, when the common beam indication field indicates a common beam of one beam type, the beam type indicated by the common beam indication field.

A process in which the terminal device determines the beam type indicated by the common beam indication field is described below with reference to step 904. Optionally, this embodiment further includes step 904. Step 904 is performed after step 903.

Step 904: The terminal device determines, based on the beam configuration information, the beam type of the common beam indicated by the common beam indication field; the terminal device determines, based on the beam activation information, the beam type of the common beam indicated by the common beam indication field; or the terminal device determines, based on the first DCI, the beam type of the common beam indicated by the common beam indication field. Specifically, that the terminal device determines, based on the beam configuration information, the beam type of the common beam indicated by the common beam indication field includes: If the network device configures a common beam mode of the terminal device to a joint common beam mode by using the beam configuration information, or the beam configuration information includes configuration information of a joint common beam, the terminal device determines that the common beam indication field indicates the joint common beam; or if the network device configures a common beam mode of the terminal device to a separate common beam mode by using the beam configuration information, or the beam configuration information includes configuration information of a separate common beam, the terminal device determines that the beam type of the common beam indicated by the common beam indication field is an uplink common beam or a downlink common beam.

For example, the network device sends the beam configuration information to the terminal device by using RRC. That is, the RRC includes the beam configuration information. If the network device configures the common beam mode of the terminal device to the joint common beam mode by using the RRC, or the RRC includes the configuration information of the joint common beam, the common beam indication field included in the first DCI indicates the joint common beam.

If the network device configures the common beam mode of the terminal device to the separate common beam mode by using the RRC, or the RRC includes the configuration information of the separate common beam, the common beam indication field included in the first DCI indicates the uplink common beam or the downlink common beam.

Specifically, whether the common beam indicated by the common beam indication field is an uplink common beam or a downlink common beam should be determined by the terminal device with reference to another field in the first DCI. For example, the terminal device may perform indication by using a dedicated field (for example, an uplink/downlink indication field) in the first DCI, or perform indication by using first x bits or last x bits in the common beam field in the first DCI.

If the network device configures the common beam mode of the terminal device to the joint common beam mode by using the RRC, or the RRC includes the configuration information of the joint common beam, the dedicated field included in the first DCI or the first x bits or the last x bits in the common beam field in the first DCI have no practical meaning, and the terminal device may ignore the dedicated field included in the first DCI or the first x bits or the last x bits in the common beam field in the first DCI. Alternatively, the common beam mode of the terminal device is configured to the joint common beam mode, or the configuration information of the joint common beam included in the RRC does not exist. Herein, x is a positive integer, for example, x=l. Specifically, that the terminal device determines, based on the beam activation information, the beam type of the common beam indicated by the common beam indication field includes: If the beam activation information is used to activate a joint common beam, the terminal device determines that the beam type of the common beam indicated by the common beam indication information is the joint common beam; or if the beam activation information is used to activate a separate common beam, the terminal device determines that the beam type of the common beam indicated by the common beam indication field is an uplink common beam or a downlink common beam.

For example, the network device sends the beam activation information to the terminal device by using a MAC CE. That is, the MAC CE includes the beam activation information. If the MAC CE is used to activate only the joint common beam, the common beam indication field included in the first DCI indicates the joint common beam. If the MAC CE is not used to activate the joint common beam or the MAC CE is used to activate the separate common beam, the common beam indication field included in the first DCI indicates the uplink common beam or the downlink common beam. Whether the common beam indicated by the common beam indication field is an uplink common beam or a downlink common beam should be determined by the terminal device with reference to another field in the first DCI. For example, the terminal device may perform indication by using a dedicated field (for example, an uplink/downlink indication field) in the first DCI, or perform indication by using first x bits or last x bits in the common beam field in the first DCI.

If the MAC CE is used to activate only the j oint common beam, the dedicated field included in the first DCI or the first x bits or the last x bits in the common beam field in the first DCI have no practical meaning, and the terminal device may ignore the dedicated field included in the first DCI or the first x bits or the last x bits in the common beam field in the first DCI. Alternatively, the dedicated field included in the first DCI or the first x bits or the last x bits in the common beam field in the first DCI do not exist.

If the terminal device receives both a MAC CE used to activate the joint common beam and a MAC CE used to activate the separate common beam, the terminal device uses a MAC CE received later, that is, the terminal device determines, based on the MAC CE received later by the terminal device, the type of the common beam indicated by the DCI. That is, the MAC CE used to activate the joint common beam and the MAC CE used to activate the separate common beam cover each other, and the MAC CE received later by the terminal device covers the MAC CE received earlier by the terminal device.

Specifically, that the terminal device determines, based on the first DCI, the beam type of the common beam indicated by the common beam indication field includes: The terminal device determines, based on first x bits in the common beam indication field included in the first DCI or a first indication field included in the first DCI, the beam type of the common beam indicated by the common beam indication field.

The first x bits in the common beam indication field included in the first DCI or the first indication field included in the first DCI indicates the beam type of the common beam indicated by the common beam indication field. Herein, x is an integer greater than or equal to 1.

Specifically, the network device distinguishes, by using the first x bits in the common beam indication field or the first indication field included in the first DCI, the beam type of the common beam indicated by the common beam indication field.

The beam type includes any one of the following: a joint common beam, an uplink common beam, and a downlink common beam; or
the beam type includes any one of the following: an uplink common beam and a downlink common beam.

The terminal device determines, by using the technical solution in Embodiment 6, the beam type of the common beam indicated by the common beam indication field. Then, the terminal device may determine a common beam specifically indicated by each field value included in the common beam indication field. Field values included in the common beam indication field may be in a one-to-one correspondence with common beams activated by using the beam activation information. For example, if the common beam indication field indicates the downlink common beam, the field values in the common beam indication field are in a one-to-one correspondence with downlink common beams activated by using the beam activation information. That is, the terminal device may determine the specifically indicated downlink common beams by using the field values. If the common beam indication field indicates the joint common beam, the field values in the common beam indication field are in a one-to-one correspondence with joint common beams activated by using the beam activation information. That is, the terminal device may determine the specifically indicated joint common beams by using the field values.

In the technical solution in Embodiment 6, when the common beam indication field indicates a common beam of one beam type, three possible implementations in which the terminal device determines the beam type indicated by the beam indication field are shown. That is, the terminal device determines, by using the technical solution in Embodiment 6, the beam type indicated by the common beam indication field. In addition, the terminal device determines the specifically indicated common beam based on the beam type indicated by the common beam indication field, each field value included in the common beam indication field, and the beam activation information. In this way, transmission may be performed between the terminal device and the network device through the common beam.

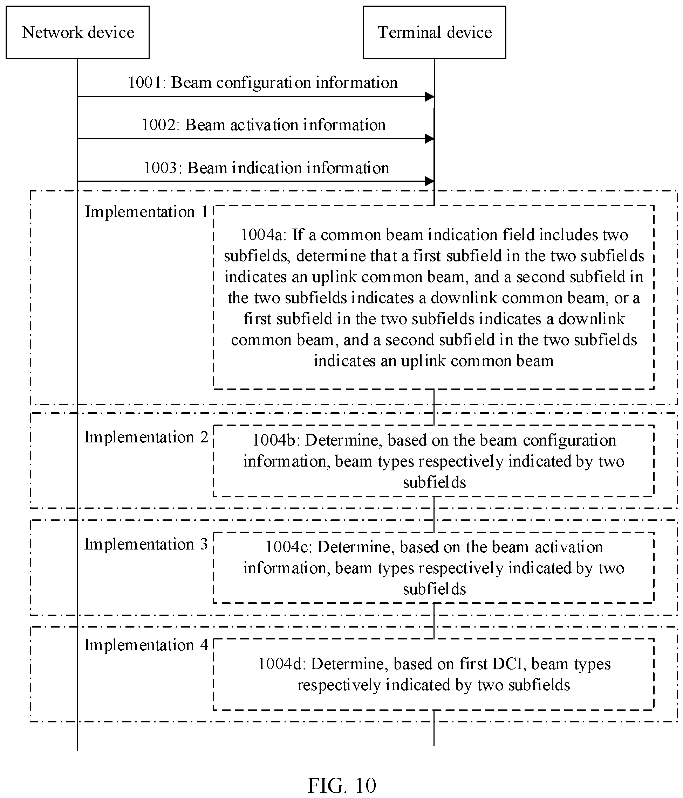

This application provides Embodiment 7. The technical solution in Embodiment 7 provided in this application is described below with reference to FIG. 10.

FIG. 10 is a schematic diagram of another embodiment of a beam management method according to an embodiment of this application. In FIG. 10, the beam management method includes the following steps.

1001: A network device sends beam configuration information to a terminal device. Correspondingly, the terminal device receives the beam configuration information from the network device.

1002: The network device sends beam activation information to the terminal device. Correspondingly, the terminal device receives the beam activation information from the network device.

1003: The network device sends beam indication information to the terminal device. Correspondingly, the terminal device receives the beam indication information from the network device.

Step 1001 to step 1003 are similar to the related descriptions of step 501 to step 503 in the embodiment shown in FIG. 5. For details, refer to the related descriptions of step 501 and step 502 in the embodiment shown in FIG. 5.

Optionally, the beam indication information in step 1003 is carried in first DCI.

K field values in a common beam indication field in the first DCI may be in a one-to-one correspondence with K common beams activated by using the beam activation information. For example, when the common beam indication field in the first DCI has a value, it indicates a common beam corresponding to the field value.

There are a plurality of beam types of common beams. The terminal device first determines a beam type indicated by the common beam indication field, and then determines a specific common beam or specific common beams with reference to the beam activation information.

This embodiment describes how the terminal device determines, when the common beam indication field indicates common beams of two beam types, the beam type indicated by the common beam indication field. Specifically, the common beam indication field includes two subfields, and the two subfields respectively indicate different beam types. The terminal device determines the beam types respectively indicated by the two subfields.

Four possible implementations in which the terminal device determines the beam types respectively indicated by the two subfields are described below. 1. An implementation 1 is described below with reference to step 1004a. Optionally, the embodiment shown in FIG. 10 further includes step 1004a. Step 1004a is performed after step 1003.

Step 1004a: If the common beam indication field includes two subfields, the terminal device determines that a first subfield in the two subfields indicates an uplink common beam, and a second subfield in the two subfields indicates a downlink common beam, or a first subfield in the two subfields indicates a downlink common beam, and a second subfield in the two subfields indicates an uplink common beam.

Specifically, the beam types respectively indicated by the two subfields may be specified in a preset communication protocol. For example, it is specified in the preset communication protocol that the first subfield in the two subfields indicates the uplink common beam, and the second subfield in the two subfields indicates the downlink common beam; or the first subfield in the two subfields indicates the downlink common beam, and the second subfield in the two subfields indicates the uplink common beam.

In this case, the terminal device may determine, based on a stipulation in the preset communication protocol, that the first subfield in the two subfields indicates the uplink common beam, and the second subfield in the two subfields indicates the downlink common beam; or the first subfield in the two subfields indicates the downlink common beam, and the second subfield in the two subfields indicates the uplink common beam. 2. An implementation 2 is described below with reference to step 1004b. Optionally, the embodiment shown in FIG. 10 further includes step 1004b. Step 1004b is performed after step 1003.

Step 1004b: The terminal device determines, based on the beam configuration information, the beam types respectively indicated by the two subfields.

Optionally, the beam configuration information includes an uplink common beam set and a downlink common beam set. That the terminal device determines, based on the beam configuration information, the beam types respectively indicated by the two subfields includes: The terminal device determines, based on configuration rankings respectively corresponding to the uplink common beam set and the downlink common beam set, subfields respectively corresponding to an uplink common beam and a downlink common beam; or the terminal device determines, based on set index rankings respectively corresponding to the uplink common beam set and the downlink common beam set, subfields respectively corresponding to an uplink common beam and a downlink common beam.

Specifically, RRC includes the beam configuration information. The network device configures, by using the RRC, the beam types respectively corresponding to the two subfields.

For example, the RRC includes an uplink common beam set and a downlink common beam set. In the RRC, a beam type corresponding to a common beam set with a high configuration ranking corresponds to the first subfield, and a beam type corresponding to a common beam set with a low configuration ranking corresponds to the second subfield. Alternatively, in the RRC, a beam type corresponding to a common beam set with a low configuration ranking corresponds to the first subfield, and a beam type corresponding to a common beam set with a high configuration ranking corresponds to the second subfield. For example, in the RRC, if the configuration ranking of the uplink common beam set is higher than the configuration ranking of the downlink common beam set, the first subfield indicates the uplink common beam, and the second subfield indicates the downlink common beam.

For another example, the RRC includes an uplink common beam set and a downlink common beam set. If a set index of the uplink common beam set is less than a set index of the downlink common beam set, the first subfield indicates the uplink common beam, and the second subfield indicates the downlink common beam. Alternatively, if a set index of the uplink common beam set is greater than a set index of the downlink common beam set, the first subfield indicates the downlink common beam, and the second subfield indicates the uplink common beam. 3. An implementation 3 is described below with reference to step 1004c. Optionally, the embodiment shown in FIG. 10 further includes step 1004c. Step 1004c is performed after step 1003.

Step 1004c: The terminal device determines, based on the beam activation information, the beam types respectively indicated by the two subfields.

Specifically, the terminal device determines, based on arrangement rankings of an uplink common beam and a downlink common beam activated by using the beam activation information, subfields respectively corresponding to the uplink common beam and the downlink common beam.

For example, the beam activation information is carried in a MAC CE. If the uplink common beam is ranked with a high ranking in common beams activated by using the MAC CE, the first subfield indicates the uplink common beam, and the second subfield indicates the downlink common beam. For example, if the downlink common beam is ranked with a low ranking in the common beams activated by using the MAC CE, the first subfield indicates the downlink common beam, and the second subfield indicates the uplink common beam.

For example, a first common beam activated by using the MAC CE corresponds to the first subfield, and a second common beam activated by using the MAC CE corresponds to the second subfield. 4. An implementation 4 is described below with reference to step 1004d. Optionally, the embodiment shown in FIG. 10 further includes step 1004d. Step 1004d is performed after step 1003.

Step 1004d: The terminal device determines, based on the first DCI, the beam types respectively indicated by the two subfields.

Specifically, the first DCI includes the common beam indication field. The terminal device determines, based on first x bits or last x bits in the common beam indication field or a second indication field included in the first DCI, a beam type indicated by a first subfield in the two subfields and a beam type indicated by a second subfield in the two subfields.

For example, the first x bits or the last x bits in the common beam indication field indicate that the first subfield indicates an uplink common beam, and the second subfield indicates a downlink common beam.

The terminal device determines, by using the technical solution in Embodiment 7, the beam types respectively indicated by the two subfields. Then, the terminal device may determine a common beam specifically indicated by each field value included in the common beam indication field. Field values included in the common beam indication field may be in a one-to-one correspondence with common beams activated by using the beam activation information.

Optionally, after step 1003, and before step 1004a, step 1004b, step 1004c, or step 1004d, the terminal device determines a quantity of subfields included in the common beam indication field and/or a beam type indicated by the subfield. Three possible determining manners are shown below. Determining manner 1: The terminal device determines, based on a beam type configured by using the beam configuration information, the quantity of subfields included in the common beam indication field and/or the beam type indicated by the subfield.

The common beam indication field includes one or two subfields. If the network device configures a common beam mode of the terminal device to a joint common beam mode by using the beam configuration information, or the beam type configured by using the beam configuration information is a joint common beam, the common beam indication field includes one subfield, and the subfield indicates the joint common beam.

If the network device configures a common beam mode of the terminal device to a separate common beam mode by using the beam configuration information, or the beam type configured by using the beam configuration information is a separate common beam, the common beam indication field includes two subfields, and the two subfields respectively indicate an uplink common beam and a downlink common beam. When the common beam indication field includes two subfields, the terminal device performs step 1004a, step 1004b, step 1004c, or step 1004d, to further determine beam types respectively indicated by the two subfields.

Determining manner 2: The terminal device determines, based on a beam type activated by using the beam activation information, the quantity of subfields included in the common beam indication field and/or the beam type indicated by the subfield.

If the beam activation information is used to activate a joint common beam, the terminal device determines that the common beam indication field includes one subfield, that is, the common beam indication field does not include a second subfield. If the beam activation information is not used to activate the joint common beam, or the beam activation information is used to activate an uplink common beam and a downlink common beam, the terminal device determines that the common beam indication field includes two subfields. When the common beam indication field includes two subfields, the terminal device performs step 1004a, step 1004b, step 1004c, or step 1004d, to further determine beam types respectively indicated by the two subfields.

If the terminal device receives both a MAC CE used to activate the joint common beam and a MAC CE used to activate the separate common beam, the terminal device uses a MAC CE received later, that is, the terminal device determines, based on the MAC CE received later by the terminal device, the type of the common beam indicated by the DCI. That is, the MAC CE used to activate the joint common beam and the MAC CE used to activate the separate common beam cover each other, and the MAC CE received later by the terminal device covers the MAC CE received earlier by the terminal device.

Determining manner 3: The terminal device determines, based on the first DCI, the quantity of subfields included in the common beam indication field and/or the beam type indicated by the subfield.

Specifically, the first DCI includes the common beam indication field. The terminal device determines, based on first x bits or last x bits in the common beam indication field or a third indication field included in the first DCI, the quantity of subfields included in the common beam indication field and/or the beam type indicated by the subfield.

For example, if the first x bits or the last x bits in the common beam indication field indicate that the quantity of subfields included in the common beam indication field is 1, it can be learned that the common beam indication field includes one subfield; or if the first x bits or the last x bits in the common beam indication field indicate that the quantity of subfields included in the common beam indication field is 2, a first subfield in the two subfields indicates an uplink common beam, and a second subfield indicates a downlink common beam.

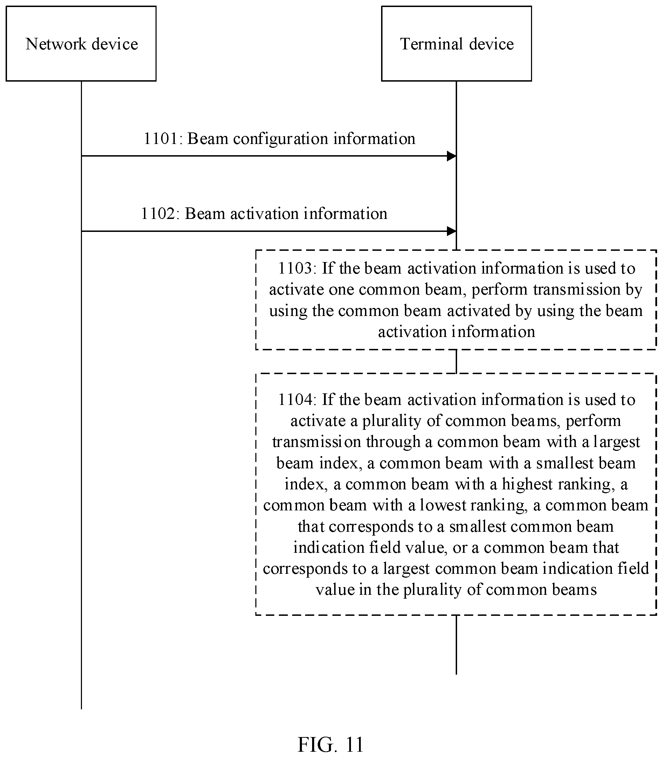

In this application, if the DCI sent by the network device to the terminal device does not include the common beam indication field, how the network device indicates a common beam to the terminal device is unknown. This application provides a technical solution in Embodiment 8 to resolve this problem. The technical solution in Embodiment 8 provided in this application is described below with reference to FIG. 11.

FIG. 11 is a schematic diagram of another embodiment of a beam management method according to an embodiment of this application. In FIG. 11, the beam management method includes the following steps.

1101: A network device sends beam configuration information to a terminal device. Correspondingly, the terminal device receives the beam configuration information from the network device.

1102: The network device sends beam activation information to the terminal device. Correspondingly, the terminal device receives the beam activation information from the network device.

Step 1101 and step 1102 are similar to step 501 and step 502 in the embodiment shown in FIG. 5. For details, refer to the related descriptions of step 501 and step 502 in the embodiment shown in FIG. 5. Details are not described herein.

In this embodiment, DCI sent by the network device to the terminal device does not include a common beam indication field, that is, the DCI is only used to schedule data, and does not indicate a common beam.

Optionally, the embodiment shown in FIG. 11 further includes step 1103 or step 1104. Step 1103 or step 1104 is performed after step 1102.

1103: If the beam activation information is used to activate one common beam, the terminal device performs transmission through the common beam activated by using the beam activation information.

Specifically, the beam activation information is carried in a MAC CE. When the DCI does not include the common beam indication field or the common beam indication field included in the DCI does not indicate a common beam, the MAC CE can be used to activate only one common beam. Alternatively, when the DCI does not include the common beam indication field or the common beam indication field included in the DCI does not indicate a common beam, the MAC CE can be used to activate only one common beam for common beams of a same beam type. That if the beam activation information is used to activate one common beam, the terminal device performs transmission through the common beam activated by using the beam activation information includes: If the beam activation information is used to activate only one common beam, the terminal device performs transmission through the common beam activated by using the beam activation information.

Alternatively, that if the beam activation information is used to activate one common beam, the terminal device performs transmission through the common beam activated by using the beam activation information includes: If the beam activation information is used to activate only one common beam for common beams of a same beam type, the terminal device performs transmission through the common beam of the beam type activated by using the beam activation information. 1104: If the beam activation information is used to activate a plurality of common beams, the terminal device performs transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

Specifically, the beam activation information is carried in a MAC CE. When the DCI does not include the common beam indication field or the common beam indication field included in the DCI does not indicate a common beam, if the MAC CE is used to activate a plurality of common beams, the terminal device may perform transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

Further, the DCI does not include the common beam indication field or the common beam indication field included in the DCI does not indicate a common beam. For common beams of a same beam type, if the MAC CE is used to activate a plurality of common beams, the terminal device may perform transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams. Each of the plurality of common beams corresponds to a common beam indication field value. This may be specifically specified by using a communication protocol. It should be noted that the network device may configure, by using the beam configuration information, whether the DCI includes the common beam indication field (for example, a TCI field). In this way, the terminal device may determine, by using the beam configuration information, that the DCI does not include the common beam indication field. Alternatively, the network device indicates, by using the beam activation information, whether the DCI includes the common beam indication field. For example, the network device indicates, by using a field in the MAC CE, whether the DCI includes the common beam indication field. Alternatively, the network device indicates, by using first x bits in the DCI, whether the DCI indicates a common beam.

When the DCI does not include the common beam indication field or the common beam indication field included in the DCI does not indicate a common beam, the network device indicates a common beam to the terminal device by using the technical solution in Embodiment 8. In this way, the terminal device may determine a corresponding common beam for transmission between the terminal device and the network device.

In embodiments of this application, optionally, the beam indication information shown in FIG. 5 is carried in first DCI.

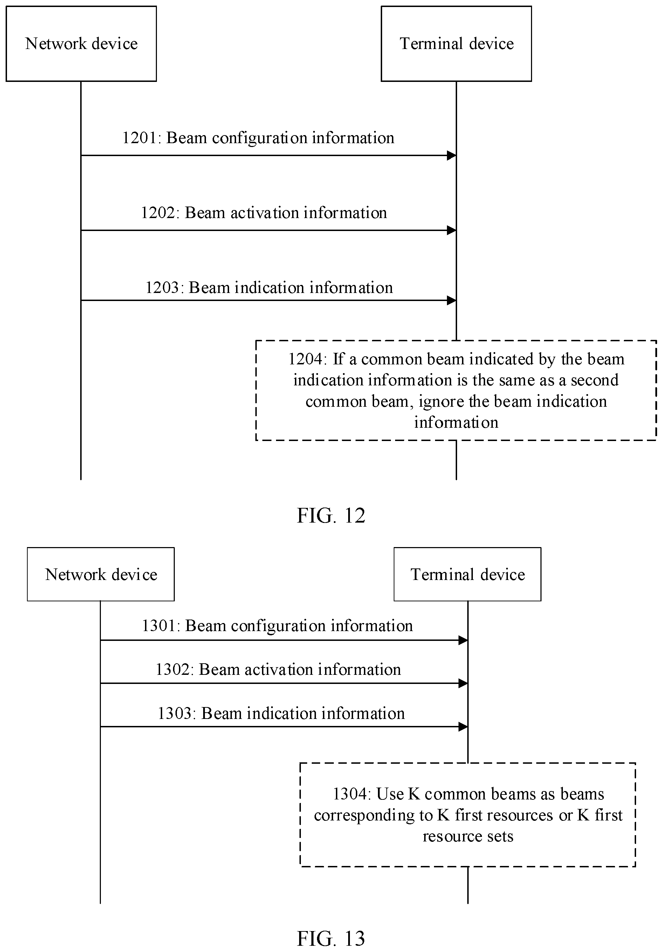

The first DCI includes a common beam indication field. When a common beam indicated by the first DCI is the same as a common beam currently used by the terminal device (that is, the terminal device does not need to update the common beam), and the common beam indication field included in the first DCI still indicates the common beam, how to prevent the terminal device from updating the common beam is unknown. This application provides a technical solution in Embodiment 9 to resolve this problem. The technical solution in Embodiment 9 provided in this application is described below with reference to FIG. 12.

FIG. 12 is a schematic diagram of another embodiment of a beam management method according to an embodiment of this application. In FIG. 12, the beam management method includes the following steps.

1201: A network device sends beam configuration information to a terminal device. Correspondingly, the terminal device receives the beam configuration information from the network device.

1202: The network device sends beam activation information to the terminal device. Correspondingly, the terminal device receives the beam activation information from the network device.

1203: The network device sends beam indication information to the terminal device. Correspondingly, the terminal device receives the beam indication information from the network device.

Step 1201 to step 1203 are similar to step 501 to step 503 in the embodiment shown in FIG. 5. For details, refer to the related descriptions of step 501 to step 503 in the embodiment shown in FIG. 5.

In a possible implementation, the beam indication information is carried in first DCI. The first DCI includes a dedicated common beam indication field value. The dedicated common beam indication field value indicates that the first DCI does not indicate any common beam. In other words, the dedicated common beam indication field value does not correspond to any common beam. Another common beam indication field value in the first DCI indicates a common beam. When the terminal device performs mapping between the common beam indication field value and a common beam activated by using a MAC CE, the terminal device skips the dedicated common beam indication field value.

For example, the dedicated common beam indication field value is a smallest field value, and the terminal device skips the smallest field value, and performs mapping between another field value in the first DCI and the common beam activated by using the MAC CE.

For example, the dedicated common beam indication field value is a largest field value, and the terminal device skips the largest subfield value, and performs mapping between another field value in the first DCI and the common beam activated by using the MAC CE.

In another possible implementation, the terminal device may ignore the beam indication information. Based on this implementation, optionally, this embodiment further includes step 1204. Step 1204 is performed after step 1203.

Step 1204: If a common beam indicated by the common beam indication information is the same as a second common beam, the terminal device ignores the beam indication information.

The second common beam includes any one of the following: a common beam currently used by the terminal device and a common beam that is most recently indicated to the terminal device or most recently takes effect.

For example, the beam indication information in step 1103 is used by the network device to indicate a common beam to the terminal device for an (n+1)^{th} time after the terminal device performs initial access. In this case, the common beam that is most recently indicated to the terminal device or most recently takes effect includes a common beam that is indicated by the network device to the terminal device for an n^{th} time after the terminal device performs initial access or a common beam that is indicated by the network device to the terminal device for an n^{th} time and that takes effect. Herein, n is an integer greater than or equal to 1.

For example, the beam indication information in step 1103 is used by the network device to indicate a common beam to the terminal device for an (n+1)^{th} time after the terminal device performs beam failure recovery. In this case, the common beam that is most recently indicated to the terminal device or most recently takes effect includes a common beam that is indicated by the network device to the terminal device for an n^{th} time after the terminal device successfully performs beam failure recovery or a common beam that is indicated by the network device to the terminal device for an n^{th} time and that takes effect. Herein, n is an integer greater than or equal to 1.

Specifically, when the common beam indicated by the beam indication information is different from the second common beam, the terminal device may directly ignore the beam indication information. The terminal device does not need to determine, based on the effective time in the embodiment shown in FIG. 8, that the common beam indicated by the common beam indication field takes effect. That is, only when the beam indication information is different from the common beam currently used by the terminal device or is different from a common beam previously indicated by the network device to the terminal device, the terminal device updates the common beam based on the beam indication information.

In the technical solution in Embodiment 9, when the common beam indicated by the beam indication information is the same as the common beam currently used by the terminal device (that is, the terminal device does not need to update the common beam), and the common beam indication field included in the beam indication information still indicates the common beam, the terminal device may skip mapping the dedicated common beam indication field value based on the dedicated common beam indication field value included in the beam indication information, or the terminal device ignores the beam indication information. In this way, the terminal device does not update the common beam, to avoid unnecessary network resource overheads. For example, the terminal device feeds back an ACK or a NACK to the network device for the beam indication information, and the network device and the terminal device determine an effective time of the common beam.

This application provides Embodiment 10. Atechnical solution in Embodiment 10 provided in this application is described below with reference to FIG. 13.

FIG. 13 is a schematic diagram of another embodiment of a beam management method according to an embodiment of this application. In FIG. 13, the beam management method includes the following steps.

1301: A network device sends beam configuration information to a terminal device. Correspondingly, the terminal device receives the beam configuration information from the network device.

1302: The network device sends beam activation information to the terminal device. Correspondingly, the terminal device receives the beam activation information from the network device.

1303: The network device sends beam indication information to the terminal device. Correspondingly, the terminal device receives the beam indication information from the network device.

Step 1301 to step 1303 are similar to step 501 to step 503 in the embodiment shown in FIG. 5. For details, refer to the related descriptions of step 501 to step 503 in the embodiment shown in FIG. 5.

If the beam indication information in step 1303 indicates K common beams of a same beam type, and the network device configures K first resources or K first resource sets for the terminal device, optionally, this embodiment further includes step 1304.

1304: The terminal device uses the K common beams as beams respectively corresponding to the K first resources or the K first resource sets.

The K common beams are in a one-to-one correspondence with the K first resources or the K first resource sets, and each of the K first resource sets includes the first resource. Herein, K is an integer greater than or equal to 2.

Specifically, a first common beam in the K common beams is used to transmit a first resource that appears first in the K first resources or a first resource included in a first resource set that appears first in the K first resource sets, a second common beam in the K common beams is used to transmit a second first resource in the K first resources or a first resource included in a second first resource set in the K first resource sets, and by analogy, a K^{th} common beam is used to transmit a K^{th} first resource or a first resource included in a K^{th} first resource set.

The K common beams are ranked based on activation rankings of the common beams activated by using the beam activation information, ranked based on beam index rankings of the common beams activated by using the beam activation information, ranked based on indication rankings of the common beams in the beam indication information, or ranked based on index rankings of the common beams indicated by the beam indication information.

The K first resources are ranked based on configuration rankings of the first resources, or ranked based on resource index rankings of the first resources. The K first resource sets are ranked based on configuration rankings of the K first resource sets, ranked based on resource index rankings of first resources respectively included in the K first resource sets, or ranked based on set index rankings of the K first resource sets.

The K common beams are in a one-to-one correspondence with the K first resources based on any one of the foregoing rankings.

For example, a common beam with a first activation ranking is used to transmit a first resource or a first resource set with a first configuration ranking, a common beam with a second activation ranking is used to transmit a first resource or a first resource set with a second configuration ranking, and by analogy, a common beam with a K^{th} activation ranking is used to transmit a first resource or a first resource set with a K^{th} configuration ranking.

For example, a common beam with a first indication ranking is used to transmit a first resource or a first resource set with a first resource index ranking, a common beam with a second indication ranking is used to transmit a first resource or a first resource set with a second resource index ranking, and by analogy, a common beam with a K^{th} indication ranking is used to transmit a first resource or a first resource set with a K^{th} resource index ranking.

The first resource includes any one of the following: a CSI-RS for which neither a repetition parameter nor a trs-Info parameter is configured, an SRS of a codebook type, an SRS of a non-codebook type, and a CSI-RS associated with the SRS of the non-codebook type.

Specifically, in a multi-station transmission scenario, the network device indicates a plurality of common beams to the terminal device by using the beam indication information. Each common beam corresponds to an uplink channel, a downlink channel, an uplink reference signal, or a downlink reference signal of a transmission and reception point (transmission and reception point, TRP).

For example, the beam indication information indicates two uplink common beams, and the network device configures two SRS resource sets for the terminal device. In this case, a first uplink common beam in the two uplink common beams is used to transmit a first SRS resource set or an SRS resource set with a smaller index in the two SRS resource sets, and a second uplink common beam in the two uplink common beams is used to transmit a second SRS resource set or an SRS resource set with a larger index in the two SRS resource sets.

The first uplink common beam includes an uplink common beam that appears first in the two uplink common beams, an uplink common beam with a smaller beam index in the two uplink common beams, or an uplink common beam that corresponds to a smaller common beam field value in the two uplink common beams.

The second uplink common beam includes an uplink common beam that appears second in the two uplink common beams, an uplink common beam with a larger beam index in the two uplink common beams, or an uplink common beam that corresponds to a larger common beam field value in the two uplink common beams.

The SRS resource set includes an SRS resource set of a codebook type, an SRS resource set of a non-codebook type, an SRS resource set for antenna switch, or an SRS resource set for beam management.

For another example, the beam indication information indicates two downlink common beams, and the network device configures two CSI-RS resources for the terminal device. In this case, a first downlink common beam in the two downlink common beams is used to transmit a first CSI-RS resource or a CSI-RS resource with a smaller index in the two CSI-RS resources, and a second downlink common beam in the two downlink common beams is used to transmit a second CSI-RS resource or a CSI-RS resource with a larger index in the two CSI-RS resources. The two CSI-RS resources may also be referred to as two CSI-RS resource sets or two CSI-RS resource settings. This is not specifically limited in this application.

The first downlink common beam includes a downlink common beam that appears first in the two downlink common beams, a downlink common beam with a smaller beam index in the two downlink common beams, or a downlink common beam that corresponds to a smaller common beam field value in the two downlink common beams.

The second downlink common beam includes a downlink common beam that appears second in the two downlink common beams, a downlink common beam with a larger beam index in the two downlink common beams, or a downlink common beam that corresponds to a larger common beam field value in the two downlink common beams.

The CSI-RS resource set may be a CSI-RS resource set used for beam management (namely, a CSI-RS resource set for which a repetition parameter is configured), a CSI-RS resource set used for time/frequency tracking (namely, a CSI-RS resource set for which trs-Info is configured), or a CSI-RS resource set used for CSI measurement (namely, a CSI-RS resource set for which neither a repetition parameter nor trs-Info is configured).

For another example, the beam indication information indicates two downlink common beams, the network device configures two SRS resource sets of a non-codebook type for the terminal device, and each resource set is associated with one CSI-RS. In this case, a third downlink common beam in the two downlink common beams is used to transmit a CSI-RS associated with a first SRS resource set of the non-codebook type or an SRS resource set of the non-codebook type with a smaller index in the two SRS resource sets of the non-codebook type, and a fourth downlink common beam in the two downlink common beams is used to transmit a CSI-RS associated with a second SRS resource set of the non-codebook type or an SRS resource set of the non-codebook type with a larger index in the two SRS resource sets of the non-codebook type.

The third downlink common beam includes a downlink common beam that appears first in the two downlink common beams, a downlink common beam with a smaller beam index in the two downlink common beams, or a downlink common beam that corresponds to a smaller common beam field value in the two downlink common beams.

The fourth downlink common beam includes a downlink common beam that appears second in the two downlink common beams, a downlink common beam with a larger beam index in the two downlink common beams, or a downlink common beam that corresponds to a larger common beam field value in the two downlink common beams.

In the technical solution in Embodiment 10, when the beam indication information indicates K common beams of a same beam type, and the network device configures K first resources or K first resource sets for the terminal device, the terminal device determines corresponding common beams for the K first resources or the K resource sets, to transmit the corresponding first resources. Optionally, in step 503 in the embodiment shown in FIG. 5, the beam indication information is used by the network device to indicate a common beam to the terminal device for a first time after the terminal device performs initial access. In this case, before the common beam indicated by the beam indication information takes effect, how the terminal device performs transmission with the network device is unknown. This application provides a technical solution in Embodiment 11 to resolve this problem.

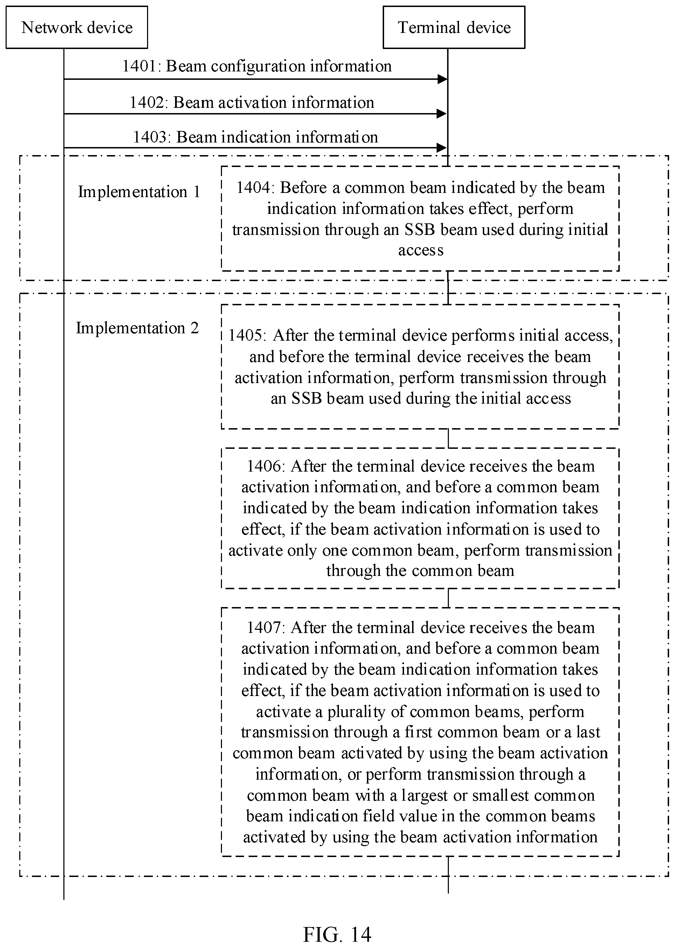

The technical solution in Embodiment 11 provided in this application is described below with reference to FIG. 14.

FIG. 14 is a schematic diagram of another embodiment of a beam management method according to an embodiment of this application. In FIG. 14, the beam management method includes the following steps.

1401: A network device sends beam configuration information to a terminal device. Correspondingly, the terminal device receives the beam configuration information from the network device.

1402: The network device sends beam activation information to the terminal device. Correspondingly, the terminal device receives the beam activation information from the network device.

1403: The network device sends beam indication information to the terminal device. Correspondingly, the terminal device receives the beam indication information from the network device.

Step 1401 to step 1403 are similar to step 501 to step 503 in the embodiment shown in FIG. 5. For details, refer to the related descriptions of step 501 to step 503 in the embodiment shown in FIG. 5.

In this embodiment, optionally, the beam indication information is used by the network device to indicate a common beam to the terminal device for a first time after the terminal device performs initial access. Therefore, before the common beam indicated by the beam indication information takes effect, two possible implementations of performing transmission between the terminal device and the network device are shown in this embodiment.

An implementation 1 is described below with reference to step 1404. Optionally, this embodiment further includes step 1404.

1404: Before the common beam indicated by the beam indication information takes effect, the terminal device performs transmission through an SSB beam used during the initial access.

For example, the beam indication information is used by the network device to indicate an uplink common beam to the terminal device for a first time after the terminal device performs initial access. In this case, the terminal device performs uplink transmission through the SSB beam used during the initial access. Similarly, the network device performs uplink transmission with the terminal device through the SSB beam.

For example, the beam indication information is used by the network device to indicate a downlink common beam to the terminal device for a first time after the terminal device performs initial access. In this case, the terminal device performs downlink receiving through the SSB beam used during the initial access. Similarly, the network device performs downlink sending to the terminal device through the SSB beam.

For example, the beam indication information is used by the network device to indicate a joint common beam to the terminal device for a first time after the terminal device performs initial access. In this case, the terminal device performs uplink transmission and downlink receiving through the SSB beam used during the initial access. Similarly, the network device performs uplink transmission with the terminal device through the SSB beam, and performs downlink sending to the terminal device through the SSB beam.

It should be noted that there is no fixed execution sequence between step 1404 and step 1401 to step 1403. FIG. 14 is merely an example. In actual application, before the common beam indicated by the beam indication information takes effect, if the terminal device needs to transmit data, the terminal device performs step 1404.

An implementation 2 is described below with reference to step 1405 to step 1407. Optionally, this embodiment further includes step 1405 to step 1407. Step 1405 is performed before step 1402. In the implementation 2, the beam activation information is used by the network device to activate a common beam for the terminal device for a first time after the terminal device performs initial access.

1405: After the terminal device performs initial access, and before the terminal device receives the beam activation information, the terminal device performs transmission through an SSB beam used during the initial access.

For example, the beam activation information is used by the network device to activate an uplink common beam for the terminal device for a first time after the terminal device performs initial access. In this case, after the terminal device performs initial access, and before the terminal device receives the beam activation information, the terminal device performs uplink transmission through the SSB beam used during the initial access. Similarly, the network device performs uplink transmission with the terminal device through the SSB beam.

For example, the beam activation information is used by the network device to activate a downlink common beam for the terminal device for a first time after the terminal device performs initial access. In this case, after the terminal device performs initial access, and before the terminal device receives the beam activation information, the terminal device performs downlink receiving through the SSB beam used during the initial access. Similarly, the network device performs downlink sending to the terminal device through the SSB beam.

For example, the beam activation information is used by the network device to activate a joint common beam for the terminal device for a first time after the terminal device performs initial access, or the beam activation information is used by the network device to activate an uplink common beam and a downlink common beam for the terminal device for a first time after the terminal device performs initial access. In this case, after the terminal device performs initial access, and before the terminal device receives the beam activation information, the terminal device performs uplink transmission or downlink receiving through the SSB beam used during the initial access. Similarly, the network device performs uplink transmission with the terminal device through the SSB beam, and performs downlink sending to the terminal device through the SSB beam.

1406: After the terminal device receives the beam activation information, and before the common beam indicated by the beam indication information takes effect, if the beam activation information is used to activate one common beam, the terminal device performs transmission through the common beam activated by using the beam activation information.

For example, the beam activation information is used by the network device to activate an uplink common beam for the terminal device for a first time after the terminal device performs initial access. In this case, after the terminal device receives the beam activation information, the terminal device may determine the uplink common beam activated by using the beam activation information, and the terminal device performs uplink transmission by using the uplink common beam. Similarly, the network device performs uplink transmission with the terminal device through the SSB beam.

For example, the beam activation information is used by the network device to activate a downlink common beam for the terminal device for a first time after the terminal device performs initial access. In this case, after the terminal device receives the beam activation information, the terminal device may determine the downlink common beam activated by using the beam activation information, and the terminal device performs downlink receiving by using the downlink common beam. Similarly, the network device performs downlink sending to the terminal device through the SSB beam.

For example, the beam activation information is used by the network device to activate a joint common beam for the terminal device for a first time after the terminal device performs initial access. In this case, after the terminal device receives the beam activation information, the terminal device may determine the joint common beam activated by using the beam activation information, and the terminal device performs uplink transmission and downlink receiving by using the joint common beam. Similarly, the network device performs uplink transmission with the terminal device by using the joint common beam, and performs downlink sending to the terminal device by using the joint common beam.

1407: After the terminal device receives the beam activation information, and before the common beam indicated by the beam indication information takes effect, if the beam activation information is used to activate a plurality of common beams, the terminal device performs transmission through a first common beam or a last common beam activated by using the beam activation information, or performs transmission through a common beam with a largest or smallest common beam indication field value in the common beams activated by using the beam activation information.

For example, the beam activation information is used by the network device to activate a plurality of uplink common beams for the terminal device for a first time after the terminal device performs initial access. In this case, after the terminal device receives the beam activation information, the terminal device may determine the plurality of uplink common beams activated by using the beam activation information, and the terminal device performs uplink transmission by using a first uplink common beam or a last uplink common beam in the plurality of uplink common beams. Similarly, the network device performs uplink transmission with the terminal device by using the first uplink common beam or the last uplink common beam in the plurality of uplink common beams.

For example, the beam activation information is used by the network device to activate a plurality of downlink common beams for the terminal device for a first time after the terminal device performs initial access. In this case, after the terminal device receives the beam activation information, the terminal device may determine the plurality of downlink common beams activated by using the beam activation information, and the terminal device performs downlink receiving by using a first downlink common beam or a last downlink common beam in the plurality of downlink common beams. Similarly, the network device performs downlink sending to the terminal device by using the first downlink common beam or the last downlink common beam in the plurality of downlink common beams.

For example, the beam activation information is used by the network device to activate a plurality of joint common beams for the terminal device for a first time after the terminal device performs initial access. In this case, after the terminal device receives the beam activation information, the terminal device may determine the plurality of joint common beams activated by using the beam activation information, and the terminal device performs uplink transmission and downlink receiving by using a first joint common beam or a last joint common beam in the plurality of joint common beams. Similarly, the network device performs uplink transmission with the terminal device and downlink sending to the terminal device by using the first joint common beam or the last joint common beam in the plurality of joint common beams.

It should be noted that step 1406 or step 1407 is performed after step 1402. There is no fixed execution sequence between step 1406 or step 1407 and step 1403. FIG. 14 is merely an example. After the terminal device receives the beam activation information, and before the common beam indicated by the beam indication information takes effect, if the terminal device needs to transmit data, the terminal device performs step 1406 or step 1407.

In the technical solution in Embodiment 11, the beam indication information is used by the network device to indicate the common beam to the terminal device for the first time after the terminal device performs initial access. Before the common beam indicated by the beam indication information takes effect, two possible implementations in which the terminal device performs transmission through the common beam are provided, to facilitate communication between the terminal device and the network device. In this way, a case in which normal communication cannot be performed between the terminal device and the network device because the common beam indicated by the beam indication information does not take effect is avoided, and performance of a communication system is improved.

Optionally, in step 503 in the embodiment shown in FIG. 5, the beam indication information is used by the network device to indicate a common beam to the terminal device for a first time after beam failure occurs on the terminal device. In this case, before the common beam indicated by the beam indication information takes effect, how the terminal device performs transmission with the network device is unknown. This application provides a technical solution in Embodiment 12 to resolve this problem.

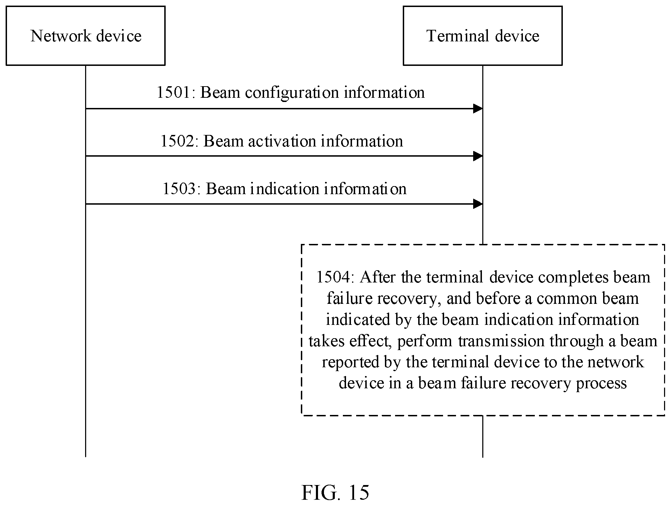

The technical solution in Embodiment 12 provided in this application is described below with reference to FIG. 15.

FIG. 15 is a schematic diagram of another embodiment of a beam management method according to an embodiment of this application. In FIG. 15, the beam management method includes the following steps.

1501: A network device sends beam configuration information to a terminal device. Correspondingly, the terminal device receives the beam configuration information from the network device.

1502: The network device sends beam activation information to the terminal device. Correspondingly, the terminal device receives the beam activation information from the network device.

1503: The network device sends beam indication information to the terminal device. Correspondingly, the terminal device receives the beam indication information from the network device.

Step 1501 to step 1503 are similar to step 501 to step 503 in the embodiment shown in FIG. 5. For details, refer to the related descriptions of step 501 to step 503 in the embodiment shown in FIG. 5.

In this embodiment, optionally, the beam indication information is used by the network device to indicate a common beam to the terminal device for a first time after beam failure occurs on the terminal device. This embodiment further includes step 1504.

1504: After the terminal device completes beam failure recovery, and before the common beam indicated by the beam indication information takes effect, the terminal device performs transmission through a beam reported by the terminal device to the network device in a beam failure recovery process.

That the terminal device performs transmission through a beam reported by the terminal device to the network device in a beam failure recovery process includes: The terminal device performs uplink transmission and downlink receiving by using the beam reported by the terminal device to the network device in the beam failure recovery process. Similarly, the network device performs uplink transmission with the terminal device and downlink sending to the terminal device by using the beam reported by the terminal device to the network device in the beam failure recovery process.

It should be noted that there is no fixed execution sequence between step 1504 and step 1501 to step 1503. After the terminal device completes beam failure recovery, and before the common beam indicated by the beam indication information takes effect, the terminal device may perform step 1504 provided that the terminal device needs to transmit data. Specifically, step 1504 may be performed before step 1501, or may be performed in a process of performing step 1501 to step 1503, or step 1504 may be performed after step 1503. This is not specifically limited in this application.

It should be noted that step 1504 may be replaced with the following content: After the terminal device receives a beam failure recovery response message, and before the common beam indicated by the beam indication information takes effect, the terminal device performs transmission through a beam reported by the terminal device to the network device in a beam failure recovery process. Alternatively, step 1504 may be replaced with the following content: After a time obtained by adding a preset time interval (for example, 28 symbols) and a moment at which the terminal device receives a beam failure recovery response message, and before the common beam indicated by the beam indication information takes effect, the terminal device performs transmission through a beam reported by the terminal device to the network device in a beam failure recovery process.

In the technical solution in Embodiment 12, the beam indication information is used by the network device to indicate the common beam to the terminal device for the first time after beam failure occurs on the terminal device. Before the common beam indicated by the beam indication information takes effect, a specific implementation in which the terminal device performs transmission through the common beam is provided, to facilitate communication between the terminal device and the network device. In this way, a case in which normal communication cannot be performed between the terminal device and the network device because the common beam indicated by the beam indication information does not take effect is avoided, and performance of a communication system is improved.

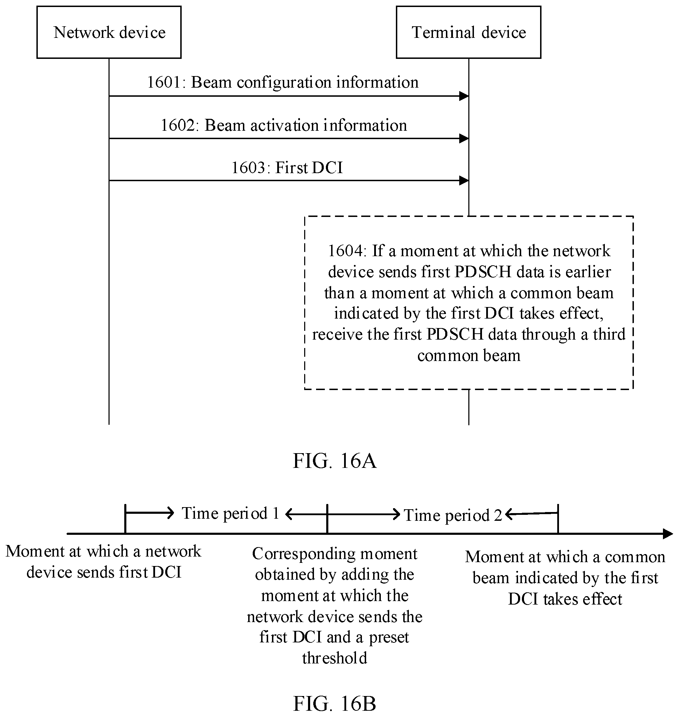

Optionally, in the embodiment shown in FIG. 5, the beam indication information is carried in first DCI. The first DCI further schedules first PDSCH data. If a moment at which the network device sends the first PDSCH data is earlier than a moment at which a common beam indicated by the first DCI takes effect, how the terminal device receives the first PDSCH data is unknown. This application provides a technical solution in Embodiment 13 to resolve this problem. The technical solution in Embodiment 13 provided in this application is described below with reference to FIG. 16A.

FIG. 16A is a schematic diagram of another embodiment of a beam management method according to an embodiment of this application. In FIG. 16A, the beam management method includes the following steps.

1601: A network device sends beam configuration information to a terminal device. Correspondingly, the terminal device receives the beam configuration information from the network device.

1602: The network device sends beam activation information to the terminal device. Correspondingly, the terminal device receives the beam activation information from the network device.

1603: The network device sends first DCI to the terminal device. Correspondingly, the terminal device receives the first DCI from the network device.

Step 1601 to step 1603 are similar to step 501 to step 503 in the embodiment shown in FIG. 5. For details, refer to the related descriptions of step 501 to step 503 in the embodiment shown in FIG. 5.

Optionally, this embodiment further includes step 1604. Step 1604 is performed after step 1603. 1604: If a moment at which the network device sends first PDSCH data is earlier than a moment at which a common beam indicated by the first DCI takes effect, the terminal device receives the first PDSCH data through a third common beam.

The first PDSCH data is PDSCH data scheduled by the first DCI. The moment at which the network device sends the first PDSCH data may be understood as a moment at which the terminal device receives the first PDSCH data.

Specifically, after the terminal device receives the first DCI, the terminal device needs a period of time to decode the first DCI, and only after the decoding succeeds, the terminal device can determine whether the first DCI schedules the PDSCH data, a beam (namely, the common beam indicated by the first DCI) used to transmit the PDSCH data, and the like. Therefore, if the moment at which the network device sends the first PDSCH data is earlier than the moment at which the common beam indicated by the first DCI takes effect, the terminal device may receive the first PDSCH data through the third common beam.

In this embodiment, the third common beam includes any one of the following:
I. When a third condition is met, the third common beam is a currently used common beam or a common beam that most recently takes effect or is most recently indicated.

The third condition includes any one or more of the following:
1. The terminal device supports a common beam function.
2. The terminal device enables the common beam function.
3. A common beam indicated by the network device to the terminal device for a first time after the terminal device performs initial access or completes beam failure recovery has taken effect.

Beam indication information is used by the network device to indicate a common beam to the terminal device for an (n+1)^{th} time after the terminal device performs initial access or completes beam failure recovery. That is, the common beam currently used by the terminal device is a common beam indicated by the network device to the terminal device for an n^{th} time after the terminal device performs initial access or completes beam failure recovery. Herein, n is an integer greater than or equal to 1.

The most recently indicated common beam used by the terminal device may be understood as a common beam indicated by the network device to the terminal device for an n^{th} time after the terminal device performs initial access or completes beam failure recovery.

The common beam that most recently takes effect and that is used by the terminal device may be understood as a common beam that is indicated by the network device to the terminal device for an n^{th} time after the terminal device performs initial access or completes beam failure recovery and that takes effect.

II. When a fourth condition is met, the third common beam is an SSB beam used by the terminal device during initial access.

The fourth condition includes any one or more of the following:
1. The terminal device supports a common beam function.
2. The terminal device enables the common beam function.
3. A common beam indicated by the network device to the terminal device for a first time after the terminal device performs initial access does not take effect.

It should be noted that, that the third common beam is an SSB beam used by the terminal device during initial access if a common beam indicated by the network device to the terminal device for a first time after the terminal device performs initial access does not take effect may be replaced with the following content: If the terminal device does not receive the beam activation information in step 1602 after the terminal device initially accesses the network device, the third common beam is an SSB beam used by the terminal device during initial access.

In this embodiment, an example in which if the common beam indicated by the network device to the terminal device for the first time after the terminal device performs initial access does not take effect, the third common beam is the SSB beam used by the terminal device during the initial access is used for description.

III. When a fifth condition is met, the third common beam is a beam reported by the terminal device to the network device during beam failure recovery.

The fifth condition includes any one or more of the following:
1. The terminal device supports a common beam function.
2. The terminal device enables the common beam function.
3. A common beam indicated by the network device to the terminal device for a first time after the terminal device completes beam failure recovery does not take effect.

IV When a sixth condition is met, the third common beam is a common beam activated by using the beam activation information.

The sixth condition includes any one or more of the following:
1. The terminal device supports a common beam function.
2. The terminal device enables the common beam function.
3. After the terminal device initially accesses the network device, the beam activation information is used to activate one common beam.

V When a sixth condition is met, the third common beam is a first common beam, a last common beam, a common beam that corresponds to a largest common beam indication field value, or a common beam that corresponds to a smallest common beam indication field value in a plurality of common beams activated by using the beam activation information.
1. The terminal device supports a common beam function.
2. The terminal device enables the common beam function.
3. After the terminal device initially accesses the network device, the beam activation information is used to activate a plurality of common beams.

Referring to FIG. 16B, if the moment at which the network device sends the first PDSCH data is earlier than the moment at which the common beam indicated by the first DCI takes effect (that is, the moment at which the network device sends the first PDSCH data falls within a time period 1 or a time period 2), the terminal device may perform transmission by using any one of the third common beams shown above.

Further, if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further includes the common beam indicated by the first DCI. The moment at which the network device sends the first DCI may be understood as a moment at which the terminal device receives the first DCI. The preset threshold is duration required by the terminal device to decode the first DCI. As shown in FIG. 16B, if the moment at which the network device sends the first PDSCH data scheduled by the first DCI falls within the time period 2, that is, the moment at which the network device sends the first PDSCH data falls within a time period existing after the terminal device completes decoding of the first DCI, the terminal device may further perform transmission through the common beam indicated by the first DCI.

If the network device sends, after the moment at which the common beam indicated by the first DCI takes effect, the first PDSCH data scheduled by the first DCI, the terminal device performs transmission through the common beam indicated by the first DCI.

It should be noted that in step 1604, the common beam may be an uplink common beam, a downlink common beam, or a joint common beam. In the embodiment shown in FIG. 16A, only a technical solution of how the terminal device receives the first PDSCH data before the common beam scheduled by the first DCI takes effect.

In actual application, the first PDSCH data may be replaced with a CSI-RS triggered by the first DCI. That is, if a moment at which the network device sends the CSI-RS triggered by the first DCI is earlier than the moment at which the common beam indicated by the first DCI takes effect, the terminal device may receive, by using any one of the foregoing third common beams, the CSI-RS triggered by the first DCI.

Alternatively, the first PDSCH data is replaced with a HARQ feedback result corresponding to the first PDSCH data. That is, if a moment at which the terminal device sends the HARQ feedback result corresponding to the first PDSCH data is earlier than the moment at which the common beam indicated by the first DCI takes effect, the terminal device may send the HARQ feedback result corresponding to the first PDSCH data to the network device by using any one of the foregoing third common beams.

Alternatively, the first PDSCH data is replaced with a PUSCH scheduled by the first DCI. That is, if a moment at which the terminal device sends the PUSCH scheduled by the first DCI is earlier than the moment at which the common beam indicated by the first DCI takes effect, the terminal device may send, by using any one of the foregoing third common beams, the PUSCH scheduled by the first DCI.

Alternatively, the first PDSCH data is replaced with an SRS triggered by the first DCI. That is, if a moment at which the terminal device sends the SRS triggered by the first DCI is earlier than the moment at which the common beam indicated by the first DCI takes effect, the terminal device may send the SRS triggered by the first DCI to the network device by using any one of the foregoing third common beams.

In the technical solution in Embodiment 13, the beam indication information is carried in the first DCI, and the first DCI further schedules the first PDSCH data. If the moment at which the network device sends the first PDSCH data is earlier than the moment at which the common beam indicated by the first DCI takes effect, the terminal device performs transmission through the third common beam. For a specific form of the third common beam, refer to the related descriptions in Embodiment 13. In other words, the terminal device receives, by using the technical solution in Embodiment 13, the first PDSCH data scheduled by the first DCI. In this way, a case in which normal communication cannot be performed between the terminal device and the network device because the common beam indicated by the beam indication information does not take effect is avoided, and performance of a communication system is improved.

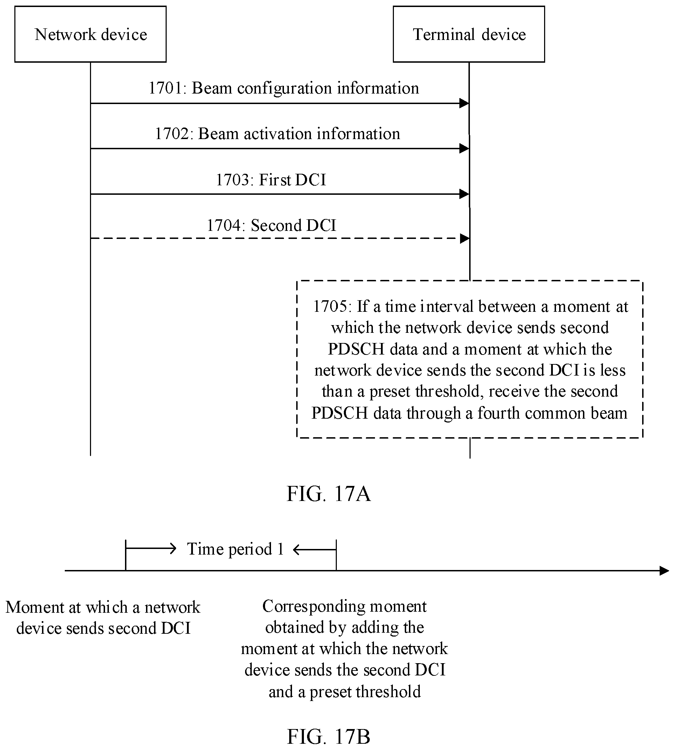

This application provides Embodiment 14. A technical solution in Embodiment 14 provided in this application is described below with reference to FIG. 17A.

FIG. 17A is a schematic diagram of another embodiment of a beam management method according to an embodiment of this application. In FIG. 17A, the beam management method includes the following steps.

1701: A network device sends beam configuration information to a terminal device. Correspondingly, the terminal device receives the beam configuration information from the network device.

1702: The network device sends beam activation information to the terminal device. Correspondingly, the terminal device receives the beam activation information from the network device.

1703: The network device sends first DCI to the terminal device. Correspondingly, the terminal device receives the first DCI from the network device.

Step 1701 to step 1703 are similar to step 501 to step 503 in the embodiment shown in FIG. 5. For details, refer to the related descriptions of step 501 to step 503 in the embodiment shown in FIG. 5.

Optionally, this embodiment further includes step 1704 and step 1705. Step 1704 and step 1705 are performed after step 1703.

1704: The terminal device receives second DCI from the network device.

The second DCI is used to schedule second PDSCH data.

1705: If a time interval between a moment at which the network device sends the second PDSCH data scheduled by the second DCI and a moment at which the network device sends the second DCI is less than a preset threshold, the terminal device receives the second PDSCH data through a fourth common beam.

Specifically, the moment at which the network device sends the second PDSCH data scheduled by the second DCI may be understood as a moment at which the terminal device receives the second PDSCH data, and the moment at which the network device sends the second DCI may be understood as a moment at which the terminal device receives the second DCI. After the terminal device receives the second DCI, the terminal device needs a period of time to decode the second DCI, and only after the decoding succeeds, the terminal device can determine whether the second DCI schedules the PDSCH data, a beam used to transmit the PDSCH data, and the like. The preset threshold is duration required by the terminal device to decode the second DCI. Therefore, if the time interval between the moment at which the network device sends the second PDSCH data scheduled by the second DCI and the moment at which the network device sends the second DCI is less than the preset threshold, the terminal device receives the second PDSCH data by using the fourth common beam.

In this embodiment, the fourth common beam includes any one of the following:
I. When a seventh condition is met, the fourth common beam is a currently used common beam or a common beam that most recently takes effect or is most recently indicated.

The seventh condition includes any one or more of the following:
1. The terminal device supports a common beam function.
2. The terminal device enables the common beam function.
3. A common beam indicated by the network device to the terminal device for a first time after the terminal device performs initial access or completes beam failure recovery has taken effect.

The first DCI is used by the network device to indicate a common beam to the terminal device for an (n+1)^{th} time after the terminal device performs initial access or completes beam failure recovery. That is, the common beam currently used by the terminal device is a common beam indicated by the network device to the terminal device for an n^{th} time after the terminal device performs initial access or completes beam failure recovery. Herein, n is an integer greater than or equal to 1.

The most recently indicated common beam used by the terminal device may be understood as a common beam indicated by the network device to the terminal device for an n^{th} time after the terminal device performs initial access or completes beam failure recovery.

The common beam that most recently takes effect and that is used by the terminal device may be understood as a common beam that is indicated by the network device to the terminal device for an n^{th} time after the terminal device performs initial access or completes beam failure recovery and that takes effect. II. When an eighth condition is met, the fourth common beam is an SSB beam used by the terminal device during initial access.

The eighth condition includes any one or more of the following:
1. The terminal device supports a common beam function.
2. The terminal device enables the common beam function.
3. A common beam indicated by the network device to the terminal device for a first time after the terminal device performs initial access does not take effect.

It should be noted that, that the fourth common beam is an SSB beam used by the terminal device during initial access if a common beam indicated by the network device to the terminal device for a first time after the terminal device performs initial access does not take effect may be replaced with the following content: If the terminal device does not receive the beam activation information in step 1602 after the terminal device initially accesses the network device, the fourth common beam is an SSB beam used by the terminal device during initial access. III. When a ninth condition is met, the fourth common beam is a beam reported by the terminal device to the network device during beam failure recovery.

The ninth condition includes any one or more of the following:
1. The terminal device supports a common beam function.
2. The terminal device enables the common beam function.
3. A common beam indicated by the network device to the terminal device for a first time after the terminal device completes beam failure recovery does not take effect.

IV When a tenth condition is met, the fourth common beam is a common beam activated by using the beam activation information.

The tenth condition includes any one or more of the following:
1. The terminal device supports a common beam function.
2. The terminal device enables the common beam function.
3. After the terminal device initially accesses the network device, the beam activation information is used to activate one common beam.

V When an eleventh condition is met, the fourth common beam is a first common beam, a last common beam, a common beam that corresponds to a largest common beam indication field value, or a common beam that corresponds to a smallest common beam indication field value in a plurality of common beams activated by using the beam activation information.

The eleventh condition includes any one or more of the following:
1. The terminal device supports a common beam function.
2. The terminal device enables the common beam function.
3. After the terminal device initially accesses the network device, the beam activation information is used to activate a plurality of common beams.

Referring to FIG. 17B, if the time interval between the moment at which the network device sends the second PDSCH data scheduled by the second DCI and the moment at which the network device sends the second DCI is less than the preset threshold, that is, the moment at which the network device sends the second PDSCH data scheduled by the second DCI falls within a time period 1 shown in FIG. 17B, the terminal device may perform transmission by using any one of the fourth common beams shown above.

It should be noted that if the time interval between the moment at which the network device sends the second PDSCH data scheduled by the second DCI and the moment at which the network device sends the second DCI is greater than the preset threshold, the terminal device may also perform transmission by using any one of the fourth common beams shown above.

It should be noted that in step 1705, the common beam may be an uplink common beam, a downlink common beam, or a joint common beam. In Embodiment 14, only a technical solution of how the terminal device receives the second PDSCH data if the time interval between the moment at which the network device sends the second PDSCH data scheduled by the second DCI and the moment at which the network device sends the second DCI is greater than the preset threshold.

In actual application, the second PDSCH data may be replaced with a CSI-RS triggered by the second DCI. That is, if a time interval between a moment at which the network device sends the CSI-RS triggered by the second DCI and the moment at which the network device sends the second DCI is less than the preset threshold, the terminal device may receive the CSI-RS triggered by the second DCI from the network device by using any one of the foregoing fourth common beams. Alternatively, the second PDSCH data may be replaced with a HARQ feedback result corresponding to the second PDSCH data. That is, if a time interval between a moment at which the terminal device sends the HARQ feedback result corresponding to the second PDSCH data and the moment at which the network device sends the second DCI is less than the preset threshold, the terminal device may send the HARQ feedback result corresponding to the second PDSCH data to the network device by using any one of the foregoing fourth common beams.

Alternatively, the second PDSCH data may be replaced with a PUSCH scheduled by the second DCI. That is, if a time interval between a moment at which the terminal device sends the PUSCH scheduled by the second DCI and the moment at which the network device sends the second DCI is less than the preset threshold, the terminal device may send, by using any one of the foregoing fourth common beams, the PUSCH scheduled by the second DCI.

Alternatively, the second PDSCH data is replaced with an SRS triggered by the second DCI. That is, if a time interval between a moment at which the terminal device sends the SRS triggered by the second DCI and the moment at which the network device sends the second DCI is less than the preset threshold, the terminal device may send the SRS triggered by the second DCI to the network device by using any one of the foregoing fourth common beams.

In the technical solution in Embodiment 14, if the time interval between the moment at which the network device sends the second PDSCH data scheduled by the second DCI and the moment at which the network device sends the second DCI is less than the preset threshold, the terminal device receives the second PDSCH data by using the fourth common beam. For a specific form of the fourth common beam, refer to the related descriptions in Embodiment 14. In other words, the terminal device receives, by using the technical solution in Embodiment 14, the second PDSCH data scheduled by the second DCI. In this way, a case in which normal communication cannot be performed between the terminal device and the network device because the common beam indicated by the beam indication information does not take effect is avoided, and performance of a communication system is improved.

It should be understood that the technical solutions in Embodiment 1 to Embodiment 14 may be independent solutions, or may be freely combined based on internal logic. All these solutions fall within the protection scope of this application.

For example, in the technical solution in Embodiment 1, the terminal device determines the beam type of the one or more common beams by using the configuration parameter of the one or more common beams included in the beam configuration information. Based on the technical solution in Embodiment 1, with reference to the technical solution in Embodiment 2, the terminal device may be configured with a separate common beam or a joint common beam. That is, the separate common beam and the joint common beam cannot be simultaneously configured.

For another example, in the technical solution in Embodiment 2, three possible configuration manners of common beams of various beam types are shown. Based on the technical solution in Embodiment 2, with reference to the technical solution in Embodiment 4, the terminal device may activate common beams of different beam types by using different MAC CEs, or activate common beams of a plurality of beam types by using a same MAC CE.

It may be understood that in the foregoing method embodiments, the methods and the operations implemented by the terminal device may alternatively be implemented by a component (for example, a chip or a circuit) used in the terminal device, and the methods and the operations implemented by the network device may alternatively be implemented by a component (for example, a chip or a circuit) used in the network device.

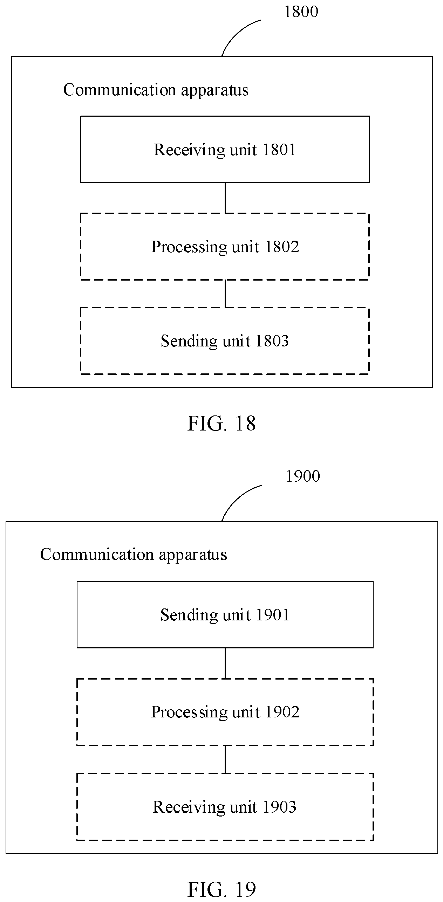

The methods provided in embodiments of this application are described above in detail with reference to FIG. 5, FIG. 6, FIG. 8, FIG. 9, FIG. 10, FIG. 11, FIG. 12, FIG. 13, FIG. 14, FIG. 15, FIG. 16A, and FIG. 17A. Communication apparatuses provided in embodiments of this application are described below in detail with reference to FIG. 18 to FIG. 22. It should be understood that descriptions of the apparatus embodiments correspond to the descriptions of the method embodiments. Therefore, for content that is not described in detail, refer to the foregoing method embodiments. For brevity, details are not described herein.

The solutions provided in embodiments of this application are mainly described above from a perspective of interaction between network elements. It may be understood that to implement the foregoing functions, each network element such as a transmit end device or a receive end device includes corresponding hardware structures and/or software modules for performing the functions. Persons skilled in the art should be aware that the example units, algorithms, and steps described with reference to embodiments disclosed in this specification can be implemented in this application by using hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In embodiments of this application, the transmit end device or the receive end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, and is merely logical function division. In actual implementation, another division manner may be used. An example in which each functional module is obtained through division based on each corresponding function is used below for description.

FIG. 18 is a schematic block diagram of a communication apparatus according to an embodiment of this application. The communication apparatus 1800 includes a receiving unit 1801. Optionally, the communication apparatus 1800 further includes a processing unit 1802 and a sending unit 1803. The receiving unit 1801 may implement a corresponding communication function, and the processing unit 1802 is configured to process data. The receiving unit 1801 may also be referred to as a communication interface or a communication unit.

Optionally, the communication apparatus 1800 may further include a storage unit. The storage unit may be configured to store instructions and/or data. The processing unit 1802 may read the instructions and/or the data in the storage unit, to enable the communication apparatus to implement the foregoing method embodiments.

The communication apparatus 1800 may be configured to perform the action performed by the terminal device in the foregoing method embodiments. In this case, the communication apparatus 1800 may be a terminal device or a component that can be disposed in a terminal device, the receiving unit 1801 is configured to perform a receiving-related operation on a terminal device side in the foregoing method embodiments, and the processing unit 1802 is configured to perform a processing-related operation on the terminal device side in the foregoing method embodiments. In an example, the communication apparatus 1800 is configured to perform the action performed by the terminal device in the embodiment shown in FIG. 5, and the receiving unit 1801 is configured to perform step 501, step 502, and step 503.

In an example, the communication apparatus 1800 is configured to perform the action performed by the terminal device in the embodiment shown in FIG. 6, the receiving unit 1801 is configured to perform step 601, step 602, and step 603, and the processing unit 1802 is configured to perform step 601a.

In an example, the communication apparatus 1800 is configured to perform the action performed by the terminal device in the embodiment shown in FIG. 8, the receiving unit 1801 is configured to perform step 801, step 802, and step 803, the processing unit 1802 is configured to perform step 803b or step 803e, and the sending unit 1803 is configured to perform step 803a or step 803d.

In an example, the communication apparatus 1800 is configured to perform the action performed by the terminal device in the embodiment shown in FIG. 9, the receiving unit 1801 is configured to perform step 901, step 902, and step 903, and the processing unit 1802 is configured to perform step 904.

In an example, the communication apparatus 1800 is configured to perform the action performed by the terminal device in the embodiment shown in FIG. 10, the receiving unit 1801 is configured to perform step 1001, step 1002, and step 1003, and the processing unit 1802 is configured to perform step 1004a, step 1004b, step 1004c, or step 1004d.

In an example, the communication apparatus 1800 is configured to perform the action performed by the terminal device in the embodiment shown in FIG. 11, the receiving unit 1801 is configured to perform step 1101 and step 1102, and the processing unit 1802 is configured to perform step 1103 or step 1104.

In an example, the communication apparatus 1800 is configured to perform the action performed by the terminal device in the embodiment shown in FIG. 12, the receiving unit 1801 is configured to perform step 1201, step 1202, and step 1203, and the processing unit 1802 is configured to perform step 1204.

In an example, the communication apparatus 1800 is configured to perform the action performed by the terminal device in the embodiment shown in FIG. 13, the receiving unit 1801 is configured to perform step 1301, step 1302, and step 1303, and the processing unit 1802 is configured to perform step 1304.

In an example, the communication apparatus 1800 is configured to perform the action performed by the terminal device in the embodiment shown in FIG. 14, the receiving unit 1801 is configured to perform step 1401, step 1402, and step 1403, and the processing unit 1802 is configured to perform step 1404, or the processing unit 1802 is configured to perform step 1405 and step 1406, or step 1405 and step 1407.

In an example, the communication apparatus 1800 is configured to perform the action performed by the terminal device in the embodiment shown in FIG. 15, the receiving unit 1801 is configured to perform step 1501, step 1502, and step 1503, and the processing unit 1802 is configured to perform step 1504.

In an example, the communication apparatus 1800 is configured to perform the action performed by the terminal device in the embodiment shown in FIG. 16A, the receiving unit 1801 is configured to perform step 1601, step 1602, and step 1603, and the processing unit 1802 is configured to perform step 1604.

In an example, the communication apparatus 1800 is configured to perform the action performed by the terminal device in the embodiment shown in FIG. 17A, the receiving unit 1801 is configured to perform step 1701, step 1702, step 1703, and step 1704, and the processing unit 1802 is configured to perform step 1705.

It should be understood that specific processes in which the units perform the foregoing corresponding steps are described in detail in the foregoing method embodiments. For brevity, details are not described herein.

The processing unit 1802 in the foregoing embodiment may be implemented by at least one processor or processor-related circuit. The receiving unit 1801 and the sending unit 1803 may be implemented by a transceiver or a transceiver-related circuit. The receiving unit 1801 and the sending unit 1803 may also be referred to as a communication unit or a communication interface. The storage unit may be implemented by at least one memory.

FIG. 19 is a schematic block diagram of a communication apparatus according to an embodiment of this application. The communication apparatus 1900 includes a sending unit 1901. Optionally, the communication apparatus 1900 further includes a processing unit 1902 and a receiving unit 1903. The sending unit 1901 may implement a corresponding communication function, and the processing unit 1902 is configured to process data. The sending unit 1901 may also be referred to as a communication interface or a communication unit.

Optionally, the communication apparatus 1900 may further include a storage unit. The storage unit may be configured to store instructions and/or data. The processing unit 1902 may read the instructions and/or the data in the storage unit, to enable the communication apparatus to implement the foregoing method embodiments.

The communication apparatus 1900 may be configured to perform the action performed by the terminal device in the foregoing method embodiments. In this case, the communication apparatus 1900 may be a terminal device or a component that can be disposed in a terminal device, the sending unit 1901 is configured to perform a sending-related operation on a network device side in the foregoing method embodiments, and the processing unit 1902 is configured to perform a processing-related operation on the network device side in the foregoing method embodiments. In an example, the communication apparatus 1900 is configured to perform the action performed by the network device in the embodiment shown in FIG. 5, and the sending unit 1901 is configured to perform step 501, step 502, and step 503.

In an example, the communication apparatus 1900 is configured to perform the action performed by the network device in the embodiment shown in FIG. 6, and the sending unit 1901 is configured to perform step 601, step 602, and step 603.

In an example, the communication apparatus 1900 is configured to perform the action performed by the network device in the embodiment shown in FIG. 8, the sending unit 1901 is configured to perform step 801, step 802, and step 803, the processing unit 1902 is configured to perform step 803c or step 803f, and the receiving unit 1903 is configured to perform step 803a or step 803d. In an example, the communication apparatus 1900 is configured to perform the action performed by the network device in the embodiment shown in FIG. 9, and the sending unit 1901 is configured to perform step 901, step 902, and step 903.

In an example, the communication apparatus 1900 is configured to perform the action performed by the network device in the embodiment shown in FIG. 10, and the sending unit 1901 is configured to perform step 1001, step 1002, and step 1003.

In an example, the communication apparatus 1900 is configured to perform the action performed by the network device in the embodiment shown in FIG. 11, and the sending unit 1901 is configured to perform step 1101 and step 1102.

In an example, the communication apparatus 1900 is configured to perform the action performed by the network device in the embodiment shown in FIG. 12, and the sending unit 1901 is configured to perform step 1201, step 1202, and step 1203.

In an example, the communication apparatus 1900 is configured to perform the action performed by the network device in the embodiment shown in FIG. 13, and the sending unit 1901 is configured to perform step 1301, step 1302, and step 1303.

In an example, the communication apparatus 1900 is configured to perform the action performed by the network device in the embodiment shown in FIG. 14, and the sending unit 1901 is configured to perform step 1401, step 1402, and step 1403.

In an example, the communication apparatus 1900 is configured to perform the action performed by the network device in the embodiment shown in FIG. 15, and the sending unit 1901 is configured to perform step 1501, step 1502, and step 1503.

In an example, the communication apparatus 1900 is configured to perform the action performed by the terminal device in the embodiment shown in FIG. 16A, and the sending unit 1901 is configured to perform step 1601, step 1602, and step 1603.

In an example, the communication apparatus 1900 is configured to perform the action performed by the terminal device in the embodiment shown in FIG. 17A, and the sending unit 1901 is configured to perform step 1701, step 1702, step 1703, and step 1704.

It should be understood that specific processes in which the units perform the foregoing corresponding steps are described in detail in the foregoing method embodiments. For brevity, details are not described herein.

The processing unit 1902 in the foregoing embodiment may be implemented by at least one processor or processor-related circuit. The sending unit 1901 and the receiving unit 1903 may be implemented by a transceiver or a transceiver-related circuit. The sending unit 1901 and the receiving unit 1903 may also be referred to as a communication unit or a communication interface. The storage unit may be implemented by at least one memory.

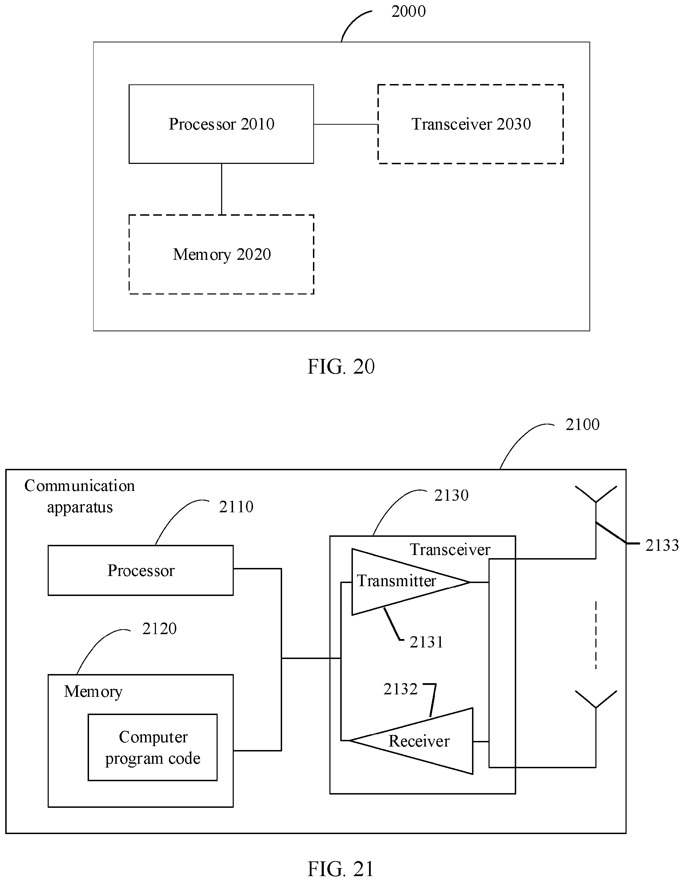

As shown in FIG. 20, an embodiment of this application further provides a communication apparatus 2000. The communication apparatus 2000 includes a processor 2010. The processor 2010 is coupled to a memory 2020. The memory 2020 is configured to store a computer program or instructions and/or data. The processor 2010 is configured to execute the computer program or the instructions and/or the data stored in the memory 2020, so that the methods in the foregoing method embodiments are performed.

Optionally, the communication apparatus 2000 includes one or more processors 2010. Optionally, as shown in FIG. 20, the communication apparatus 2000 may further include the memory 2020.

Optionally, the communication apparatus 2000 may include one or more memories 2020. Optionally, the memory 2020 and the processor 2010 may be integrated or separately disposed.

Optionally, as shown in FIG. 20, the communication apparatus 2000 may further include a transceiver 2030, and the transceiver 2030 is configured to receive and/or send a signal. For example, the processor 2010 is configured to control the transceiver 2030 to receive and/or send a signal.

In a solution, the communication apparatus 2000 is configured to implement the operation performed by the terminal device in the foregoing method embodiments.

For example, the processor 2010 is configured to implement a processing-related operation performed by the terminal device in the foregoing method embodiments, and the transceiver 2030 is configured to implement a receiving/sending-related operation performed by the terminal device in the foregoing method embodiments.

In another solution, the communication apparatus 2000 is configured to perform the operation performed by the network device in the foregoing method embodiments.

For example, the processor 2010 is configured to perform a processing-related operation performed by the network device in the foregoing method embodiments, and the transceiver 2030 is configured to perform a receiving/sending-related operation performed by the network device in the foregoing method embodiments.

An embodiment of this application further provides a communication apparatus 2100. The communication apparatus 2100 may be a terminal device or a chip. The communication apparatus 2100 may be configured to perform the operation performed by the terminal device in the foregoing method embodiments.

When the communication apparatus 2100 is a terminal device, FIG. 21 is a schematic diagram of a simplified structure of a terminal device. As shown in FIG. 21, the terminal device includes a processor, a memory, and a transceiver. The memory may store computer program code. The transceiver includes a transmitter 2131, a receiver 2132, a radio frequency circuit (not shown in the figure), an antenna 2133, and an input/output apparatus (not shown in the figure). The processor is mainly configured to: process a communication protocol and communication data, control the terminal device, execute a software program, process data of the software program, and so on. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus such as a touchscreen, a display, or a keyboard is mainly configured to: receive data entered by a user, and output data to the user. It should be noted that some types of terminal devices may have no input/output apparatus.

When needing to send data, the processor performs baseband processing on the to-be-sent data, and then outputs a baseband signal to the radio frequency circuit, and the radio frequency circuit performs radio frequency processing on the baseband signal, and then sends the radio frequency signal to outside in a form of an electromagnetic wave through the antenna. When data is to be sent to the terminal device, the radio frequency circuit receives a radio frequency signal through the antenna, converts the radio frequency signal into a baseband signal, and outputs the baseband signal to the processor, and the processor converts the baseband signal into data, and processes the data. For ease of description, only one memory, one processor, and one transceiver are shown in FIG. 21. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 21, the terminal device includes the processor 2110, the memory 2120, and the transceiver 2130. The processor 2110 may also be referred to as a processing unit, a processing board, a processing module, a processing apparatus, or the like. The transceiver 2130 may also be referred to as a transceiver unit, a transceiver machine, a transceiver apparatus, or the like. Optionally, a component that is in the transceiver 2130 and that is configured to implement a receiving function may be considered as a receiving unit, and a component that is in the transceiver 2130 and that is configured to implement a sending function may be considered as a sending unit. In other words, the transceiver 2130 includes a receiver and a transmitter. The transceiver sometimes may also be referred to as a transceiver machine, a transceiver unit, a transceiver circuit, or the like. The receiver sometimes may also be referred to as a receiver, a receiving unit, a receiver circuit, or the like. The transmitter sometimes may also be referred to as a transmitter, a transmitter unit, a transmitter circuit, or the like.

For example, in an implementation, the transceiver 2130 is configured to perform a receiving/sending action on a terminal device side in FIG. 5. For example, the transceiver 2130 is configured to perform receiving/sending operations in step 501, step 502, and step 503 in FIG. 5. For another example, in an implementation, the transceiver 2130 is configured to perform receiving/sending operations in step 601, step 602, and step 603 in FIG. 6, and the processor 2110 is configured to perform a processing operation in step 601a in FIG. 6.

For another example, in an implementation, the transceiver 2130 is configured to perform receiving/sending operations in step 801, step 802, step 803, step 803a, and step 803d in FIG. 8, and the processor 2110 is configured to perform a processing operation in step 803c or step 803f. For another example, in an implementation, the transceiver 2130 is configured to perform receiving/sending operations in step 901, step 902, and step 903 in FIG. 9, and the processor 2110 is configured to perform a processing operation in step 904.

For another example, in an implementation, the transceiver 2130 is configured to perform receiving/sending operations in step 1001, step 1002, and step 1003 in FIG. 10, and the processor 2110 is configured to perform a processing operation in step 1004a, step 1004b, step 1004c, or step 1004d.

For another example, in an implementation, the transceiver 2130 is configured to perform receiving/sending operations in step 1101 and step 1102 in FIG. 11, and the processor 2110 is configured to perform a processing operation in step 1103 or step 1104.

For another example, in an implementation, the transceiver 2130 is configured to perform receiving/sending operations in step 1201, step 1202, and step 1203 in FIG. 12, and the processor 2110 is configured to perform a processing operation in step 1204.

For another example, in an implementation, the transceiver 2130 is configured to perform receiving/sending operations in step 1301, step 1302, and step 1303 in FIG. 13, and the processor 2110 is configured to perform a processing operation in step 1304.

For another example, in an implementation, the transceiver 2130 is configured to perform receiving/sending operations in step 1401, step 1402, and step 1403 in FIG. 14, and the processor 2110 is configured to perform a processing operation in step 1404, the processor 2110 is configured to perform processing operations in step 1405 and step 1406, or the processor 2110 is configured to perform processing operations in step 1405 and step 1407.

For another example, in an implementation, the transceiver 2130 is configured to perform receiving/sending operations in step 1501, step 1502, and step 1503 in FIG. 15, and the processor 2110 is configured to perform a processing operation in step 1504.

For another example, in an implementation, the transceiver 2130 is configured to perform receiving/sending operations in step 1601, step 1602, and step 1603 in FIG. 16A, and the processor 2110 is configured to perform a processing operation in step 1604.

For another example, in an implementation, the transceiver 2130 is configured to perform receiving/sending operations in step 1701, step 1702, step 1703, and step 1704 in FIG. 17A, and the processor 2110 is configured to perform a processing operation in step 1705.

It should be understood that FIG. 21 is merely an example instead of a limitation. The terminal device including the transceiver unit and the processing unit may not depend on the structure shown in FIG. 21.

When the communication apparatus 2100 is a chip, the chip includes a processor, a memory, and a transceiver. The transceiver may be an input/output circuit or a communication interface. The processor may be a processing unit, a microprocessor, or an integrated circuit integrated on the chip.

An embodiment of this application further provides a communication apparatus 2200. The communication apparatus 2200 may be a network device or a chip. The communication apparatus 2200 may be configured to perform the operation performed by the network device in the foregoing method embodiments.

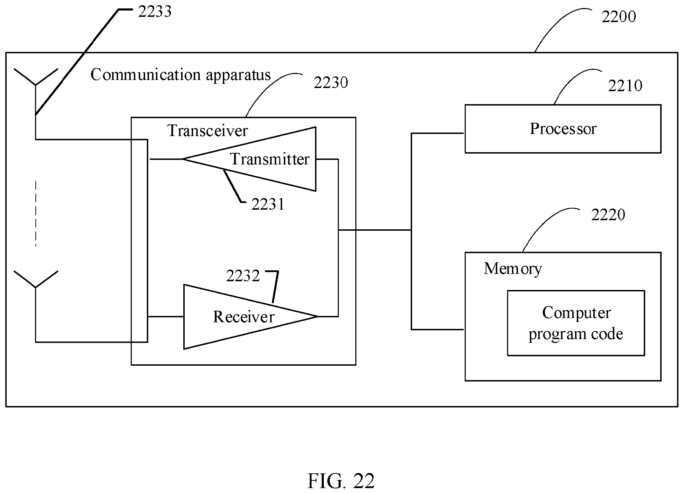

When the communication apparatus 2200 is a network device, for example, a base station, FIG. 22 is a schematic diagram of a simplified structure of a base station. The base station includes a part 2210, a part 2220, and a part 2230. The part 2210 is mainly configured to: perform baseband processing, control the base station, and the like. The part 2210 is usually a control center of the base station, and may be usually referred to as a processor, and is configured to control the base station to perform a processing operation on a network device side in the foregoing method embodiments. The part 2220 is mainly configured to store computer program code and data. The part 2230 is mainly configured to: receive and send a radio frequency signal and perform conversion between a radio frequency signal and a baseband signal. The part 2230 may be usually referred to as a transceiver unit, a transceiver machine, a transceiver circuit, a transceiver, or the like. A transceiver unit in the part 2230 may also be referred to as a transceiver machine, a transceiver, or the like, and includes an antenna 2233 and a radio frequency circuit (not shown in the figure). The radio frequency circuit is mainly configured to perform radio frequency processing. Optionally, in the part 2230, a component configured to implement a receiving function may be considered as a receiver, and a component configured to implement a sending function may be considered as a transmitter. In other words, the part 2230 includes the receiver 2232 and the transmitter 2231. The receiver may also be referred to as a receiving unit, a receiver, a receiver circuit, or the like. The transmitter may be referred to as a transmitter unit, a transmitter, a transmitter circuit, or the like.

The part 2210 and the part 2220 may include one or more boards, and each board may include one or more processors and one or more memories. The processor is configured to read and execute a program in the memory, to implement a baseband processing function and control the base station. If there are a plurality of boards, the boards may be interconnected to enhance a processing capability. In an optional implementation, the plurality of boards may share one or more processors, the plurality of boards may share one or more memories, or the plurality of boards may simultaneously share one or more processors.

For example, in an implementation, the transceiver unit in the part 2230 is configured to perform a receiving/sending-related step performed by the network device in the embodiment shown in FIG. 5.

For example, in another implementation, the processor in the part 2210 is configured to perform a processing-related step performed by the network device in the embodiment shown in FIG. 8, and the part 2230 is configured to perform a receiving/sending-related step performed by the network device in the embodiment shown in FIG. 8.

It should be understood that FIG. 22 is merely an example instead of a limitation. The network device including the processor, the memory, and the transceiver may not depend on the structure shown in FIG. 22.

When the communication apparatus 2200 is a chip, the chip includes a transceiver, a memory, and a processor. The transceiver may be an input/output circuit or a communication interface. The processor is a processor, a microprocessor, or an integrated circuit integrated on the chip.

An embodiment of this application further provides a computer-readable storage medium. The computer-readable storage medium stores computer instructions used to implement the method performed by the terminal device or the method performed by the network device in the foregoing method embodiments.

For example, when the computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

An embodiment of this application further provides a communication system. The communication system includes the network device and the terminal device in the foregoing embodiments.

An embodiment of this application further provides a chip apparatus, including a processor, configured to invoke a computer program or computer instructions stored in a memory, so that the processor performs the beam management methods in the embodiments shown in FIG. 5, FIG. 6, FIG. 8, FIG. 9, FIG. 10, FIG. 11, FIG. 12, FIG. 13, FIG. 14, FIG. 15, FIG. 16A, and FIG. 17A.

Optionally, the processor is coupled to the memory by using an interface.

Optionally, the chip apparatus further includes the memory, and the memory stores the computer program or the computer instructions.

The processor described above at any location may be a general-purpose central processing unit, a microprocessor, an application-specific integrated circuit (application-specific integrated circuit, ASIC), or one or more integrated circuits configured to control program execution of the beam management methods in the embodiments shown in FIG. 5, FIG. 6, FIG. 8, FIG. 9, FIG. 10, FIG. 11, FIG. 12, FIG. 13, FIG. 14, FIG. 15, FIG. 16A, and FIG. 17A. The memory described above at any location may be a read-only memory (read-only memory, ROM), another type of static storage device that can store static information and instructions, a random access memory (random access memory, RAM), or the like.

It may be clearly understood by persons skilled in the art that for convenient and brief description, for explanations and beneficial effects of related content in any communication apparatus provided above, refer to the corresponding method embodiment provided above. Details are not described herein.

In embodiments of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and a memory (which is also referred to as a primary memory). An operating system at the operating system layer may be any one or more computer operating systems that implement service processing through a process (process), for example, a Linux operating system, a Unix operating system, an Android operating system, an iOS operating system, or a Windows operating system. The application layer may include applications such as a browser, a contacts application, text processing software, and instant messaging software.

It may be clearly understood by persons skilled in the art that for convenient and brief description, for detailed working processes of the system, apparatus, and unit described above, refer to the corresponding processes in the foregoing method embodiments. Details are not described herein. In the several embodiments provided in this application, it should be understood that the disclosed system, apparatus, and method may be implemented in other manners. For example, the described apparatus embodiment is merely an example. For example, division into the units is merely logical function division, and in actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions in embodiments.

In addition, functional units in embodiments of this application may be integrated into one processing unit, each unit may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory, a random access memory, a magnetic disk, or an optical disc.

In conclusion, the foregoing embodiments are merely intended for describing the technical solutions in this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A beam management method, wherein the method comprises:
receiving, by a terminal device, beam configuration information from a network device, wherein the beam configuration information comprises configuration information of one or more common beams, wherein
the one or more common beams comprise any one of the following: a separate common beam used for uplink transmission or downlink transmission and a joint common beam used for uplink transmission and downlink transmission;
receiving, by the terminal device, beam activation information from the network device, wherein the beam activation information is used to activate some of the one or more common beams; and
receiving, by the terminal device, beam indication information from the network device, wherein the beam indication information indicates one or more of the some common beams.

2. The method according to claim 1, wherein the beam configuration information comprises a configuration parameter of a first common beam; and
if the configuration parameter of the first common beam comprises a first parameter and does not comprise a second parameter, the first common beam is an uplink common beam; or
if the configuration parameter of the first common beam comprises the second parameter and does not comprise the first parameter, the first common beam is a downlink common beam; or
if the configuration parameter of the first common beam comprises the first parameter and the second parameter, the first common beam is a joint common beam, wherein
the first parameter comprises at least one of the following: a reference signal resource used to determine an uplink transmission beam, spatial relation information, an uplink power control parameter, and a sounding reference signal SRS resource; and
the second parameter comprises at least one of the following: quasi co-location QCL information and a bandwidth part BWP parameter.

3. The method according to claim 1 or 2, wherein the beam indication information is carried in first downlink control information DCI, and when a first condition is met, and a hybrid automatic repeat request HARQ feedback result corresponding to the first DCI is an acknowledgement ACK, it indicates that the one or more common beams indicated by the beam indication information are successfully indicated; and
the first condition comprises one or a combination of the following:
the terminal device reports that a common beam function is supported;
the network device configures the common beam function of the terminal device to an enabled state;
the first DCI schedules no physical downlink shared channel PDSCH;
the first DCI schedules a PDSCH, and the terminal device performs HARQ feedback by using a dynamic hybrid automatic repeat request-acknowledgement HARQ-ACK codebook; and
one or more common beams indicated by the first DCI are different from a common beam currently used by the terminal device.

4. The method according to claim 3, wherein after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the first DCI or a HARQ feedback result fed back for the PDSCH scheduled by the first DCI.

5. The method according to claim 1 or 2, wherein the beam indication information is carried in first DCI, and when a second condition is met, and a HARQ feedback result corresponding to the first DCI is an ACK or a negative acknowledgement NACK, it indicates that the one or more common beams indicated by the beam indication information are successfully indicated; and
the second condition comprises one or a combination of the following:
the terminal device reports that a common beam function is supported;
the network device configures the common beam function of the terminal device to an enabled state;
the first DCI schedules a physical downlink shared channel PDSCH;
the terminal device performs HARQ feedback by using a semi-static HARQ-ACK codebook; and
one or more common beams indicated by the first DCI are different from a common beam currently used by the terminal device.

6. The method according to claim 5, wherein after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the PDSCH scheduled by the first DCI.

7. The method according to any one of claims 1 to 6, wherein the beam indication information is carried in the first DCI, the first DCI comprises a common beam indication field, the common beam indication field indicates a common beam of one beam type, and the method further comprises:
determining, by the terminal device based on the beam configuration information, the beam type of the common beam indicated by the common beam indication field;
determining, by the terminal device based on the beam activation information, the beam type of the common beam indicated by the common beam indication field; or
determining, by the terminal device based on the first DCI, the beam type of the common beam indicated by the common beam indication field.

8. The method according to claim 7, wherein the determining, by the terminal device based on the beam configuration information, the beam type of the common beam indicated by the common beam indication field comprises:
if the network device configures a common beam mode of the terminal device to a joint common beam mode by using the beam configuration information, or the beam configuration information comprises configuration information of the joint common beam, determining, by the terminal device, that the beam type indicated by the common beam indication field is the joint common beam; or
if the network device configures a common beam mode of the terminal device to a separate common beam mode by using the beam configuration information, or the beam configuration information comprises configuration information of the separate common beam, determining, by the terminal device, that the beam type of the common beam indicated by the common beam indication field is the uplink common beam or the downlink common beam.

9. The method according to claim 7, wherein the determining, by the terminal device based on the beam activation information, the beam type of the common beam indicated by the common beam indication field comprises:
if the beam activation information is used to activate the joint common beam, determining, by the terminal device, that the beam type of the common beam indicated by the common beam indication field is the joint common beam; or
if the beam activation information is used to activate the separate common beam, determining, by the terminal device, that the beam type of the common beam indicated by the common beam indication field is the uplink common beam or the downlink common beam.

10. The method according to claim 7, wherein first x bits or last x bits in the common beam indication field or a first indication field comprised in the first DCI indicates the beam type of the common beam indicated by the common beam indication field, wherein x is an integer greater than or equal to 1; and
the beam type comprises any one of the following: the joint common beam, the uplink common beam, and the downlink common beam, or the beam type comprises any one of the following: the uplink common beam and the downlink common beam.

11. The method according to any one of claims 1 to 6, wherein the beam indication information is carried in the first DCI, the first DCI comprises a common beam indication field, the common beam indication field comprises one or two subfields, and the method further comprises:
determining, by the terminal device based on a beam type of the common beam configured by using the beam configuration information, a quantity of subfields comprised in the common beam indication field and/or a beam type indicated by the subfield.

12. The method according to claim 11, wherein if the beam type configured by using the beam configuration information is the joint common beam, the common beam indication field comprises one subfield, and the subfield indicates the joint common beam; or
if the beam type configured by using the beam configuration information is the separate common beam, the common beam indication field comprises two subfields, and the two subfields indicate the uplink common beam and the downlink common beam.

13. The method according to claim 11 or 12, wherein if the common beam indication field comprises two subfields, a first subfield in the two subfields indicates the uplink common beam, and a second subfield in the two subfields indicates the downlink common beam, or a first subfield in the two subfields indicates the downlink common beam, and a second subfield in the two subfields indicates the uplink common beam.

14. The method according to claim 11 or 12, wherein if the common beam indication field comprises two subfields, the method further comprises:
determining, by the terminal device based on the beam configuration information, beam types respectively indicated by the two subfields;
determining, by the terminal device based on the beam activation information, beam types respectively indicated by the two subfields; or
determining, by the terminal device based on the first DCI, beam types respectively indicated by the two subfields.

15. The method according to claim 14, wherein the beam configuration information comprises an uplink common beam set and a downlink common beam set, and the determining, by the terminal device based on the beam configuration information, beam types respectively indicated by the two subfields comprises:
determining, by the terminal device based on configuration rankings of the uplink common beam set and the downlink common beam set, the beam types respectively indicated by the two subfields; or
determining, by the terminal device based on set index rankings respectively corresponding to the uplink common beam set and the downlink common beam set, the beam types respectively indicated by the two subfields.

16. The method according to claim 14, wherein the determining, by the terminal device based on the beam activation information, beam types respectively indicated by the two subfields comprises:
determining, by the terminal device based on arrangement rankings of an uplink common beam and a downlink common beam activated by using the beam activation information, the beam types respectively indicated by the two subfields.

17. The method according to claim 14, wherein the determining, by the terminal device based on the first DCI, beam types respectively indicated by the two subfields comprises:
determining, by the terminal device based on first x bits or last x bits in the common beam indication field or a second indication field comprised in the first DCI, a beam type indicated by a first subfield in the two subfields and a beam type indicated by a second subfield in the two subfields.

18. The method according to any one of claims 1 to 17, wherein the beam indication information is carried in the first DCI, and if the first DCI does not comprise the common beam indication field, the method further comprises:
if the beam activation information is used to activate one common beam, performing, by the terminal device, transmission through the common beam activated by using the beam activation information; or
if the beam activation information is used to activate a plurality of common beams, performing, by the terminal device, transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

19. The method according to any one of claims 1 to 18, wherein the method further comprises:
if the common beam indicated by the common beam indication information is the same as a second common beam, ignoring, by the terminal device, the beam indication information, wherein
the second common beam comprises any one of the following: the common beam currently used by the terminal device and a common beam that is most recently indicated to the terminal device or most recently takes effect.

20. The method according to any one of claims 1 to 19, wherein if the beam indication information indicates K common beams of a same beam type, and the network device configures K first resources or K first resource sets for the terminal device, the method further comprises:
using, by the terminal device, the K common beams as beams corresponding to the K first resources or the K first resource sets, wherein K is an integer greater than 1, wherein
the K common beams are in a one-to-one correspondence with the K first resources or the K first resource sets, each of the K first resource sets comprises the first resource, and the K common beams are respectively used to transmit the corresponding first resources;
the K common beams are ranked based on indication rankings in the beam indication information or beam index rankings of the K common beams;
the K first resources or the K first resource sets are ranked based on resource configuration rankings or resource index rankings; and
the first resource comprises any one of the following: a channel state information-reference signal CSI-RS for which neither a repetition repetition parameter nor a transmitting information trs-Info parameter is configured, a sounding reference signal SRS of a codebook codebook type, an SRS of a non-codebook non-codebook type, and a CSI-RS associated with the SRS of the non-codebook type.

21. The method according to any one of claims 1 to 20, wherein the beam indication information is used by the network device to indicate a common beam to the terminal device for a first time after the terminal device performs initial access, and before the common beam indicated by the beam indication information takes effect, the method further comprises:
performing, by the terminal device, transmission by using a synchronization signal and PBCH block SSB beam used during the initial access.

22. The method according to any one of claims 1 to 20, wherein the beam indication information is used by the network device to indicate a common beam to the terminal device for a first time after beam failure occurs on the terminal device; and
after the terminal device completes beam failure recovery, and before the common beam indicated by the beam indication information takes effect, the method further comprises:
performing, by the terminal device, transmission through a beam reported by the terminal device to the network device in a beam failure recovery process.

23. The method according to any one of claims 1 to 20, wherein the beam indication information is used by the network device to indicate a common beam to the terminal device for a first time after the terminal device performs initial access;
after the terminal device performs initial access, and before the terminal device receives the beam activation information, the method further comprises:
performing, by the terminal device, transmission through an SSB beam used during the initial access; and
after the terminal device receives the beam activation information, and before the common beam indicated by the beam indication information takes effect, the method further comprises:
performing, by the terminal device, transmission through a first common beam or a last common beam activated by using the beam activation information; or
performing, by the terminal device, transmission through a common beam with a largest or smallest common beam indication field value in a common beam activated by using the beam activation information.

24. The method according to any one of claims 1 to 23, wherein the beam indication information is carried in the first DCI, the first DCI further schedules first PDSCH data, and the method further comprises:
if a moment at which the network device sends the first PDSCH data is earlier than a moment at which the common beam indicated by the first DCI takes effect, receiving, by the terminal device, the first PDSCH data from the network device through a third common beam, wherein
the third common beam comprises any one of the following:
if the common beam indicated by the network device to the terminal device for the first time after the terminal device performs initial access or completes beam failure recovery has taken effect, the third common beam is the currently used common beam or the common beam that most recently takes effect or is most recently indicated;
if the common beam indicated by the network device to the terminal device for the first time after the terminal device performs initial access does not take effect, the third common beam is the SSB beam used by the terminal device during the initial access; and
if the common beam indicated by the network device to the terminal device for the first time after the terminal device completes beam failure recovery does not take effect, the third common beam is the beam reported by the terminal device to the network device during the beam failure recovery.

25. The method according to claim 24, wherein if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further comprises the common beam indicated by the first DCI.

26. The method according to any one of claims 1 to 25, wherein the method further comprises:
receiving, by the terminal device, second DCI from the network device; and
if a time interval between a moment at which the network device sends second PDSCH data scheduled by the second DCI and a moment at which the network device sends the second DCI is less than the preset threshold, receiving, by the terminal device, the second PDSCH data from the network device through a fourth common beam, wherein
the fourth common beam comprises any one of the following:
if the common beam indicated by the network device to the terminal device for the first time after the terminal device performs initial access or completes beam failure recovery has taken effect, the fourth common beam is the currently used common beam or the common beam that most recently takes effect or is most recently indicated;
if the common beam indicated by the network device to the terminal device for the first time after the terminal device performs initial access does not take effect, the fourth common beam is the SSB beam used by the terminal device during the initial access; and
if the common beam indicated by the network device to the terminal device for the first time after the terminal device completes beam failure recovery does not take effect, the fourth common beam is the beam reported by the terminal device to the network device during the beam failure recovery.

27. A beam management method, wherein the method comprises:
sending, by a network device, beam configuration information to a terminal device, wherein the beam configuration information comprises configuration information of one or more common beams, and the one or more common beams comprise any one of the following: a separate common beam used for uplink transmission or downlink transmission and a joint common beam used for uplink transmission and downlink transmission;
sending, by the network device, beam activation information to the terminal device, wherein the beam activation information is used to activate some of the one or more common beams; and
sending, by the network device, beam indication information to the terminal device, wherein the beam indication information indicates one or more of the some common beams.

28. The method according to claim 27, wherein the beam configuration information comprises a configuration parameter of a first common beam; and
if the configuration parameter of the first common beam comprises a first parameter and does not comprise a second parameter, the first common beam is an uplink common beam; or
if the configuration parameter of the first common beam comprises the second parameter and does not comprise the first parameter, the first common beam is a downlink common beam; or
if the configuration parameter of the first common beam comprises the first parameter and the second parameter, the first common beam is a joint common beam, wherein
the first parameter comprises at least one of the following: a reference signal resource used to determine an uplink transmission beam, spatial relation information, an uplink power control parameter, and a sounding reference signal SRS resource; and
the second parameter comprises at least one of the following: quasi co-location QCL information and a bandwidth part BWP parameter.

29. The method according to claim 27 or 28, wherein the beam indication information is carried in first downlink control information DCI, and when a first condition is met, and a hybrid automatic repeat request HARQ feedback result corresponding to the first DCI is an acknowledgement ACK, it indicates that the one or more common beams indicated by the beam indication information are successfully indicated; and
the first condition comprises one or a combination of the following:
the terminal device reports that a common beam function is supported;
the network device configures the common beam function of the terminal device to an enabled state;
the first DCI schedules no physical downlink shared channel PDSCH;
the first DCI schedules a PDSCH, and the terminal device performs HARQ feedback by using a dynamic hybrid automatic repeat request-acknowledgement HARQ-ACK codebook; and
one or more common beams indicated by the first DCI are different from a common beam currently used by the terminal device.

30. The method according to claim 29, wherein after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the first DCI or a HARQ feedback result fed back for the PDSCH scheduled by the first DCI.

31. The method according to claim 27 or 28, wherein the beam indication information is carried in first DCI, and when a second condition is met, and a HARQ feedback result corresponding to the first DCI is an ACK or a NACK, it indicates that the one or more common beams indicated by the beam indication information are successfully indicated; and
the second condition comprises one or a combination of the following:
the terminal device reports that a common beam function is supported;
the network device configures the common beam function of the terminal device to an enabled state;
the first DCI schedules a physical downlink shared channel PDSCH;
the terminal device performs HARQ feedback by using a semi-static HARQ-ACK codebook; and
one or more common beams indicated by the first DCI are different from a common beam currently used by the terminal device.

32. The method according to claim 31, wherein after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the PDSCH scheduled by the first DCI.

33. The method according to any one of claims 27 to 32, wherein the beam indication information is carried in the first DCI, the first DCI comprises a common beam indication field, and the common beam indication field indicates a common beam of one beam type; and
the beam type of the common beam indicated by the common beam indication field is determined by using the beam configuration information;
the beam type of the common beam indicated by the common beam indication field is determined by using the beam activation information; or
the beam type of the common beam indicated by the common beam indication field is determined by using the first DCI.

34. The method according to claim 33, wherein if the network device configures a common beam mode of the terminal device to a joint common beam mode by using the beam configuration information, or the beam configuration information comprises configuration information of the joint common beam, the beam type indicated by the common beam indication field is the joint common beam; or
if the network device configures a common beam mode of the terminal device to a separate common beam mode by using the beam configuration information, or the beam configuration information comprises configuration information of the separate common beam, the beam type of the common beam indicated by the common beam indication field is the uplink common beam or the downlink common beam.

35. The method according to claim 33, wherein if the beam activation information is used to activate the joint common beam, the beam type of the common beam indicated by the common beam indication field is the joint common beam; or
if the beam activation information is used to activate the separate common beam, the beam type of the common beam indicated by the common beam indication field is the uplink common beam or the downlink common beam.

36. The method according to claim 33, wherein first x bits or last x bits in the common beam indication field or a first indication field comprised in the first DCI indicates the beam type of the common beam indicated by the common beam indication field, wherein x is an integer greater than or equal to 1; and
the beam type comprises any one of the following: the joint common beam, the uplink common beam, and the downlink common beam; or
the beam type comprises any one of the following: the uplink common beam and the downlink common beam.

37. The method according to any one of claims 27 to 32, wherein the beam indication information is carried in the first DCI, the first DCI comprises a common beam indication field, and the common beam indication field comprises one or two subfields; and
a quantity of subfields comprised in the common beam indication field and/or a beam type indicated by the subfield are/is determined by using a beam type configured by using the beam configuration information.

38. The method according to claim 37, wherein if the beam type configured by using the beam configuration information is the joint common beam, the common beam indication field comprises one subfield, and the subfield indicates the joint common beam; or
if the beam type configured by using the beam configuration information is the separate common beam, the common beam indication field comprises two subfields, and the two subfields indicate the uplink common beam and the downlink common beam.

39. The method according to claim 37 or 38, wherein if the common beam indication field comprises two subfields, a first subfield in the two subfields indicates the uplink common beam, and a second subfield in the two subfields indicates the downlink common beam, or a first subfield in the two subfields indicates the downlink common beam, and a second subfield in the two subfields indicates the uplink common beam.

40. The method according to claim 37 or 38, wherein if the common beam indication field comprises two subfields, beam types respectively indicated by the two subfields are determined by using the beam configuration information, the beam activation information, or the first DCI.

41. The method according to claim 40, wherein the beam configuration information comprises an uplink common beam set and a downlink common beam set; and
the beam types respectively indicated by the two subfields are determined based on configuration rankings of the uplink common beam set and the downlink common beam set; or
the beam types respectively indicated by the two subfields are determined based on set index rankings respectively corresponding to the uplink common beam set and the downlink common beam set.

42. The method according to claim 40, wherein the beam types respectively indicated by the two subfields are determined based on arrangement rankings of an uplink common beam and a downlink common beam activated by using the beam activation information.

43. The method according to claim 40, wherein the beam types respectively indicated by the two subfields are determined by using first x bits or last x bits in the common beam indication field or a second indication field comprised in the first DCI, wherein x is an integer greater than or equal to 1.

44. The method according to any one of claims 27 to 43, wherein the beam indication information is carried in the first DCI, and if the first DCI does not comprise the common beam indication field, the method further comprises:
if the beam activation information is used to activate one common beam, performing, by the network device, transmission through the common beam activated by using the beam activation information; or
if the beam activation information is used to activate a plurality of common beams, performing, by the network device, transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

45. The method according to any one of claims 27 to 44, wherein if the beam indication information indicates K common beams of a same beam type, and the network device configures K first resources or K first resource sets for the terminal device, the K common beams are beams corresponding to the K first resources or the K first resource sets, wherein K is an integer greater than 1;
the K common beams are in a one-to-one correspondence with the K first resources or the K first resource sets, each of the K first resource sets comprises the first resource, and the K common beams are respectively used to transmit the corresponding first resources;
the K common beams are ranked based on indication rankings in the beam indication information or beam index rankings of the K common beams;
the K first resources or the K first resource sets are ranked based on resource configuration rankings or resource index rankings; and
the first resource comprises any one of the following: a channel state information-reference signal CSI-RS for which neither a repetition repetition parameter nor a transmitting information trs-Info parameter is configured, a sounding reference signal SRS of a codebook codebook type, an SRS of a non-codebook non-codebook type, and a CSI-RS associated with the SRS of the non-codebook type.

46. The method according to any one of claims 27 to 45, wherein the beam indication information is used by the network device to indicate a common beam to the terminal device for a first time after the terminal device performs initial access, and before the common beam indicated by the beam indication information takes effect, the method further comprises:
performing, by the network device, transmission with the terminal device by using a synchronization signal and PBCH block SSB beam used by the terminal device during the initial access.

47. The method according to any one of claims 27 to 45, wherein the beam indication information is used by the network device to indicate a common beam to the terminal device for a first time after beam failure occurs on the terminal device; and
after the terminal device completes beam failure recovery, and before the common beam indicated by the beam indication information takes effect, the method further comprises:
performing, by the network device, transmission through a beam reported by the terminal device to the network device in a beam failure recovery process.

48. The method according to any one of claims 27 to 45, wherein the beam indication information is used by the network device to indicate a common beam to the terminal device for a first time after the terminal device performs initial access;
after the terminal device performs initial access, and before the network device sends the beam activation information, the method further comprises:
performing, by the network device, transmission through an SSB beam used during the initial access; and
after the network device sends the beam activation information, and before the common beam indicated by the beam indication information takes effect, the method further comprises:
performing, by the network device, transmission through a first common beam or a last common beam activated by using the beam activation information; or
performing, by the network device, transmission through a common beam with a largest or smallest common beam indication field value in a common beam activated by using the beam activation information.

49. The method according to any one of claims 27 to 48, wherein the beam indication information is carried in the first DCI, the first DCI further schedules first PDSCH data, and the method further comprises:
if a moment at which the network device sends the first PDSCH data is earlier than a moment at which the common beam indicated by the first DCI takes effect, sending, by the network device, the first PDSCH data to the network device through a third common beam, wherein
the third common beam comprises any one of the following:
if the common beam indicated by the network device to the terminal device for the first time after the terminal device performs initial access or completes beam failure recovery has taken effect, the third common beam is the currently used common beam or a common beam that most recently takes effect or is most recently indicated;
if the common beam indicated by the network device to the terminal device for the first time after the terminal device performs initial access does not take effect, the third common beam is the SSB beam used by the terminal device during the initial access; and
if the common beam indicated by the network device to the terminal device for the first time after the terminal device completes beam failure recovery does not take effect, the third common beam is the beam reported by the terminal device to the network device during the beam failure recovery.

50. The method according to claim 49, wherein if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further comprises the common beam indicated by the first DCI.

51. The method according to any one of claims 27 to 50, wherein the method further comprises:
sending, by the network device, second DCI to the terminal device; and
if a time interval between a moment at which the network device sends second PDSCH data scheduled by the second DCI and a moment at which the network device sends the second DCI is less than the preset threshold, sending, by the network device, the second PDSCH data to the terminal device through a fourth common beam, wherein
the fourth common beam comprises any one of the following:
if the common beam indicated by the network device to the terminal device for the first time after the terminal device performs initial access or completes beam failure recovery has taken effect, the fourth common beam is the currently used common beam or the common beam that most recently takes effect or is most recently indicated;
if the common beam indicated by the network device to the terminal device for the first time after the terminal device performs initial access does not take effect, the fourth common beam is the SSB beam used by the terminal device during the initial access; and
if the common beam indicated by the network device to the terminal device for the first time after the terminal device completes beam failure recovery does not take effect, the fourth common beam is the beam reported by the terminal device to the network device during the beam failure recovery.

52. A terminal device, wherein the terminal device comprises:
a receiving unit, configured to: receive beam configuration information from a network device, wherein the beam configuration information comprises configuration information of one or more common beams, and the one or more common beams comprise any one of the following: a separate common beam used for uplink transmission or downlink transmission and a joint common beam used for uplink transmission and downlink transmission; receive beam activation information from the network device, wherein the beam activation information is used to activate some of the one or more common beams; and receive beam indication information from the network device, wherein the beam indication information indicates one or more of the some common beams.

53. The terminal device according to claim 52, wherein the beam configuration information comprises a configuration parameter of a first common beam; and
if the configuration parameter of the first common beam comprises a first parameter and does not comprise a second parameter, the first common beam is an uplink common beam; or
if the configuration parameter of the first common beam comprises the second parameter and does not comprise the first parameter, the first common beam is a downlink common beam; or
if the configuration parameter of the first common beam comprises the first parameter and the second parameter, the first common beam is a joint common beam, wherein
the first parameter comprises at least one of the following: a reference signal resource used to determine an uplink transmission beam, spatial relation information, an uplink power control parameter, and a sounding reference signal SRS resource; and
the second parameter comprises at least one of the following: quasi co-location QCL information and a bandwidth part BWP parameter.

54. The terminal device according to claim 52 or 53, wherein the beam indication information is carried in first downlink control information DCI, and when a first condition is met, and a hybrid automatic repeat request HARQ feedback result corresponding to the first DCI is an acknowledgement ACK, it indicates that the one or more common beams indicated by the beam indication information are successfully indicated; and
the first condition comprises one or a combination of the following:
the terminal device reports that a common beam function is supported;
the network device configures the common beam function of the terminal device to an enabled state;
the first DCI schedules no physical downlink shared channel PDSCH;
the first DCI schedules a PDSCH, and the terminal device performs HARQ feedback by using a dynamic hybrid automatic repeat request-acknowledgement HARQ-ACK codebook; and
one or more common beams indicated by the first DCI are different from a common beam currently used by the terminal device.

55. The terminal device according to claim 54, wherein after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the first DCI or a HARQ feedback result fed back for the PDSCH scheduled by the first DCI.

56. The terminal device according to claim 52 or 53, wherein the beam indication information is carried in first DCI, and when a second condition is met, and a HARQ feedback result corresponding to the first DCI is an ACK or a negative acknowledgement NACK, it indicates that the one or more common beams indicated by the beam indication information are successfully indicated; and
the second condition comprises one or a combination of the following:
the terminal device reports that a common beam function is supported;
the network device configures the common beam function of the terminal device to an enabled state;
the first DCI schedules a physical downlink shared channel PDSCH;
the terminal device performs HARQ feedback by using a semi-static HARQ-ACK codebook; and
one or more common beams indicated by the first DCI are different from a common beam currently used by the terminal device.

57. The terminal device according to claim 56, wherein after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the PDSCH scheduled by the first DCI.

58. The terminal device according to any one of claims 52 to 57, wherein the beam indication information is carried in the first DCI, the first DCI comprises a common beam indication field, the common beam indication field indicates a common beam of one beam type, the terminal device further comprises a processing unit, and the processing unit is configured to:
determine, based on the beam configuration information, the beam type of the common beam indicated by the common beam indication field;
determine, based on the beam activation information, the beam type of the common beam indicated by the common beam indication field; or
determine, based on the first DCI, the beam type of the common beam indicated by the common beam indication field.

59. The terminal device according to claim 58, wherein the processing unit is specifically configured to:
if the network device configures a common beam mode of the terminal device to a joint common beam mode by using the beam configuration information, or the beam configuration information comprises configuration information of the joint common beam, determine that the beam type indicated by the common beam indication field is the joint common beam; or
if the network device configures a common beam mode of the terminal device to a separate common beam mode by using the beam configuration information, or the beam configuration information comprises configuration information of the separate common beam, determine that the beam type of the common beam indicated by the common beam indication field is the uplink common beam or the downlink common beam.

60. The terminal device according to claim 58, wherein the processing unit is specifically configured to:
if the beam activation information is used to activate the joint common beam, determine that the beam type of the common beam indicated by the common beam indication field is the joint common beam; or
if the beam activation information is used to activate the separate common beam, determine that the beam type of the common beam indicated by the common beam indication field is the uplink common beam or the downlink common beam.

61. The terminal device according to claim 58, wherein first x bits or last x bits in the common beam indication field or a first indication field comprised in the first DCI indicates the beam type of the common beam indicated by the common beam indication field, wherein x is an integer greater than or equal to 1; and
the beam type comprises any one of the following: the joint common beam, the uplink common beam, and the downlink common beam; or
the beam type comprises any one of the following: the uplink common beam and the downlink common beam.

62. The terminal device according to any one of claims 52 to 61, wherein the beam indication information is carried in the first DCI, the first DCI comprises a common beam indication field, the common beam indication field comprises one or two subfields, the terminal device further comprises a processing unit, and the processing unit is further configured to:
determine, based on a beam type of the common beam configured by using the beam configuration information, a quantity of subfields comprised in the common beam indication field and/or a beam type indicated by the subfield.

63. The terminal device according to claim 62, wherein if the beam type configured by using the beam configuration information is the joint common beam, the common beam indication field comprises one subfield, and the subfield indicates the joint common beam; or
if the beam type configured by using the beam configuration information is the separate common beam, the common beam indication field comprises two subfields, and the two subfields indicate the uplink common beam and the downlink common beam.

64. The terminal device according to claim 62 or 63, wherein if the common beam indication field comprises two subfields, a first subfield in the two subfields indicates the uplink common beam, and a second subfield in the two subfields indicates the downlink common beam, or a first subfield in the two subfields indicates the downlink common beam, and a second subfield in the two subfields indicates the uplink common beam.

65. The terminal device according to claim 62 or 63, wherein if the common beam indication field comprises two subfields, the processing unit is further configured to:
determine, based on the beam configuration information, beam types respectively indicated by the two subfields;
determine, based on the beam activation information, beam types respectively indicated by the two subfields; or
determine, based on the first DCI, beam types respectively indicated by the two subfields.

66. The terminal device according to claim 65, wherein the beam configuration information comprises an uplink common beam set and a downlink common beam set, and the processing unit is specifically configured to:
determine, based on configuration rankings of the uplink common beam set and the downlink common beam set, the beam types respectively indicated by the two subfields; or
determine, based on set index rankings respectively corresponding to the uplink common beam set and the downlink common beam set, the beam types respectively indicated by the two subfields.

67. The terminal device according to claim 65, wherein the processing unit is specifically configured to:
determine, based on arrangement rankings of an uplink common beam and a downlink common beam activated by using the beam activation information, the beam types respectively indicated by the two subfields.

68. The terminal device according to claim 65, wherein the processing unit is specifically configured to:
determine, based on first x bits or last x bits in the common beam indication field or a second indication field comprised in the first DCI, a beam type indicated by a first subfield in the two subfields and a beam type indicated by a second subfield in the two subfields.

69. The terminal device according to any one of claims 52 to 68, wherein the terminal device further comprises the processing unit, and the processing unit is further configured to:
if the beam activation information is used to activate one common beam, perform transmission through the common beam activated by using the beam activation information; or
if the beam activation information is used to activate a plurality of common beams, perform transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

70. The terminal device according to any one of claims 52 to 69, wherein the terminal device further comprises the processing unit, and the processing unit is further configured to:
if the common beam indicated by the common beam indication information is the same as a second common beam, ignore the beam indication information, wherein
the second common beam comprises any one of the following: the common beam currently used by the terminal device and a common beam that is most recently indicated to the terminal device or most recently takes effect.

71. The terminal device according to any one of claims 52 to 70, wherein the terminal device further comprises the processing unit, and the processing unit is further configured to:
use K common beams as beams corresponding to K first resources or K first resource sets, wherein K is an integer greater than 1, wherein
the K common beams are in a one-to-one correspondence with the K first resources or the K first resource sets, each of the K first resource sets comprises the first resource, and the K common beams are respectively used to transmit the corresponding first resources;
the K common beams are ranked based on indication rankings in the beam indication information or beam index rankings of the K common beams;
the K first resources or the K first resource sets are ranked based on resource configuration rankings or resource index rankings; and
the first resource comprises any one of the following: a channel state information-reference signal CSI-RS for which neither a repetition repetition parameter nor a transmitting information trs-Info parameter is configured, a sounding reference signal SRS of a codebook codebook type, an SRS of a non-codebook non-codebook type, and a CSI-RS associated with the SRS of the non-codebook type.

72. The terminal device according to any one of claims 52 to 71, wherein the beam indication information is used by the network device to indicate a common beam to the terminal device for a first time after the terminal device performs initial access, and the terminal device further comprises the processing unit; and
before the common beam indicated by the beam indication information takes effect, the processing unit is configured to:
perform transmission by using a synchronization signal and PBCH block SSB beam used during the initial access.

73. The terminal device according to any one of claims 52 to 71, wherein the beam indication information is used by the network device to indicate a common beam to the terminal device for a first time after beam failure occurs on the terminal device, and the terminal device further comprises the processing unit; and
after the terminal device completes beam failure recovery, and before the common beam indicated by the beam indication information takes effect, the processing unit is configured to:
perform transmission through a beam reported by the terminal device to the network device in a beam failure recovery process.

74. The terminal device according to any one of claims 52 to 71, wherein the beam indication information is used by the network device to indicate a common beam to the terminal device for a first time after the terminal device performs initial access, and the terminal device further comprises the processing unit;
after the terminal device performs initial access, and before the terminal device receives the beam activation information, the processing unit is further configured to:
perform transmission through an SSB beam used during the initial access; and
after the terminal device receives the beam activation information, and before the common beam indicated by the beam indication information takes effect, the processing unit is further configured to:
perform transmission through a first common beam or a last common beam activated by using the beam activation information; or
perform transmission through a common beam with a largest or smallest common beam indication field value in a common beam activated by using the beam activation information.

75. The terminal device according to any one of claims 52 to 74, wherein the beam indication information is carried in the first DCI, the first DCI further schedules first PDSCH data, the terminal device further comprises the processing unit, and the processing unit is configured to:
if a moment at which the network device sends the first PDSCH data is earlier than a moment at which the common beam indicated by the first DCI takes effect, receive the first PDSCH data from the network device through a third common beam, wherein
the third common beam comprises any one of the following:
if the common beam indicated by the network device to the terminal device for the first time after the terminal device performs initial access or completes beam failure recovery has taken effect, the third common beam is the currently used common beam or the common beam that most recently takes effect or is most recently indicated;
if the common beam indicated by the network device to the terminal device for the first time after the terminal device performs initial access does not take effect, the third common beam is the SSB beam used by the terminal device during the initial access; and
if the common beam indicated by the network device to the terminal device for the first time after the terminal device completes beam failure recovery does not take effect, the third common beam is the beam reported by the terminal device to the network device during the beam failure recovery.

76. The terminal device according to claim 75, wherein if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further comprises the common beam indicated by the first DCI.

77. The terminal device according to any one of claims 52 to 76, wherein the receiving unit is further configured to:
receive second DCI from the network device; and
the terminal device further comprises the processing unit, and the processing unit is configured to:
if a time interval between a moment at which the network device sends second PDSCH data scheduled by the second DCI and a moment at which the network device sends the second DCI is less than the preset threshold, receive the second PDSCH data from the network device through a fourth common beam, wherein
the fourth common beam comprises any one of the following:
if the common beam indicated by the network device to the terminal device for the first time after the terminal device performs initial access or completes beam failure recovery has taken effect, the fourth common beam is the currently used common beam or the common beam that most recently takes effect or is most recently indicated;
if the common beam indicated by the network device to the terminal device for the first time after the terminal device performs initial access does not take effect, the fourth common beam is the SSB beam used by the terminal device during the initial access; and
if the common beam indicated by the network device to the terminal device for the first time after the terminal device completes beam failure recovery does not take effect, the fourth common beam is the beam reported by the terminal device to the network device during the beam failure recovery.

78. A network device, wherein the network device comprises:
a sending unit, configured to: send beam configuration information to a terminal device, wherein the beam configuration information comprises configuration information of one or more common beams, and the one or more common beams comprise any one of the following: a separate common beam used for uplink transmission or downlink transmission and a joint common beam used for uplink transmission and downlink transmission; send beam activation information to the terminal device, wherein the beam activation information is used to activate some of the one or more common beams; and send beam indication information to the terminal device, wherein the beam indication information indicates one or more of the some common beams.

79. The network device according to claim 78, wherein the beam configuration information comprises a configuration parameter of a first common beam; and
if the configuration parameter of the first common beam comprises a first parameter and does not comprise a second parameter, the first common beam is an uplink common beam; or
if the configuration parameter of the first common beam comprises the second parameter and does not comprise the first parameter, the first common beam is a downlink common beam; or
if the configuration parameter of the first common beam comprises the first parameter and the second parameter, the first common beam is a joint common beam, wherein
the first parameter comprises at least one of the following: a reference signal resource used to determine an uplink transmission beam, spatial relation information, an uplink power control parameter, and a sounding reference signal SRS resource; and
the second parameter comprises at least one of the following: quasi co-location QCL information and a bandwidth part BWP parameter.

80. The network device according to claim 78 or 79, wherein the beam indication information is carried in first downlink control information DCI, and when a first condition is met, and a hybrid automatic repeat request HARQ feedback result corresponding to the first DCI is an acknowledgement ACK, it indicates that the one or more common beams indicated by the beam indication information are successfully indicated; and
the first condition comprises one or a combination of the following:
the terminal device reports that a common beam function is supported;
the network device configures the common beam function of the terminal device to an enabled state;
the first DCI schedules no physical downlink shared channel PDSCH;
the first DCI schedules a PDSCH, and the terminal device performs HARQ feedback by using a dynamic hybrid automatic repeat request-acknowledgement HARQ-ACK codebook; and
one or more common beams indicated by the first DCI are different from a common beam currently used by the terminal device.

81. The network device according to claim 80, wherein after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the first DCI or a HARQ feedback result fed back for the PDSCH scheduled by the first DCI.

82. The network device according to claim 78 or 79, wherein the beam indication information is carried in first DCI, and when a second condition is met, and a HARQ feedback result corresponding to the first DCI is an ACK or a negative acknowledgement NACK, it indicates that the one or more common beams indicated by the beam indication information are successfully indicated; and
the second condition comprises one or a combination of the following:
the terminal device reports that a common beam function is supported;
the network device configures the common beam function of the terminal device to an enabled state;
the first DCI schedules a physical downlink shared channel PDSCH;
the terminal device performs HARQ feedback by using a semi-static HARQ-ACK codebook; and
one or more common beams indicated by the first DCI are different from a common beam currently used by the terminal device.

83. The network device according to claim 82, wherein after the one or more common beams indicated by the beam indication information are successfully indicated, the common beam indicated by the first DCI takes effect in a first slot obtained by adding a first moment and a first time offset;
the first moment is a moment at which the first DCI is received or a moment at which the terminal device sends the HARQ feedback result corresponding to the first DCI; and
the HARQ feedback result corresponding to the first DCI is a HARQ feedback result fed back for the PDSCH scheduled by the first DCI.

84. The network device according to any one of claims 78 to 83, wherein the beam indication information is carried in the first DCI, the first DCI comprises a common beam indication field, and the common beam indication field indicates a common beam of one beam type; and
the beam type of the common beam indicated by the common beam indication field is determined by using the beam configuration information;
the beam type of the common beam indicated by the common beam indication field is determined by using the beam activation information; or
the beam type of the common beam indicated by the common beam indication field is determined by using the first DCI.

85. The network device according to claim 84, wherein if the network device configures a common beam mode of the terminal device to a joint common beam mode by using the beam configuration information, or the beam configuration information comprises configuration information of the joint common beam, the beam type indicated by the common beam indication field is the joint common beam; or
if the network device configures a common beam mode of the terminal device to a separate common beam mode by using the beam configuration information, or the beam configuration information comprises configuration information of the separate common beam, the beam type of the common beam indicated by the common beam indication field is the uplink common beam or the downlink common beam.

86. The network device according to claim 84, wherein if the beam activation information is used to activate the joint common beam, the beam type of the common beam indicated by the common beam indication field is the joint common beam; or
if the beam activation information is used to activate the separate common beam, the beam type of the common beam indicated by the common beam indication field is the uplink common beam or the downlink common beam.

87. The network device according to claim 84, wherein first x bits or last x bits in the common beam indication field or a first indication field comprised in the first DCI indicates the beam type of the common beam indicated by the common beam indication field, wherein x is an integer greater than or equal to 1; and
the beam type comprises any one of the following: the joint common beam, the uplink common beam, and the downlink common beam; or
the beam type comprises any one of the following: the uplink common beam and the downlink common beam.

88. The network device according to any one of claims 78 to 87, wherein the beam indication information is carried in the first DCI, the first DCI comprises a common beam indication field, and the common beam indication field comprises one or two subfields; and
a quantity of subfields comprised in the common beam indication field and/or a beam type indicated by the subfield are/is determined by using a beam type configured by using the beam configuration information.

89. The network device according to claim 88, wherein if the beam type configured by using the beam configuration information is the joint common beam, the common beam indication field comprises one subfield, and the subfield indicates the joint common beam; or
if the beam type configured by using the beam configuration information is the separate common beam, the common beam indication field comprises two subfields, and the two subfields indicate the uplink common beam and the downlink common beam.

90. The network device according to claim 88 or 89, wherein if the common beam indication field comprises two subfields, a first subfield in the two subfields indicates the uplink common beam, and a second subfield in the two subfields indicates the downlink common beam, or a first subfield in the two subfields indicates the downlink common beam, and a second subfield in the two subfields indicates the uplink common beam.

91. The network device according to claim 88 or 89, wherein if the common beam indication field comprises two subfields, beam types respectively indicated by the two subfields are determined by using the beam configuration information, the beam activation information, or the first DCI.

92. The network device according to claim 91, wherein the beam configuration information comprises an uplink common beam set and a downlink common beam set; and
the beam types respectively indicated by the two subfields are determined based on configuration rankings of the uplink common beam set and the downlink common beam set; or
the beam types respectively indicated by the two subfields are determined based on set index rankings respectively corresponding to the uplink common beam set and the downlink common beam set.

93. The network device according to claim 91, wherein the beam types respectively indicated by the two subfields are determined based on arrangement rankings of an uplink common beam and a downlink common beam activated by using the beam activation information.

94. The network device according to claim 91, wherein the beam types respectively indicated by the two subfields are determined by using first x bits or last x bits in the common beam indication field or a second indication field comprised in the first DCI.

95. The network device according to any one of claims 78 to 94, wherein the beam indication information is carried in the first DCI, and if the first DCI does not comprise the common beam indication field, the network device further comprises a processing unit, and the processing unit is configured to:
if the beam activation information is used to activate one common beam, perform transmission through the common beam activated by using the beam activation information; or
if the beam activation information is used to activate a plurality of common beams, perform transmission through a common beam with a largest beam index, a common beam with a smallest beam index, a common beam with a highest ranking, a common beam with a lowest ranking, a common beam that corresponds to a smallest common beam indication field value, or a common beam that corresponds to a largest common beam indication field value in the plurality of common beams.

96. The network device according to any one of claims 78 to 95, wherein if the beam indication information indicates K common beams of a same beam type, and the network device configures K first resources or K first resource sets for the terminal device, the K common beams are beams corresponding to the K first resources or the K first resource sets, wherein K is an integer greater than 1;
the K common beams are in a one-to-one correspondence with the K first resources or the K first resource sets, each of the K first resource sets comprises the first resource, and the K common beams are respectively used to transmit the corresponding first resources;
the K common beams are ranked based on indication rankings in the beam indication information or beam index rankings of the K common beams;
the K first resources or the K first resource sets are ranked based on resource configuration rankings or resource index rankings; and
the first resource comprises any one of the following: a channel state information-reference signal CSI-RS for which neither a repetition repetition parameter nor a transmitting information trs-Info parameter is configured, a sounding reference signal SRS of a codebook codebook type, an SRS of a non-codebook non-codebook type, and a CSI-RS associated with the SRS of the non-codebook type.

97. The network device according to any one of claims 78 to 96, wherein the beam indication information is used by the network device to indicate a common beam to the terminal device for a first time after the terminal device performs initial access, the network device further comprises the processing unit, and before the common beam indicated by the beam indication information takes effect, the processing unit is configured to:
perform transmission with the terminal device by using a synchronization signal and PBCH block SSB beam used by the terminal device during the initial access.

98. The network device according to any one of claims 78 to 96, wherein the beam indication information is used by the network device to indicate a common beam to the terminal device for a first time after beam failure occurs on the terminal device, and the network device further comprises the processing unit; and
after the terminal device completes beam failure recovery, and before the common beam indicated by the beam indication information takes effect, the processing unit is configured to:
perform transmission through a beam reported by the terminal device to the network device in a beam failure recovery process.

99. The network device according to any one of claims 78 to 96, wherein the beam indication information is used by the network device to indicate a common beam to the terminal device for a first time after the terminal device performs initial access, and the network device further comprises the processing unit;
after the terminal device performs initial access, and before the network device sends the beam activation information, the processing unit is configured to:
perform transmission through an SSB beam used during the initial access; and
after the network device sends the beam activation information, and before the common beam indicated by the beam indication information takes effect, the processing unit is further configured to:
perform transmission through a first common beam or a last common beam activated by using the beam activation information; or
perform transmission through a common beam with a largest or smallest common beam indication field value in a common beam activated by using the beam activation information.

100. The network device according to any one of claims 78 to 99, wherein the beam indication information is carried in the first DCI, the first DCI further schedules first PDSCH data, the network device further comprises the processing unit, and the processing unit is further configured to:
if a moment at which the network device sends the first PDSCH data is earlier than a moment at which the common beam indicated by the first DCI takes effect, send the first PDSCH data to the network device through a third common beam, wherein
the third common beam comprises any one of the following:
if the common beam indicated by the network device to the terminal device for the first time after the terminal device performs initial access or completes beam failure recovery has taken effect, the third common beam is the currently used common beam or a common beam that most recently takes effect or is most recently indicated;
if the common beam indicated by the network device to the terminal device for the first time after the terminal device performs initial access does not take effect, the third common beam is the SSB beam used by the terminal device during the initial access; and
if the common beam indicated by the network device to the terminal device for the first time after the terminal device completes beam failure recovery does not take effect, the third common beam is the beam reported by the terminal device to the network device during the beam failure recovery.

101. The network device according to claim 100, wherein if a time interval between the moment at which the network device sends the first PDSCH data scheduled by the first DCI and a moment at which the network device sends the first DCI is greater than or equal to a preset threshold, and the moment at which the network device sends the first PDSCH data is earlier than the moment at which the common beam indicated by the first DCI takes effect, the third common beam further comprises the common beam indicated by the first DCI.

102. The network device according to any one of claims 78 to 101, wherein the sending unit is further configured to:
send second DCI to the terminal device; and
the network device further comprises the processing unit, and the processing unit is configured to:
if a time interval between a moment at which the network device sends second PDSCH data scheduled by the second DCI and a moment at which the network device sends the second DCI is less than the preset threshold, send the second PDSCH data to the terminal device through a fourth common beam, wherein
the fourth common beam comprises any one of the following:
if the common beam indicated by the network device to the terminal device for the first time after the terminal device performs initial access or completes beam failure recovery has taken effect, the fourth common beam is the currently used common beam or the common beam that most recently takes effect or is most recently indicated;
if the common beam indicated by the network device to the terminal device for the first time after the terminal device performs initial access does not take effect, the fourth common beam is the SSB beam used by the terminal device during the initial access; and
if the common beam indicated by the network device to the terminal device for the first time after the terminal device completes beam failure recovery does not take effect, the fourth common beam is the beam reported by the terminal device to the network device during the beam failure recovery.

103. A communication apparatus, comprising:
a memory, configured to store computer instructions; and
a processor, configured to execute a computer program or the computer instructions stored in the memory, to enable the communication apparatus to perform the method according to any one of claims 1 to 26 or the method according to any one of claims 1 to 26, or enable the communication apparatus to perform the method according to any one of claims 27 to 51.

104. A communication apparatus, wherein the communication apparatus comprises a processor, and the processor is configured to invoke a computer program or computer instructions in a memory, to perform the method according to any one of claims 1 to 26 or the method according to any one of claims 27 to 51.

105. A computer-readable storage medium, wherein the computer-readable storage medium stores a computer program, and when the computer program is executed by a communication apparatus, the communication apparatus is enabled to perform the method according to any one of claims 1 to 26 or the method according to any one of claims 27 to 51.
